# EUROPÄISCHE PATENTANMELDUNG

(11) **EP 4 814 034 A1**
(43) Veröffentlichungstag der Anmeldung: **30.09.2026**
(21) Anmeldenummer: 25166344.9
(22) Anmeldetag: 26.03.2025
(51) Int. Cl.: C08G 63/199, C08G 63/48, C08G 63/553, C08G 63/64, C08G 63/672, C08G 64/02, C08L 69/00

(54) **THERMOPLASTISCHE ZUSAMMENSETZUNG ENTHALTEND EIN COPOLY(ESTER)CARBONAT UND MINDESTENS EIN SPEZIELLES ADDITIV**

(71) Anmelder: Covestro Deutschland AG, 51373 Leverkusen (DE)
(72) Erfinder: MEYER, Alexander, 40489 Düsseldorf (DE); LIESENFELDER, Ulrich, 51469 Bergisch Gladbach (DE); KONNERTH, Christian, 40764 Langenfeld (DE)
(74) Vertreter: Levpat

(57) **Zusammenfassung**

Die vorliegende Erfindung betrifft eine thermoplastische Zusammensetzung, umfassend ein Copoly(ester)carbonat einer speziellen Formel sowie mindestens ein spezielles Additiv. Ebenso betrifft die vorliegende Anmeldung eine thermoplastische Formmasse, sowie einen Formkörper.

## Beschreibung

Die vorliegende Erfindung betrifft eine thermoplastische Zusammensetzung, umfassend ein Copoly(ester)carbonat einer speziellen Formel sowie mindestens ein spezielles Additiv. Ebenso betrifft die vorliegende Anmeldung eine thermoplastische Formmasse, sowie einen Formkörper.

Es ist bekannt, dass Polyester, Polycarbonate sowie Polyestercarbonate gute Eigenschaften bezüglich Mechanik, Wärmeformbeständigkeit und Bewitterungsbeständigkeit aufweisen. Jede Polymergruppe weist in Abhängigkeit der verwendeten Monomere bestimmte Schlüsselmerkmale auf, durch die sich derartige Materialien auszeichnen. So weisen Polycarbonate insbesondere gute mechanische Eigenschaften auf, wohingegen Polyester häufig eine bessere Chemikalienbeständigkeit zeigen. Polyestercarbonate zeigen in Abhängigkeit der gewählten Monomere Eigenschaftsprofile aus beiden genannten Gruppen. Je nach Wahl der Reaktanden können (Co)Polycarbonate, (Co)Polyester oder Copoly(ester)carbonate entstehen.

Aromatische Polycarbonate oder Polyester weisen zwar häufig ein gutes Eigenschaftsprofil auf, zeigen jedoch bzgl. der Alterungs- und Bewitterungsbeständigkeit Schwächen. So kommt es beispielsweise durch Absorption von UV-Licht zur Vergilbung und ggf. Versprödung dieser thermoplastischen Materialien. Aliphatische Polycarbonate und Polyestercarbonate weisen diesbezüglich bessere Eigenschaften, insbesondere bessere Alterungs- und/oder Bewitterungsbeständigkeiten sowie besser optische Eigenschaften (beispielsweise Transmission) auf. Der Nachteil aliphatischer Polycarbonate oder Polyestercarbonate ist häufig deren geringe Glasübergangstemperatur. Deshalb ist es von Vorteil cycloaliphatische Alkohole als (Co)Monomere einzusetzen, da diese die Glastemperaturen in der Regel etwas erhöhen können.

Copolycarbonate und Copolyestercarbonate aus Isosorbid und langkettigen aliphatischen Diolen oder Säuren sind bekannt. Diese sind z.B. von Kamps et al in Macromolecules, 2019, 52, 3187 sowie in US8273849 und EP2203501 beschrieben. Diese weisen jedoch häufig den Nachteil auf, nur noch eingeschränkt transparent zu sein. Sie sind meist getrübt bzw. opak. Nicht transparente oder stark getrübte Materialien können für optische Anwendungen wie Beleuchtungsanwendungen oder für Anwendungen im Pharmabereich, wie z.B. in Luer, Absperrhähnen und anderen IV-Verbindern nur begrenzt oder gar nicht eingesetzt werden. Damit ist es nicht möglich, klassische Anwendungsgebiete von aromatischen Polycarbonaten einfach durch solche aliphatischen Polymere zu bedienen. Ferner weisen derartige Polymere eine geringere Oberflächenhärte auf. Damit neigen sie zum Verkratzen und können nicht in unlackierten Außenanwendungen eingesetzt werden.

In EP2840102 werden Polymere mit niedriger Wasseraufnahme, guter Wärmeformbeständigkeit und Tieftemperaturzähigkeit beschrieben. Diese Polycarbonate oder Copoly(ester)carbonate enthalten Blöcke von bestimmten Oligocarbonaten aus Diolen oder bestimmten Blöcken aus Oligoestern. Polyestercarbonate mit langkettigen Diolen oder Disäuren mit mehr als 12 Kohlenstoffatomen sind nicht konkret beschrieben. Auf Eigenschaften wie das Verhalten bei Heißwasserlagerung wird nicht eingegangen. Beispiel 19 der EP2840102 beschreibt ein Isosorbid-haltiges Copoly(ester)carbonat, enthaltend einen Esterblock aus Terephthalsäure und Cyclohexandimethanol. Das Polymer weist allerdings nur einen geringen Anteil (<50 mol-%) an biobasierten Monomeren (Isosorbid) sowie eine niedrige Glastemperatur (ca. 100 °C) auf.

In der noch nicht veröffentlichten PCT/EP2024/076755 wird ein Copoly(ester)carbonat beschrieben, welches eine hohe Stabilität gegen Wasser, insbesondere heißes Wasser, aufweist. Gleichzeitig ist die Polymerstruktur intrinsisch witterungsstabil, insbesondere intrinsisch UV-beständig, und damit für Außenanwendungen geeignet. Ebenso weist das dort beschriebene Copoly(ester)carbonat eine hohe Kratzfestigkeit, hohe Beständigkeit gegenüber Chemikalien wie z.B. Lösungsmitteln und/oder Lipidlösungen sowie eine hohe Fettbeständigkeit, insbesondere Rapsölbeständigkeit, auf. Dabei weist das beschrieben Copoly(ester)carbonat eine gute Thermostabilität auf, welche mit klassischen aromatischen Polycarbonaten vergleichbar ist. Damit könnte das Copoly(ester)carbonate ein vergleichbares Anwendungsspektrum wie klassische Polycarbonate bedienen.

In der Anwendung von klassischen Polycarbonaten werden diesen in der Regel durch den gezielten Zusatz von Additiven auf den Anwendungsbereich maßgeschneiderte Eigenschaften verliehen.

Ausgehend von diesem Stand der Technik lag der vorliegenden Erfindung daher die Aufgabe zu Grunde, mindestens eines, bevorzugt mehrere der oben beschriebenen Nachteile zu beheben. Dabei lag der vorliegenden Erfindung insbesondere die Aufgabe zu Grunde, das in der noch nicht veröffentlichten PCT/EP2024/076755 beschriebene Copoly(ester)carbonat in für Anwendungen geeignete Zusammensetzungen zu überführen. Dabei sollten diese Zusammensetzungen für den jeweiligen Anwendungsbereich maßgeschneiderte Eigenschaften aufweisen. Insbesondere sollten die Zusammensetzungen für ähnliche Anwendungsbereiche wie klassische aromatische Polycarbonate, insbesondere auf Bisphenol A basierte Polycarbonate, einsetzbar sein.

Mindestens eine, bevorzugt alle der oben genannten Aufgaben wurden durch die vorliegende Erfindung gelöst. Überraschend wurde gefunden, dass das spezielle Copoly(ester)carbonat durch den geeigneten Zusatz von Additiven in thermoplastische Zusammensetzungen überführt werden kann, welche ein breites Anwendungsspektrum bieten. Insbesondere kann durch den gezielten Einsatz spezieller Additive oder Additivkombinationen eine thermoplastische Zusammensetzung bereitgestellt werden, welche für spezielle Anwendungen ein maßgeschneidertes Anwendungsspektrum bietet. Dabei weisen die erfindungsgemäßen thermoplastischen Zusammensetzungen insbesondere ein hervorragendes Eigenschaftsprofil auf. Insbesondere werden überraschenderweise thermoplastische Zusammensetzungen bereitgestellt, welche sowohl eine gute Stabilität gegen Wasser, bevorzugt Heißwasserstabilität, als auch eine gute Fettbeständigkeit, als auch eine gute Beständigkeit gegenüber Lipidlösungen und organischen Lösungsmitteln bei guter Verarbeitbarkeit und guter UV- bzw. Witterungsstabilität aufweisen. Ebenso weisen die erfindungsgemäßen thermoplastischen Zusammensetzungen eine gegenüber Polycarbonaten auf Basis von Bisphenol A und auch gegenüber Strukturen aus dem Stand der Technik verbesserte Oberflächenhärte auf. Dies bietet insbesondere den Vorteil, dass die erfindungsgemäßen thermoplastischen Zusammensetzungen für Außenanwendungen geeignet sind. Dies insbesondere, ohne zusätzlich lackiert werden zu müssen, da die Kratzbeständigkeit hoch ist. Gleichzeitig weisen die erfindungsgemäßen thermoplastischen Zusammensetzungen eine gute Verarbeitbarkeit auf. Sie haben eine solche Schmelzeviskosität, dass sie sich ohne Zersetzung (auf Grund der guten Thermostabilität des Copoly(ester)carbonats in Kombination mit z. B. mindestens einem Antioxidationsmittel) gut z.B. im Spritzguss verarbeiten lassen. Damit sind sie nahezu verarbeitbar wie klassische aromatische Polycarbonatzusammensetzungen und damit können wenigstens auch die klassischen Anwendungsgebiete von klassischen aromatischen Polycarbonatzusammensetzungen bedient werden. Ebenso gleichzeitig können die erfindungsgemäßen thermoplastischen Zusammensetzungen einen hohen Anteil an biobasierten Monomeren aufweisen, da zumindest die Einheiten (A) und (C) des Copoly(ester)carbonats aus biobasierten Monomeren erhalten werden können.

Erfindungsgemäß wird daher eine thermoplastische Zusammensetzung bereitgestellt, umfassend
(I) ein Copoly(ester)carbonat, enthaltend die Einheiten (A), (B), (C), optional (D) und gegebenenfalls von (A), (B), (C) und (D) verschiedene Einheiten, mit 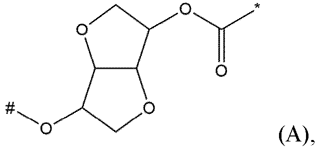 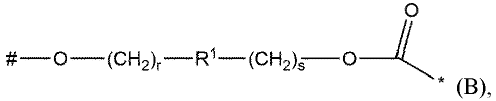 wobei jedes r und jedes s unabhängig voneinander für eine Zahl zwischen 0 und 4 steht, und jedes R¹ unabhängig voneinander für eine Struktur der Formeln (R1A), (R1B), (R1C) oder (R1D) steht 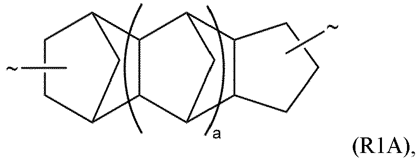 wobei a 0 oder 1 ist, 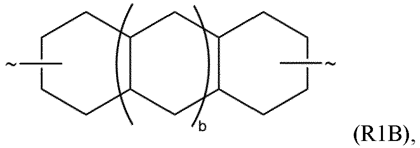 wobei b 0 oder 1 ist, 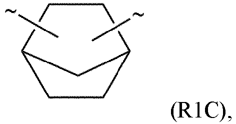 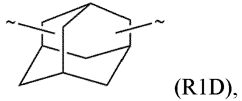 wobei die mit "~" gekennzeichneten Positionen in den Formeln (R1A) bis (R1D) die Positionen sind, an denen sich die in Formel (B) gezeigte (CH₂)ᵣ-Gruppe beziehungsweise (CH₂)ₛ-Gruppe befindet, und 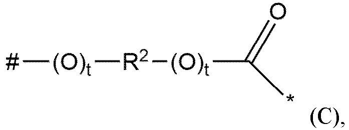 wobei beide t unabhängig von R² gleichzeitig entweder 0 oder gleichzeitig 1 sind und jedes R² unabhängig voneinander für eine aliphatische Gruppe mit 16 bis 44 Kohlenstoffatomen steht, welche gegebenenfalls ein oder mehrere Doppelbindungen enthält, 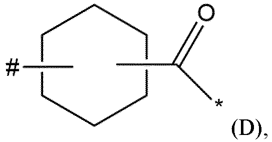 wobei zumindest teilweise direkte Verknüpfungen zwischen den Einheiten (A), (B), (C), optional (D) und gegebenenfalls von (A), (B), (C) und (D) verschiedene Einheiten vorliegen, wobei, wenn eine direkte Verknüpfung von mindestens zwei der Einheiten ausgewählt aus der Gruppe bestehend aus (A), (B), (C) und gegebenenfalls (D) vorliegt, die mit "*" gekennzeichnete Position der Einheiten (A), (B), (C), (D) dann mit den mit "#" gekennzeichneten Position dieser Einheiten verknüpft ist, mit der Ausnahme, dass,
   wenn t in Formel (C) 0 ist, keine direkte Verknüpfung zweier Einheiten (C) miteinander vorliegt,
   wenn t in Formel (C) 0 ist, keine direkte Verknüpfung der Einheit (C) mit der Einheit (D) vorliegt und
   keine direkte Verknüpfung zweier Einheiten (D) miteinander vorliegt,
   wobei das Copoly(ester)carbonat 4 bis 25 mol-% der Einheit (B), 2 bis 14 mol-% der Einheit (C), 0 bis 5 mol-% der Einheit (D) und mindestens 55 mol-% der Einheit (A) enthält, wobei die mol-%-Angaben sich auf die Gesamtstoffmenge der Einheiten (A), (B), (C), gegebenfalls (D) und gegebenenfalls von (A), (B), (C) und (D) verschiedenen Einheiten beziehen
      und
(II) mindestens ein Additiv, welches ausgewählt ist aus der Gruppe bestehend aus
   (IIa) einem UV-Absorber ausgewählt aus der Gruppe, bestehend aus Benzotriazol-Verbindungen, Benzophenon-Verbindungen, Triazin-Verbindungen, Benzoat-Verbindungen, Phenylsalicylat-Verbindungen, Cyanacrylat-Verbindungen, Malonsäureester-Verbindungen und Oxalanilid-Verbindungen,
   (IIb) einem sterisch gehinderten Amin-Lichtstabilisator,
   (IIc) einem Bläuungsmittel,
   (IId) einem Antioxidationsmittel,
   (IIe) einem Gleit- und Entformungsmittel ausgewählt aus der Gruppe, bestehend aus Fettsäuren mit 10 bis 30 Kohlenstoffatomen, deren Fettsäureester von ein- oder mehrwertigen Alkoholen, natürliche tierische Wachse, natürliche pflanzliche Wachse, natürliche Erdöl-basierte Wachse, Silikonöle und Organopolysiloxane,
   (IIf) einem Säure-haltigen Additiv,
   (IIg) einem OH- und Säuregruppenfänger,
   (IIh) einer alkalischen Verbindung,
   (IIi) einem Reduktionsmittel,
   (IIj) einem Antistatikum ausgewählt aus der Gruppe, bestehend aus Polyetheresteramiden, Glycerolmonostearat, Ammoniumsalze der Dodecylbenzolsulfonsäure, Phosphoniumsalze der Dodecylbenzolsulfonsäure, quarternäre Ammoniumsalze einer Perfluoralkylsulfonsäure, Maleinsäureanhydridmonoglycerid und Maleinsäureanhydrid-diglycerid,
   (IIk) einem Farbmittel ausgewählt aus der Gruppe der anorganischen Pigmente, welche Ruß, Titanoxid, Zinkweiß, Eisenoxidrot, Chromoxid, Eisenschwarz, Titangelb, Zink-Eisenbraun, Kupfer-Chromschwarz, Kupfer-Eisenschwarz und oxidbasierte Pigmente umfassen, organischen Pigmenten und organischen Farbstoffen, welche Phthalocyanin-Farbstoffe und -Pigmente; kondensierte Polycyclen wie Azo-, Thioindigo-, Perinon-, Perylen-, Chinacridon-, Dioxazin-, Isoindolinon- und Chinophthalon-Farbstoffe und -Pigmente, Anthrachinon-, Perinon-, Perylen-, Methin-, Chinolin-, Heterocyclen- und Methyl-basierte Farbstoffe und Pigmente umfassen,
   (IIl) einem anorganischen Füllstoff,
   (IIm) einem Flammschutzmittel ausgewählt aus der Gruppe, bestehend aus Phosphorverbindungs-basierten, Halogenverbindungs-basierten, Metallsulfonatbasierten und Siliciumverbindungs-basierten Flammschutzmittel,
   (IIn) einem polymeren Blendpartner ausgewählt aus der Gruppe, bestehend aus Poly(milchsäure), Poly(cyclohexandimethanol-cyclohexandicarboxylat), Poly(propylenterephthalat), Polycarbonaten, Polyamid 46, Polyamid 12, semiaromatischen Polyamiden, kautschuk-modifizierten Pfropfpolymeren, Vinyl(co)polymeren ausgewählt aus der Gruppe der (Co)Polymerisate aus
   B.1 50 bis 99 Gew.-%, bevorzugt 65 bis 85 Gew.-%, besonders bevorzugt 70 bis 80 Gew.-% bezogen auf das (Co)Polymerisat mindestens eines Monomeren ausgewählt aus der Gruppe der Vinylaromaten, kernsubstituierten Vinylaromaten und (Meth)Acrylsäure-(C1-C8)-Alkylester und
   B.2 1 bis 50 Gew.-%, bevorzugt 15 bis 35 Gew.-%, besonders bevorzugt 20 bis 30 Gew.-% bezogen auf das (Co)Polymerisat mindestens eines Monomeren ausgewählt aus der Gruppe der Vinylcyanide, (Meth) Acrylsäure-(C1-C8)-Alkylester, ungesättigte Carbonsäuren und Derivate ungesättigter Carbonsäuren, Polyolefinen ausgewählt aus der Gruppe bestehend aus Polyethylen, Ethylen-Copolymeren, Polypropylen und 4-Methylpenten-1-Harzen, Polyacetalen, Poly(amid-imiden), Poly(ethersulfonen), Polyimiden, Poly(phenylenoxid), Poly(phenylensulfid), Poly(phenylsulfon), Polyetheretherketon, flüssigkristallinen Polyestern, Poly(vinylchlorid) und Fluorharzen.

Überraschenderweise wurde gefunden, dass mit der erfindungsgemäßen thermoplastischen Zusammensetzung selbst bei überwiegend aliphatischen Bausteinen in der Polymerstruktur gute Eigenschaftsprofile erzielt werden können. Mit den erfindungsgemäßen thermoplastischen Zusammensetzungen wurden überraschenderweise Zusammensetzungen bereitgestellt, welche sowohl eine gute Stabilität gegen Wasser, bevorzugt Heißwasserstabilität, als auch eine gute Fettbeständigkeit, als auch eine gute Beständigkeit gegenüber Lipidlösungen und organischen Lösungsmitteln bei guter Verarbeitbarkeit und guter UV- bzw. Witterungsstabilität aufweisen. Ebenso weisen die erfindungsgemäßen Zusammensetzungen eine gegenüber Zusammensetzung auf Basis von Polycarbonaten umfassend Bisphenol A und auch gegenüber Zusammensetzung auf Basis von Strukturen aus dem Stand der Technik verbesserte Oberflächenhärte auf. Dies bietet insbesondere den Vorteil, dass die erfindungsgemäßen Zusammensetzungen für Außenanwendungen geeignet sind. Dies insbesondere, ohne zusätzlich lackiert werden zu müssen, da die Kratzbeständigkeit hoch ist. Dies ist insbesondere überraschend, da Copoly(ester)carbonate mit denselben Monomerbausteinen, aber anderen Mengenverhältnissen dieser Monomerbausteine, diese Eigenschaften nicht aufweisen. Ebenso weisen Copoly(ester)carbonate, welche eine Einheit der definierten Einheiten (A), (B) und (C) weniger enthalten, ebenso dieses Eigenschaftsprofil nicht auf.

Die erfindungsgemäßen Zusammensetzungen weisen eine solche Schmelzeviskosität, dass sie sich ohne Zersetzung (auf Grund der guten Thermostabilität und ggf. der Anwesenheit entsprechender Additive) gut z.B. im Spritzguss verarbeiten lassen. Damit sind sie nahezu verarbeitbar wie Zusammensetzungen klassischer aromatischer Polycarbonate und damit können wenigstens auch die klassischen Anwendungsgebiete von klassischen aromatischen Polycarbonatzusammensetzungen mit der erfindungsgemäßen thermoplastischen Zusammensetzung bedient werden. Ebenso gleichzeitig können die in den erfindungsgemäßen Zusammensetzungen enthaltenen Copoly(ester)carbonate einen hohen Anteil an biobasierten Monomeren aufweisen, da zumindest die Einheiten (A) und (C) aus biobasierten Monomeren erhalten werden können. Ebenso weisen die erfindungsgemäßen thermoplastischen Zusammensetzungen ausreichende mechanische Eigenschaften auf, d.h. zum Beispiel ist eine Duktilität in einem ungekerbten Schlagversuch bei Raumtemperatur vorhanden.

### Copoly(ester)carbonat (I)

Die Erfindung betrifft Zusammensetzungen enthaltend "Copoly(ester)carbonate". Dabei sind die Klammern bevorzugt so zu verstehen, dass die Erfindung "Copolycarbonate oder Copolyestercarbonate" umfasst. Die Fachperson ist in der Lage, zu erkennen, wann das erfindungsgemäß eingesetzte Polymer Ester-Gruppen aufweist oder nicht. Dies hängt insbesondere davon ab, ob beide "t"s in Einheit (C) 1 sind (dann entsteht ein Polycarbonat) oder 0 sind (dann entsteht ein Copolyestercarbonat).

Das erfindungsgemäß eingesetzte Copoly(ester)carbonat (I) umfasst die Einheit (A), mit 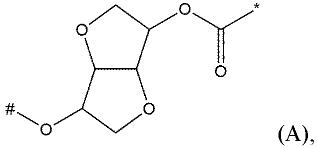 wobei die mit # und die mit * gekennzeichneten Positionen die Positionen sind, mit denen die Einheit (A) in das Copoly(ester)carbonat eingebunden ist. Bevorzugt wird Formel (A) dargestellt durch Formel (A*) mit 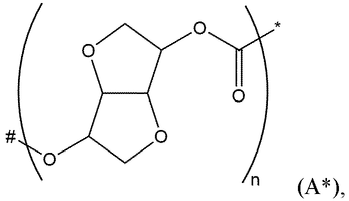 wobei n für die mittlere Anzahl an Wiederholungseinheiten steht und die mit # und die mit * gekennzeichneten Positionen, die zu (A) ausgeführten Bedeutungen haben. Besonders bevorzugt ist n größer 1. Ganz besonders bevorzugt ist n größer 1 bis 200, insbesondere bevorzugt ist n größer 1 bis 100. Dies bedeutet, dass die Einheit (A) auch als ein Block von mehreren direkt miteinander verknüpften Einheiten (A) vorliegen kann. Besonders bevorzugt weist das erfindungsgemäß eingesetzte Copoly(ester)carbonat direkte Verknüpfungen mindestens zweier Einheiten (A) miteinander auf.

Im Kontext der vorliegenden Erfindung ist der Begriff "mittlere Anzahl an Wiederholungseinheiten" der Fachperson bekannt. Die Fachperson weiß, wie dieser Parameter zu bestimmen ist. Insbesondere kann dieser Parameter mittels Maldi-TOF, GPC und/oder ¹H-NMR und/oder ¹³C-NMR bestimmt werden. Insbesondere im ¹H-NMR und/oder ¹³C-NMR können die "Endgruppen" möglicher Blöcke (d. h. bevorzugt, wenn ein Block vorliegt mit direkten Verknüpfungen der gleichen Einheiten, dieser Block am Anfang und am Ende Endgruppen aufweist, welche direkte Verknüpfungen zu Einheiten aufweisen, welche von den betrachteten Einheiten verschieden sind), Aufschluss über die mittlere Anzahl an Wiederholungseinheiten geben. Dabei ist auch ersichtlich, dass die Anzahl an Wiederholungseinheiten (also bevorzugt eines Blocks gleicher Einheiten) in einem Polymermolekül verschieden sein kann. Ebenso unterscheidet sich diese Anzahl auch von Polymerkette zu Polymerkette. Dadurch ergibt sich eine "mittlere" Anzahl an Wiederholungseinheiten. Zudem ist der Fachperson bewusst, dass die mittlere Anzahl an Wiederholungseinheiten durch die molaren Verhältnisse der einzelnen Strukturen zueinander beeinflusst werden kann. So wird eine Struktur, welche zu einem hohen molaren Prozentsatz im erfindungsgemäßen Copoly(ester)carbonat vorhanden ist, wahrscheinlicher an eine weitere Struktur derselben Art gebunden sein als eine Struktur, welche nur zu einem geringen molaren Prozentsatz vorhanden ist. Der Fachperson ist bewusst, dass die Obergrenze der mittleren Anzahl an Wiederholungseinheiten höchsten so hoch sein kein, dass alle Strukturen derselben Art zu einem Block kondensiert sind.

Bevorzugt wird (A) oder (A*) ausgewählt aus mindestens einer der Strukturen (A1), (A2) und (A3), wobei 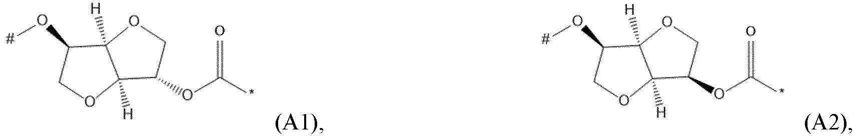 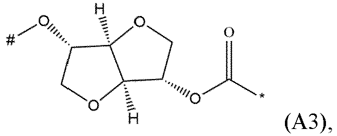 wobei die mit # und die mit * gekennzeichneten Positionen, die zu (A) ausgeführten Bedeutungen haben und für die Formel (A*) entsprechende Klammern vorhanden sind. Ganz besonders bevorzugt wird (A) oder (A*) durch die Formel (A1) dargestellt (ggf. mit entsprechenden Klammern für Formel (A*)). Der Fachperson ist ersichtlich, dass diese Einheiten sich von 1,4:3,6-Dianhydrohexitolen ableiten/aus diesen gebildet werden. 1,4:3,6-Dianhydrohexitole werden in der Regel ausgewählt aus der Gruppe, bestehend aus Isomannid, Isoidid und Isosorbid. Dabei kann es sich um ein biobasiertes Strukturelement handeln, womit alle Vorteile eines biobasierten Monomers und dem daraus resultierenden Polymer einhergehen (z. B. bessere Nachhaltigkeit, da aus nachwachsenden Rohstoffen zugänglich). Besonders bevorzugt besteht Einheit (A) oder (A*) aus der Einheit (A1). Ganz besonders bevorzugt ist Einheit (A) oder (A*) biobasiert.

Des Weiteren umfasst das erfindungsgemäß eingesetzte Copoly(ester)carbonat die Einheit (B), wobei 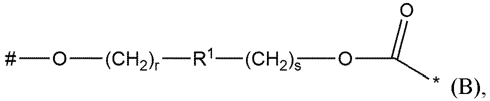 wobei jedes r und jedes s unabhängig voneinander für eine Zahl zwischen 0 und 4, bevorzugt zwischen 0 und 3, besonders bevorzugt zwischen 0 und 2, ganz besonders bevorzugt für 0 oder 1 steht, und jedes R¹ unabhängig voneinander für eine Struktur der Formeln (R1A), (R1B), (R1C) oder (R1D) steht 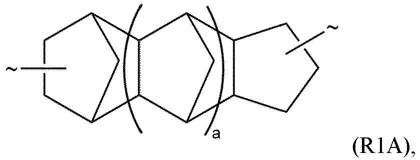 wobei a 0 oder 1, bevorzugt 0 ist, 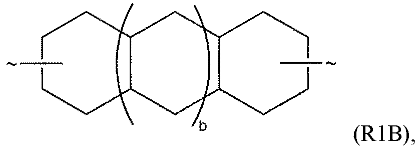 wobei b 0 oder 1, bevorzugt 0 ist, 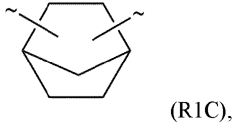 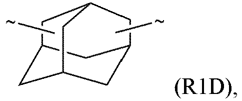 wobei die mit "~" gekennzeichneten Positionen in den Formeln (R1A) bis (R1D) die Positionen sind, an denen sich die in Formel (B) gezeigte (CH₂)ᵣ-Gruppe beziehungsweise (CH₂)ₛ-Gruppe befindet und wobei die mit # und die mit * gekennzeichneten Positionen die Positionen sind, mit denen die Einheit (B) in das Copoly(ester)carbonat eingebunden ist.

Es ist ersichtlich, dass in Einheit (B) auch mehr als eine der Einheiten (R1A), (R1B), (R1C) oder (R1D) vorliegen kann.

Es ist bevorzugt, dass Einheit (B) dargestellt wird durch Formel (B*) mit 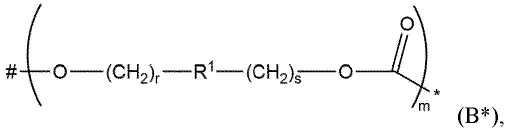 wobei m für die mittlere Anzahl an Wiederholungseinheiten steht und die mit # und die mit * gekennzeichneten Positionen, die zu (B) ausgeführten Bedeutungen haben. Dies ist insbesondere bevorzugt, wenn auch die Einheit (A) für die Einheit (A*) steht. Besonders bevorzugt ist m größer 1. Ganz besonders bevorzugt ist m größer 1 bis 80, insbesondere bevorzugt ist m größer 1 bis 50, ganz besonders bevorzugt ist m größer 1 bis 10.

Bevorzugt steht in Einheit (B) oder (B*) jedes r und jedes s unabhängig voneinander für eine Zahl zwischen 0 und 2, ganz besonders bevorzugt für 0 oder 1, und jedes R¹ unabhängig voneinander für eine Struktur der Formeln (R1A). Insbesondere ist es bevorzugt, dass r und s in den Formeln (B) bzw. (B*) 1 sind und R¹ in den Formeln (B) und (B*) für die Struktur der Formel (R1A) steht. Ganz besonders bevorzugt wird Einheit (B) oder (B*) durch die Einheit (B1) dargestellt, 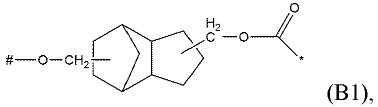 wobei die mit # und die mit * gekennzeichneten Positionen, die zu (B) ausgeführten Bedeutungen haben. Ganz besonders bevorzugt besteht die Einheit (B) aus Einheit (B1). Dem Fachmann ist ersichtlich, dass diese Einheit (B1) eine von TCD-Dimethanol (auch bezeichnet als TCD-Alkohol, Tricyclodecandimethanol oder [8-(hydroxymethyl)-3-tricyclo[5.2.1.02,6]decanyl]methanol) abgeleitete Einheit darstellt. TCD-Dimethanol liegt in der Regel als Isomerengemisch vor. Es sind bis zu 32 Isomere möglich. Je nach Reaktionsbedingungen der Polymerisation können sich die Ausgangsanzahl und/oder -Arten der Isomere des Monomers auch im resultierenden Polymer ändern. Insbesondere bevorzugt ist die Einheit (B1) aus einem massebilanzierten TCD-Dimethanol erhalten. Dies hat insbesondere den Vorteil, dass der CO₂-Abdruck des erfindungsgemäß eingesetzten Copoly(ester)carbonats damit reduziert werden kann.

Das erfindungsgemäß eingesetzte Copoly(ester)carbonat umfasst des Weiteren die Einheit (C), wobei 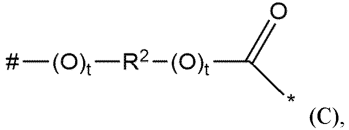 wobei beide t unabhängig von R² gleichzeitig entweder 0 oder gleichzeitig 1 sind und jedes R² unabhängig voneinander für eine aliphatische Gruppe mit 16 bis 44 Kohlenstoffatomen steht, welche gegebenenfalls ein oder mehrere Doppelbindungen enthält und wobei die mit # und die mit * gekennzeichneten Positionen die Positionen sind, mit denen die Einheit (C) in das Copoly(ester)carbonat eingebunden ist. Besonders bevorzugt steht jedes R² unabhängig voneinander für eine aliphatische Gruppe mit 17 bis 44 Kohlenstoffatomen, insbesondere bevorzugt mit 18 bis 44 Kohlenstoffatomen, insbesondere bevorzugt mit 19 bis 44 Kohlenstoffatomen, insbesondere bevorzugt mit 20 bis 44 Kohlenstoffatomen, insbesondere bevorzugt mit 21 bis 44 Kohlenstoffatomen, insbesondere bevorzugt mit 22 bis 43 Kohlenstoffatomen, insbesondere bevorzugt mit 23 bis 42 Kohlenstoffatomen, insbesondere bevorzugt mit 24 bis 41 Kohlenstoffatomen, insbesondere bevorzugt mit 25 bis 40 Kohlenstoffatomen, insbesondere bevorzugt mit 26 bis 39 Kohlenstoffatomen, insbesondere bevorzugt mit 27 bis 38 Kohlenstoffatomen, insbesondere bevorzugt mit 28 bis 37 Kohlenstoffatomen, insbesondere bevorzugt mit 29 bis 37 Kohlenstoffatomen, insbesondere bevorzugt mit 30 bis 37 Kohlenstoffatomen, insbesondere bevorzugt mit 31 bis 37 Kohlenstoffatomen, insbesondere bevorzugt mit 32 bis 37 Kohlenstoffatomen und ganz besonders bevorzugt mit 33 bis 37 Kohlenstoffatomen.

Im Kontext der vorliegenden Erfindung bezieht sich der Begriff "aliphatisch" beziehungsweise "aliphatische Gruppe", soweit nicht anders definiert, auf eine Kohlenwasserstoff-Gruppe, welche keine aromatischen Einheiten aufweist. Jedoch kann diese Gruppe ein oder mehrere Doppelbindungen aufweisen. Zudem kann diese Gruppe einen oder mehrere Zyklen aufweisen. Diese Zyklen können miteinander kondensiert sein (d. h. zum Beispiel ein oder mehrere Kohlenstoffatome können zwei Zyklen angehören) oder durch beispielsweise Alkylen-Gruppen oder Alkylidengruppen miteinander verbunden sein. Dieser eine oder die mehreren Zyklen können ein oder mehrere Doppelbindungen aufweisen. Dabei ist jedoch zu beachten, dass aromatischen Zyklen erfindungsgemäß von der Definition "aliphatisch" nicht umschlossen sind. Zudem kann der ein oder die mehreren Zyklen beziehungsweise die aliphatische Gruppe an sich durch ein oder mehrere Heteroatome unterbrochen sein. Dies ist jedoch weniger bevorzugt.

Im Kontext der vorliegenden Erfindung bezieht sich der Begriff "Alkyl" bzw. "Alkylgruppe" bevorzugt und soweit nicht anders angegeben auf eine Alkanstruktur, von der ein Wasserstoffatom entfernt wurde. Die Alkylgruppe gemäß der vorliegenden Erfindung kann linear oder verzweigt sein. Sie ist gesättigt und umfasst daher nur Einfachbindungen zwischen den benachbarten Kohlenstoffatomen. Bevorzugt umfasst die Alkylgruppe Methyl, Ethyl, n-Propyl, Isopropyl, n-Butyl, sec-Butyl, tert-Butyl, n-Pentyl, 1-Methylbutyl, 2-Methylbutyl, 3-Methylbutyl, Neopentyl, 1-Ethylpropyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl und dergleichen. Die Auswahl dieser Strukturen kann begrenzt sein, wenn im Rahmen der vorliegenden Erfindung die Anzahl der Kohlenstoffatome anders definiert wird.

Im Kontext der vorliegenden Erfindung bezieht sich der Begriff "Alkylen" bzw. "Alkylengruppe" bevorzugt und soweit nicht anders angegeben auf eine verbrückende Alkanstruktur, von der zwei Wasserstoffatome von unterschiedlichen Kohlenstoffatomen entfernt wurden. In diesem Kontext können die zwei Wasserstoffatome, die von den zwei Kohlenstoffatomen entfernt wurden, von beliebigen Kohlenstoffatomen in der Alkanstruktur entfernt werden. Dies bedeutet, dass die beiden Kohlenstoffatome benachbart sein können, aber nicht zwingend benachbart sein müssen. Eine Alkylengruppe kann linear oder verzweigt sein. Sie ist gesättigt. Wenn die Alkylengruppe nur ein Kohlenstoffatom umfasst, handelt es sich um eine Methylengruppe (-CH₂-), welche mit dem Rest des Moleküls über zwei Einfachbindungen verbunden ist. Bevorzugt umfasst die Alkylengruppe Methylen, Ethylen, n-Propylen, iso-Propylen, n-Butylen, sec-Butylen, tert-Butylen, n-Pentylen, 1-Methylbutylen, 2-Methylbutylen, 3-Methylbutylen, Neopentylen, 1-Ethylpropylen, n-Hexylen, 1,1-Dimethylpropylen, 1,2-Dimethylpropylen, 1,2-Dimethylpropylen, 1-Methylpentylen, 2-Methylpentylen, 3-Methylpentyln, 4-Methylpentylen, 1,1-Dimethylbutylen, 1,2-Dimethylbutylen, 1,3-Dimethylbutylen, 2,2-Dimethylbutylen, 2,3-Dimethylbutylen, 3,3-Dimethylbutylen, 1-Ethylbutylen, 2-Ethylbutylen, 1,1,2-Trimethylpropylen, 1,2,2-Trimethylpropylen, 1-Ethyl-1-methylpropylen, 1-Ethyl-2-methylpropylen, 1-Ethyl-2-methylpropylen und dergleichen. Die Auswahl dieser Strukturen kann begrenzt sein, wenn im Rahmen der vorliegenden Erfindung die Anzahl der Kohlenstoffatome anders definiert wird. Zudem kann die Alkylengruppe gemäß der vorliegenden Erfindung gegebenenfalls mindestens eine Carbonylgruppe aufweisen, gegebenenfalls mindestens ein Halogenatom aufweisen und/oder gegebenenfalls durch mindestens ein Heteroatom unterbrochen sein. Beispiele für solche Alkylengruppen sind -C(=O)-(CH₂)₄-C(=O)-, -C(=O)-(CH₂)₃-C(=O)-, - C(=O)-(CH₂)₂-C(=O)-, -C(CF₃)₂, -O-(CH₂)₄-O-, -O-(CH₂)₃-O-, -O-(CH₂)₂-O- und dergleichen. Die vorgenannten Strukturen sind erfindungsgemäß jedoch weniger bevorzugt. Zudem wird erfindungsgemäß auch von einer "Cycloalkylen-Gruppe" gesprochen. Hierbei treffen die oben genannten Ausführungen zu mit dem Zusatz, dass die Gruppe zusätzlich einen oder mehrere Zyklen aufweisen kann. Diese Zyklen können miteinander kondensiert sein (d.h. zum Beispiel ein oder mehrere Kohlenstoffatome können zwei Zyklen angehören) oder durch beispielsweise Alkylen-Gruppen miteinander verbunden sein. Dieser eine oder die mehreren Zyklen können ein oder mehrere Doppelbindungen aufweisen. Zudem kann der ein oder die mehreren Zyklen beziehungsweise die aliphatische Gruppe an sich durch ein oder mehrere Heteroatome unterbrochen sein. Dies ist jedoch weniger bevorzugt.

Im Kontext der vorliegenden Erfindung bezieht sich der Begriff "Alkyliden" bzw. "Alkylidengruppe" bevorzugt und soweit nicht anders angegeben auf eine verbrückende Alkanstruktur, bei der zwei Wasserstoffatome von demselben Kohlenstoffatom entfernt wurden. Die Alkylidengruppe umfasst gegebenenfalls mindestens eine Kohlenstoff-Kohlenstoff-Doppelbindung, gegebenenfalls mindestes eine Carbonyl-Gruppe und/oder gegebenenfalls mindestens ein Halogenatom. Bevorzugt umfasst die Alkylidengruppe isoPropyliden, n-Propyliden, iso-Heptyliden und dergleichen.

Im Kontext der vorliegenden Erfindung bezieht sich der Begriff "Aralkyl" bevorzugt und soweit nicht anders angegeben in jedem Fall unabhängig voneinander auf eine lineare, cyclische oder verzweigte Alkylgruppe, welche einfach, zweifach oder mehrfach mit Arylresten substitutiert ist. Im Kontext der vorliegenden Erfindung bezieht sich der Begriff "Aryl" bevorzugt und soweit nicht anders angegeben auf einen aromatischen Kohlenwasserstoffrest. Beispiele für "Aryl" sind Phenyl, *o-, p-,* m-Toluyl, Naphthyl, Phenanthryl oder Anthrancenyl.

Im Kontext der vorliegenden Erfindung bezieht sich der Begriff "Alkoxy" bzw. "Alkoxygruppe" bevorzugt und soweit nicht anders angegeben auf eine lineare, cyclische oder verzweigte Alkylgruppe, welche einfach an ein Sauerstoffatom gebunden (-OR) ist. Bevorzugt weisen Alkoxygruppen gemäß der vorliegenden Erfindung 1 bis 6 Kohlenstoffatome auf. Besonders bevorzugt umfassen Alkoxygruppen Methoxy, Ethoxy, n-Propoxy, iso-Propoxy, n-Butoxy, sec-Butoxy, tert-Butoxy, n-Pentoxy, 1-Methylbutoxy, 2-Methylbutoxy, 3-Methylbutoxy, neo-Pentoxy, 1-Ethylpropoxy, Cyclohexoxy, Cyclopentoxy, n-Hexoxy, 1,1-Dimethylpropoxy, 1,2-Dimethylpropoxy, 1,2-Dimethylpropoxy, 1-Methylpentoxy, 2-Methylpentoxy, 3-Methylpentoxy, 4-Methylpentoxy, 1,1-Dimethylbutoxy, 1,2-Dimethylbutoxy, 1,3-Dimethylbutoxy, 2,2-Dimethylbutoxy, 2,3-Dimethylbutoxy, 3,3-Dimethylbutoxy, 1-Ethylbutoxy, 2-Ethylbutoxy, 1,1,2-Trimethylpropoxy, 1,2,2-Trimethylpropoxy, 1-Ethyl-1-methylpropoxy, 1-Ethyl-2-methylpropoxy oder 1-Ethyl-2-methylpropoxy. Die Auswahl dieser Strukturen kann begrenzt sein, wenn im Rahmen der vorliegenden Erfindung die Anzahl der Kohlenstoffatome anders definiert wird.

Basierend auf den oben genannten Definitionen ist die Fachperson in der Lage, weitere Definitionen, welche nicht explizit oben genannt sind, zu verstehen.

Erfindungsgemäß ist es bevorzugt, dass R² in der Formel (C) dargestellt wird durch die folgende Formel (R2A) mit 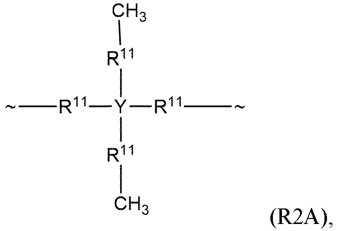
wobei Y für eine verbrückende Struktur steht, die ausgewählt wird aus der Gruppe, bestehend aus einer Alkylen-Gruppe mit 1 bis 4 Kohlenstoffatomen, einer Alkyliden-Gruppe mit 1 bis 4-Kohlenstoffatomen und einer Cycloalkylen-Gruppe mit 4 bis 12 Kohlenstoffatomen, bevorzugt 4 bis 10 Kohlenstoffatomen, wobei die Cycloalkylen-Gruppe gegebenenfalls eine oder mehrere Doppelbindungen enthält und/oder gegebenenfalls an eine oder mehrere weitere Cycloalkylen-Gruppen kondensiert ist, wobei die eine oder mehreren weiteren Cycloalkylengruppen gegebenenfalls jeweils eine oder mehrere Doppelbindungen aufweisen,
wobei die an die verbrückende Struktur angrenzenden R¹¹-Gruppen an eine beliebige Position der verbrückenden Struktur gebunden sind und
wobei jedes R¹¹ unabhängig voneinander für eine Alkylen-Gruppe mit 1 bis 12 Kohlenstoffatomen oder eine Alkyliden-Gruppe mit 1 bis 12 Kohlenstoffatomen steht, mit der Maßgabe dass die Struktur der Formel (R2A) 16 bis 44 Kohlenstoffatome umfasst und wobei die mit "~" gekennzeichneten Positionen in der Formel (R2A) die Positionen sind, an denen sich jeweils die in Formel (C) gezeigten (O)ₜ-Gruppen befinden.

Besonders bevorzugt wird die Formel (R2A) dargestellt durch eine der Formeln (R2Aa), (R2Ab), (R2Ac) oder (R2Ad), mit 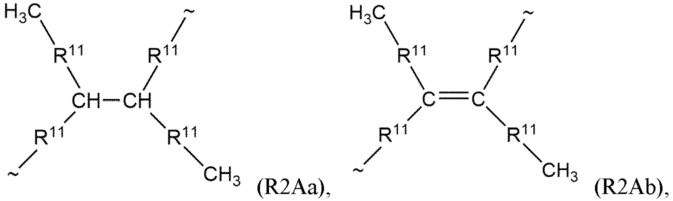 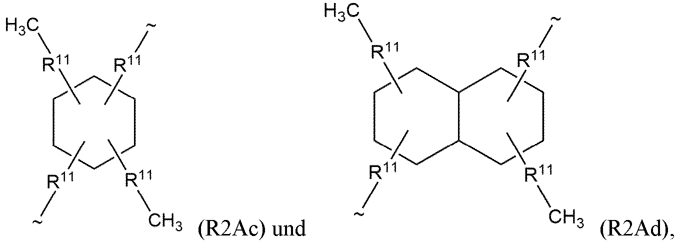 wobei jedes R¹¹ und jedes "~" die zu (R2A) genannten Bedeutungen hat, der Zyklus der Formel (R2Ac) gegebenenfalls eine oder zwei Doppelbindungen aufweist und jeder Zyklus der Formel (R2Ad) unabhängig voneinander gegebenenfalls eine oder zwei Doppelbindungen enthält. Es ist zudem besonders bevorzugt, dass R² in der Formel (C) dargestellt wird aus einer Mischung von mindestens zwei unterschiedlichen Formeln (R2Aa), (R2Ab), (R2Ac) und (R2Ad). Dabei sind auch Mischungen aus unterschiedlichen Gruppen, welche aber unter die gleiche Formel fallen (also zum Beispiel zwei Gruppen, welche unter die Formel (R2Aa)) umfasst.

Wie bereits oben näher erläutert, können die Zyklen der Formeln (R2Ac) und/oder (R2Ad) jeweils eine oder zwei Doppelbindungen aufweisen. Dabei ist in der Regel nicht umfasst, dass ein aromatischer Ring entsteht. Wie weiter unten erläutert, kann es sein, dass, wenn R² in der Formel (C) eine Mischung von mindestens zwei unterschiedlichen Formeln (R2Aa), (R2Ab), (R2Ac) und (R2Ad) umfasst, ebenfalls geringe Anteile an aromatischen verbrückenden Strukturen Y gemäß Formel (R2A) enthalten sind. Dies ist jedoch weniger bevorzugt.

Besonders bevorzugt steht jedes R¹¹ in der Formel (R2A) und/oder in den Formeln (R2Aa), (R2Ab), (R2Ac) oder (R2Ad) unabhängig voneinander für eine Alkylen-Gruppe mit 1 bis 10 Kohlenstoffatomen, mit der Maßgabe, dass die Struktur der Formel (R2A) und/oder in den Formeln (R2Aa), (R2Ab), (R2Ac) oder (R2Ad) 16 bis 44 Kohlenstoffatome umfasst.

Ebenso bevorzugt ist, dass die durch R², (R2A), (R2Aa), (R2Ab), (R2Ac) und/oder (R2Ad) beschriebene Gruppe in der Einheit (C) 21 bis 44 Kohlenstoffatome aufweist. Genauso bevorzugt ist es, dass die durch R², (R2A), (R2Aa), (R2Ab), (R2Ac) und/oder (R2Ad) beschriebene Gruppe in der Einheit (C) 17 bis 44 Kohlenstoffatome, insbesondere bevorzugt 18 bis 44 Kohlenstoffatome, insbesondere bevorzugt 19 bis 44 Kohlenstoffatome, insbesondere bevorzugt 20 bis 44 Kohlenstoffatome, insbesondere bevorzugt 21 bis 44 Kohlenstoffatome, insbesondere bevorzugt 22 bis 43 Kohlenstoffatome, insbesondere bevorzugt 23 bis 42 Kohlenstoffatome, insbesondere bevorzugt 24 bis 41 Kohlenstoffatome, insbesondere bevorzugt 25 bis 40 Kohlenstoffatome, insbesondere bevorzugt 26 bis 39 Kohlenstoffatome, insbesondere bevorzugt 27 bis 38 Kohlenstoffatome, insbesondere bevorzugt 28 bis 37 Kohlenstoffatome, insbesondere bevorzugt 29 bis 37 Kohlenstoffatome, insbesondere bevorzugt 30 bis 37 Kohlenstoffatome, insbesondere bevorzugt 31 bis 37 Kohlenstoffatome, insbesondere bevorzugt 32 bis 37 Kohlenstoffatome und ganz besonders bevorzugt 33 bis 37 Kohlenstoffatome aufweist. Die Fachperson ist in der Lage, diese begrenzte Anzahl an Kohlenstoffatomen auf die oben getroffenen Maßgaben in Bezug auf die Anzahl an Kohlenstoffatomen zu übertragen.

Es ist insbesondere bevorzugt, dass die unterschiedlichen R¹¹ in der Formel (R2A) und/oder in den Formeln (R2Aa), (R2Ab), (R2Ac) oder (R2Ad) eine unterschiedliche Anzahl an Kohlenstoffatomen umfassen.

Ganz besonders bevorzugt wird die erfindungsgemäße Einheit (C) durch Einkondensation von Dimerfettsäure und/oder einem durch Reduktion von Dimerfettsäure erhaltenen Dimer-Diol erhalten.

Der Fachperson ist bekannt, dass Dimerfettsäure ein Gemisch aus verschiedenen Säuren ist. Die überwiegenden Strukturen sehen wie folgt aus.

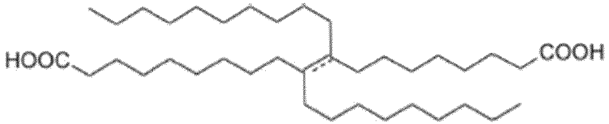

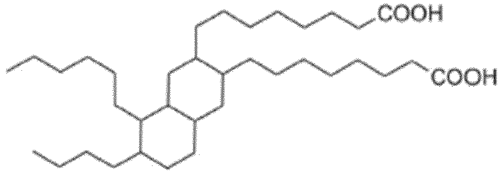

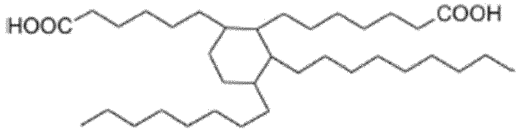

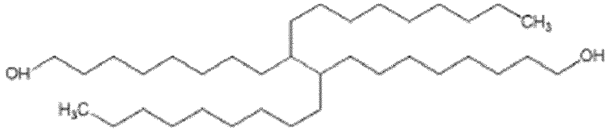

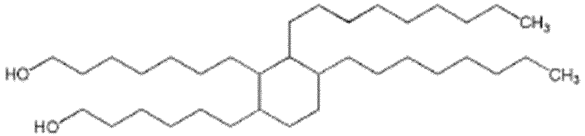

Dabei werden bevorzugt vollständig hydrierte Verbindungen eingesetzt. Bei Dimerfettsäure handelt sich in der Regel um ein Gemisch. Sie wird durch Kondensation verschiedener ungesättigter Fettsäuren hergestellt. Dazu wird eine Fettsäure mit konjugierten Doppelbindungen (Konjuensäure) mit weitere(n) ungesättigte(n) Fettsäuren zur Reaktion gebracht. Besonders bevorzugt werden dafür konjugierte Linolsäuren verwendet. Die Reaktion erfolgt in der Regel mittels Diels-Alder-Addition, wodurch sich ein teilweise ungesättigter C6-Ring bildet. Damit umfasst Dimerfettsäure zunächst zumindest teilweise eine oder mehrere Doppelbindungen. Die Mischung von Dimerfettsäuren kann neben dem Dimer auch Trimere sowie Monomere der Fettsäuren umfassen. Besonders bevorzugt werden Ölsäure und Linolsäure zur Reaktion gebracht. Die in der Dimerfettsäure enthaltenen Doppelbindungen werden in der Regel hydriert.

Um ein durch Reduktion von Dimerfettsäure erhaltenes Dimer-Diol zu erhalten, werden die Säuregruppen zu den entsprechenden Alkoholgruppen reduziert. Dies ist für die Fachperson ein bekanntes Verfahren. Zu beachten ist hier in Bezug auf die Einheit der Formel (C), dass dadurch die Gesamtzahl an Kohlenstoffatomen der Gruppe R² für Dimerfettsäure und für ein durch Reduktion von Dimerfettsäure erhaltenes Dimer-Diol sich unterscheidet, selbst wenn in beiden Fällen die gleiche Dimerfettsäure eingesetzt wird. In dem Fall, wo die Dimerfettsäure 36 Kohlenstoffatome aufweist, enthält R² 34 Kohlenstoffatome, weil die Kohlenstoffatome der beiden Säuregruppen einmal in Formel (C) als (C=O)-Gruppe dargestellt sind und einmal zum Beispiel in einer der Einheiten (A) oder (B) vorhandenen (C=O)-Gruppen (am jeweiligen mit * gekennzeichneten Ende der Einheiten). Wird dieselbe Dimerfettsäure mit 36 Kohlenstoffatomen zu einem Dimer-Diol reduziert, so weist das R² gemäß Einheit (C) 36 Kohlenstoffatome auf. Als Diol reagiert es mit einer Carbonylquelle und das Kohlenstoffatom der in der Einheit (C) gezeigten (C=O)-Gruppe stammt aus dieser Carbonylquelle. Es ist ersichtlich, wie dies auf sämtliche von Einheit (C) umfassten Einheiten übertragen werden kann.

Ganz besonders bevorzugt wird die erfindungsgemäße Einheit (C) durch Einkondensation von Dimerfettsäure mit 36 Kohlenstoffatomen und/oder einem durch Reduktion von Dimerfettsäure erhaltenen Dimer-Diol mit 36 Kohlenstoffatomen erhalten.

Dimerfettsäuren sind kommerziell erhältlich und z.B. unter den Handelsnamen Pripol 1009, Pripol 1006, Pripol 1025, Radiacid 0960, Radiacid 0975, Radiacid 0976, Radiacid 0977, Radiacid 0978, Unidyme 18 bekannt. Die entsprechenden Dimer-Diole sind z.B unter den Handelsnamen Pripol 2030 und 2033 bekannt. Pripol und Pripolderivate werden, wie oben beschrieben, durch Oligomerisierung von ungesättigten Fettsäuren - bevorzugt C18-Säuren - hergestellt. Durch Dimerisierung wird ein Gemisch aus Mono-, Di- und Tricarboxysäuren erhalten. Die Mono-funktionellen Verbindungen werden zumeist durch Destillation abgetrennt. Typischerweise wird dann eine Gemisch aus 80 % Di-funktioneller und 20 % Trifunktioneller Verbindungen erhalten, welches durch Destillation weiter aufgereinigt wird, um die Di-funktionellen Verbindungen anzureichern. Durch Hydrierung erhält man die gesättigten Verbindungen. Pripol als Dimerfettsäure bzw. Dimerdiol ist ein aufgereinigtes Gemisch umfassend überwiegend Disäure oder Diol mit 36 C-Atomen.

Bei der Einheit (C) kann es sich um eine biobasierte Einheit handeln, womit alle Vorteile eines biobasierten Monomers und dem daraus resultierenden Polymer einhergehen (z. B. bessere Nachhaltigkeit, da aus nachwachsenden Rohstoffen zugänglich). Ganz besonders bevorzugt ist Einheit (C) biobasiert.

Des Weiteren kann im erfindungsgemäß eingesetzten Copoly(ester)carbonat eine Einheit der Formel (D) vorliegen, mit 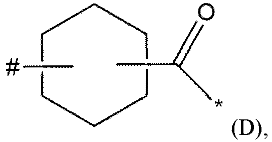 wobei die mit # und die mit * gekennzeichneten Positionen die Positionen sind, mit denen die Einheit (D) in das Copoly(ester)carbonat eingebunden ist. Die Einheit (D) ist nur zu höchstens 5 mol-% im erfindungsgemäß eingesetzten Copoly(ester)carbonat vorhanden (wobei mol-%-Angaben sich auf die Gesamtstoffmenge der Einheiten (A), (B), (C), gegebenfalls (D) und gegebenenfalls von (A), (B), (C) und (D) verschiedenen Einheiten beziehen). Besonders bevorzugt ist die Einheit (D) von 0 bis 5 mol%, insbesondere bevorzugt von 0 bis 3 mol-%, weiter bevorzugt von 0,01 bis 2 mol-% und ganz besonders bevorzugt zu 0 mol-% im erfindungsgemäß eingesetzten Copoly(ester)carbonat vorhanden.

Die Einheit (D) kann durch Einkondensation von Cyclohexandicarbonsäure in das erfindungsgemäß eingesetzte Copoly(ester)carbonat entstehen. Es wurde jedoch gefunden, dass ein zu hoher mol-Anteil an Einheit (D) im erfindungsgemäß eingesetzten Copoly(ester)carbonat zu einer Verschlechterung der Heißwasserbeständigkeit führt. Daher ist es bevorzugt, den Anteil an Einheit (D) im erfindungsgemäß eingesetzten Copoly(ester)carbonat möglichst gering zu halten.

Das erfindungsgemäß eingesetzte Copoly(ester)carbonat weist zumindest teilweise direkte Verknüpfungen zwischen den Einheiten (A), (B), (C), optional (D) und gegebenenfalls von (A), (B), (C) und (D) verschiedene Einheiten auf. Auf diese Weise ist für die Fachperson ersichtlich, dass ein Polymer entsteht, welches Carbonat-Gruppen aufweist und ggf. ebenso Ester-Gruppen. Gemäß der vorliegenden Erfindung wird der Ausdruck "direkte Verknüpfung" bevorzugt so verstanden, dass die genannten Einheiten unmittelbar miteinander verknüpft sind. Dies erfolgt bevorzugt, indem keine weitere Einheit zwischen den angegebenen Einheiten vorhanden ist. Beispielsweise kann eine Einheit (A) eine direkte Verknüpfung zu einer Einheit (B) aufweisen, indem die mit * gekennzeichnete Position der Einheit (A) unmittelbar an die mit # gekennzeichnete Position der Einheit (B) angebunden wird unter Ausbildung einer Carbonat-Gruppe.

Erfindungsgemäß wird vorgegebenen, dass, wenn eine direkte Verknüpfung von mindestens zwei der Einheiten ausgewählt aus der Gruppe bestehend aus (A), (B), (C) und gegebenenfalls (D) vorliegt, die mit "*" gekennzeichnete Position der Einheiten (A), (B), (C), (D) dann mit der mit "#" gekennzeichneten Position dieser Einheiten verknüpft ist, mit der Ausnahme, dass,
wenn t in Formel (C) 0 ist, keine direkte Verknüpfung zweier Einheiten (C) miteinander vorliegt,
wenn t in Formel (C) 0 ist, keine direkte Verknüpfung der Einheit (C) mit der Einheit (D) vorliegt und
keine direkte Verknüpfung zweier Einheiten (D) miteinander vorliegt. Dabei ist der Ausdruck "mindestens zwei Einheiten" in dieser Formulierung so zu verstehen, dass auch direkte Verknüpfungen von mehr Einheiten miteinander umfasst sind, wie beispielsweise direkte Verknüpfungen (A)-(B)-(C), (A)-(A)-(B)-(C), (A)-(C)-(B)-(B) usw. Durch diese direkten Verknüpfungen wird das oben beschriebene erfindungsgemäße Eigenschaftsprofil erzielt.

Die Ausnahme, warum, wenn t in Formel (C) 0 ist, keine direkte Verknüpfung zweier Einheiten (C) miteinander vorliegt, wenn t in Formel (C) 0 ist, keine direkte Verknüpfung der Einheit (C) mit der Einheit (D) vorliegt und keine direkte Verknüpfung zweier Einheiten (D) miteinander vorliegt, ist für die Fachperson ersichtlich. Einheit (C), wenn t in Formel (C) 0 ist, bzw. Einheit (D) werden durch den Einbau von Dicarbonsäuren in das Copoly(ester)carbonat erhalten. Dadurch müssen Ester-Gruppen entstehen. Entsprechende andere Verknüpfungen dieser Einheiten sind erfindungsgemäß bevorzugt nicht möglich.

Grundsätzlich bezeichnen die Positionen, die mit # oder mit * gekennzeichnet sind, die Positionen, mit denen die jeweilige Einheit oder Struktur in das erfindungsgemäß eingesetzte Copoly(ester)carbonat eingebunden sind. Es ist ersichtlich, dass diese Positionen keine "Gruppe" darstellen, sondern lediglich der Vereinfachung der Darstellung dienen. Zu Verdeutlichung: wenn zum Beispiel eine Einheit (A) eine direkte Verknüpfung mit einer Einheit (B) aufweist, so ist die mit * gekennzeichnete Position der Einheit (A) das Sauerstoffatom neben der mit # gekennzeichneten Position in Einheit (B), so dass sich eine Carbonat-Gruppe bildet. Dies ist für die Fachperson auf alle anderen Einheiten übertragbar. Da es sich erfindungsgemäß um eine Copoly(ester)carbonat handelt, bilden die Einheiten (A), (B), (C) und gegebenenfalls (D) in der direkten Verknüpfung miteinander Carbonat-Gruppen (und gegebenenfalls Ester-Gruppen, wenn die Einheit (C) in die direkte Verknüpfung einbezogen ist und t jeweils entsprechend 0 ist bzw. falls Einheit (D) vorhanden ist).

Jedoch sieht das erfindungsgemäß eingesetzte Copoly(ester)carbonat vor, dass immer nur Positionen, die mit # gekennzeichnet sind, mit Positionen, die mit * gekennzeichnet sind, direkt verknüpft sind. Zudem liegt im erfindungsgemäß eingesetzten Copoly(ester)carbonat keine direkte Verknüpfung zweier Einheiten (C) miteinander vor, wenn t in Formel (C) 0 ist. Ebenso liegt keine direkte Verknüpfung der Einheit (C) mit der Einheit (D) vor, wenn t in Formel (C) 0 ist. Des Weiteren liegt keine direkte Verknüpfung zweier Einheiten (D) miteinander vor. Wenn direkte Verknüpfungen zweier Einheiten (A) miteinander oder direkte Verknüpfungen zweier Einheiten (B) miteinander vorliegen, kann dies auch über die Einheiten (A*) bzw. (B*) ausgedrückt werden, wobei die Integer n und m die Anzahl der direkten Verknüpfungen ausdrücken.

Es ist besonders bevorzugt, dass das erfindungsgemäß eingesetzte Copoly(ester)carbonat direkte Verknüpfungen zwischen den Einheiten (A) und (C) aufweist und gleichzeitig beide t in Einheit (C) 0 sind. Dadurch ist bevorzugt eine Gruppe vorhanden, bei der eine Dianhydrohexitol-Gruppe direkt über eine Ester-Gruppe an beispielsweise eine von Dimerfettsäure abgeleitete Gruppe angebunden ist.

Bevorzugt umfasst das erfindungsgemäß eingesetzte Copoly(ester)carbonat Strukturen der Einheit (ABC) 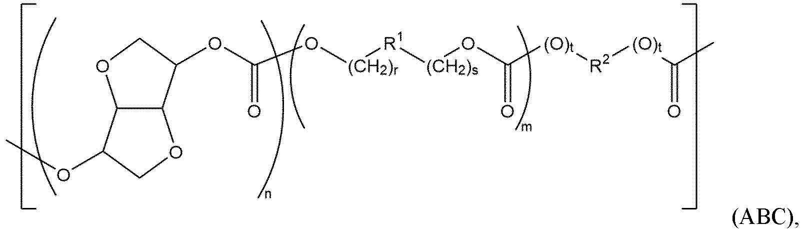 in der n für 1, die mittlere Anzahl an Wiederholungseinheiten oder die oben beschriebenen Bevorzugungen steht, R¹, r und s die zu (B*) ausgeführten Bedeutungen in sämtlichen Bevorzugungen und Kombinationsmöglichkeiten hat und m für 1, die mittlere Anzahl an Wiederholungseinheiten oder die oben beschriebenen Bevorzugungen steht, und t und R² für die zu Einheit (C) ausgeführten Bedeutungen in sämtlichen Bevorzugungen und Kombinationsmöglichkeiten hat. Der Fachperson ist ersichtlich, dass diese Einheit (ABC) vom Polymer umfasst sein kann und gegebenenfalls noch weitere Strukturen im erfindungsgemäß eingesetzten Copoly(ester)carbonat vorhanden sein können. Ferner ist bevorzugt die Abfolge der Monomere nicht festgelegt. Bevorzugt handelt es sich erfindungsgemäß um ein Copoly(ester)carbonat mit einem statistischen Einbau der Monomere. Dann kann die Struktur (ABC) auch nur zu einem geringen Anteil im erfindungsgemäß eingesetzten Copoly(ester)carbonat vorhanden sein, weil sie die konkrete Abfolge einzelner Strukturelemente wiedergibt. Durch bestimmte Verfahrensvarianten, durch Reaktivitätsunterschiede oder durch den Einsatz von bestimmten Katalysatoren kann es dazu kommen, dass die Monomere nicht statistisch eingebaut werden; auch dies ist bevorzugt mit der generischen Einheit (ABC) mitumfasst. Bevorzugt umfasst das erfindungsgemäße Copoly(ester)carbonat Strukturen, bei denen direkte Verknüpfungen der Formeln (A)-(B), (A)-(C), (C)-(B), (A)-(B)-(C), (A)-(C)-(B), (A*)-(B), (A*)-(C), (A*)-(B)-(C), (A*)-(C)-(B), (A*)-(B*), (B*)-(C), (A*)-(B*)-(C), (A*)-(C)-(B*) oder beliebige Mischungen zweier oder mehrerer dieser Strukturen vorliegen.

Es ist bevorzugt, dass das erfindungsgemäß eingesetzte Copolycarbonat Einheit (ABC*) umfasst, 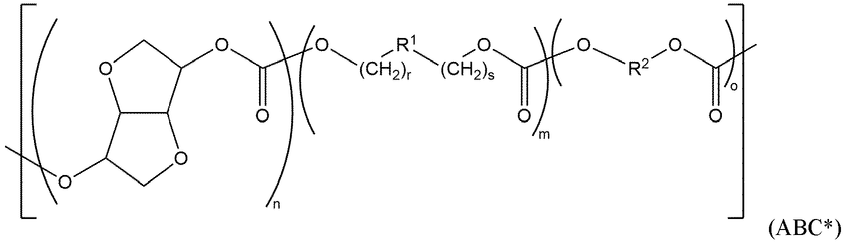 in der n für 1, die mittlere Anzahl an Wiederholungseinheiten oder die oben beschriebenen Bevorzugungen steht, R¹, r und s die zu (B*) ausgeführten Bedeutungen in sämtlichen Bevorzugungen und Kombinationsmöglichkeiten hat und m für 1, die mittlere Anzahl an Wiederholungseinheiten oder die oben beschriebenen Bevorzugungen steht, R² für die zu Einheit (C) ausgeführten Bedeutungen in sämtlichen Bevorzugungen und Kombinationsmöglichkeiten hat und o für 1, die mittlere Anzahl an Wiederholungseinheiten oder eine Zahl zwischen 1 und 5 steht. Es ist für die Fachperson ersichtlich, dass die oben gezeigte Struktur (ABC*) aus den Einheiten (A), (B) und (C) ableitbar ist, wobei t in Formel (C) 1 ist.

Es ist insbesondere bevorzugt, dass das erfindungsgemäß eingesetzte Copoly(ester)carbonat Einheit (AC) umfasst, 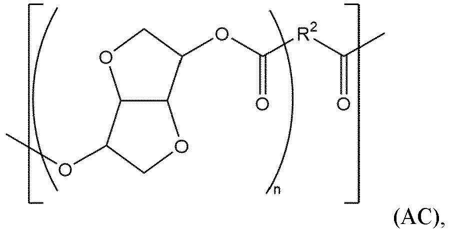 in der n für 1 oder die mittlere Anzahl an Wiederholungseinheiten steht und R² für die zu Einheit (C) ausgeführten Bedeutungen in sämtlichen Bevorzugungen und Kombinationsmöglichkeiten hat.

Besonders bevorzugt umfasst das erfindungsgemäß eingesetzte Copoly(ester)carbonat die Einheit (ABC) und (AC).

Besonders bevorzugt ist das erfindungsgemäß eingesetzte Copoly(ester)carbonat dadurch gekennzeichnet, dass es zu mindestens 80 Gew.-%, besonders bevorzugt mindestens 85 Gew.-%, ebenso bevorzugt zu mindestens 90 Gew.-% aus den Einheiten (A), (B), (C) und gegebenenfalls (D) besteht. Damit weist das erfindungsgemäße Copoly(ester)carbonat bevorzugt nur geringe Mengen an anderen Strukturen als die der Einheiten (A), (B),(C) und gegebenenfalls (D) auf. Hierbei ist jedoch zu beachten, dass bevorzugt die Endgruppen des erfindungsgemäß eingesetzten Copoly(ester)carbonats ausgenommen sind. Es ist möglich, dass das erfindungsgemäß eingesetzte Copoly(ester)carbonat auch andere funktionelle Einheiten als Carbonat-Gruppen und gegebenenfalls Ester-Gruppen aufweisen kann. Dabei ist es aber des Weiteren bevorzugt, dass das erfindungsgemäß eingesetzte Copoly(ester)carbonat keine andere funktionellen Einheiten als Carbonat- und oder gegebenenfalls Ester-Gruppen aufweist. Auch hierbei können die Endgruppen wieder ausgenommen sein. Das bedeutet, dass sich die höchstens 20 Gew-%, bevorzugt höchstens 15 Gew.-%, besonders bevorzugt höchsten 10 Gew.-%, welche aus von Einheiten (A), (B), (C) und gegebenenfalls (D) verschiedenen Einheiten bestehen, bevorzugt aus anderen Diolen oder Dicarbonsäuren ableiten lassen, welche durch Einbau in das Copoly(ester)carbonat wiederum zu Carbonat- oder Ester-Gruppen führen.

Erfindungsgemäß enthält das Copoly(ester)carbonat 4 bis 25 mol-% der Einheit (B), 2 bis 14 mol-% der Einheit (C), 0 bis 5 mol-% der Einheit (D) und mindestens 55 mol-% der Einheit (A), wobei die mol-%-Angaben sich auf die Gesamtstoffmenge der Einheiten (A), (B), (C), gegebenfalls (D) und gegebenenfalls von (A), (B), (C) und (D) verschiedenen Einheiten beziehen. Der Fachperson ist ersichtlich, dass sich diese Mengenangaben auch auf sämtliche Bevorzugungen und Kombinationen von Bevorzugungen zu den einzelnenen Einheiten (A), (B) und (C) beziehen können.

Besonders bevorzugt umfasst das erfindungsgemäß eingesetzte Copoly(ester)carbonat
- 4 bis 25 mol-%, besonders bevorzugt 5 bis 20 mol-%, ebenso bevorzugt 7 bis 18 mol-%, ganz besonders bevorzugt 10 bis 15 mol-% oder ganz besonders bevorzugt 8 bis 12 mol-% der Einheit (B),
- 2 bis 14 mol-%, besonders bevorzugt 3 bis 12 mol-%, ganz besonders bevorzugt 3,5 bis 7,0 mol-% der Einheit (C) und
- mindestens 55 mol-%, besonders bevorzugt mindestens 65 mol-%, ebenso bevorzugt mindestens 75 mol-% und ganz besonders bevorzugt mindestens 80 mol-% der Einheit (A),
wobei die mol-%-Angaben sich auf die Gesamtstoffmenge der Einheiten (A), (B), (C), gegebenfalls (D) und gegebenenfalls von (A), (B), (C) und (D) verschiedenen Einheiten beziehen.

Durch diese Stoffmengenverhältnisse kann sichergestellt werden, dass das erfindungsgemäß eingesetzte Copoly(ester)carbonat eine oder mehrere, bevorzugt alle der folgenden Eigenschaften aufweist: eine hohe Glastemperatur, gute optische Eigenschaften wie z. B. Transparenz, gute mechanische Eigenschaften wie z. B. Duktilität bei Raumtemperatur, hohe thermische Stabilität, gute Stabilität gegen wässrige Medien, gute Heißwasserstabilität, gute Fettbeständigkeit, gute Beständigkeit gegenüber Lipidlösungen und gute Lösungsmittelbeständigkeit. Dadurch kann die erfindungsgemäße thermoplastische Zusammensetzung eine oder mehrere, bevorzugt alle der oben genannten Eigenschaften aufweisen.

Die Fachperson kann die Stoffmengen der unterschiedlichen Einheiten im erfindungsgemäß eingesetzten Copoly(ester)carbonat bestimmen. Bevorzugt können diese mittels ¹H-NMR-Spektroskopie bestimmt werden. Je nach Verfahren zur Herstellung des Copoly(ester)carbonats ist davon auszugehen, dass nahezu alle eingesetzten Monomere zum Polymer reagieren. Insbesondere konnte mit den Beispielen gezeigt werden, dass die Stoffmengenverhältnisse der Monomere sich auch im resultierenden Polymer wiederfinden. Dies bedeutet, dass die Fachperson durch die Stoffmengenverhältnisse der eingesetzten Monomere die Stoffmengenverhältnisse der resultierenden Einheiten im Polymer beeinflussen kann. Ebenso ist es bevorzugt, dass die definierten mol-% in dem erfindungsgemäß eingesetzten Copoly(ester)carbonat über ¹H-NMR-Spektroskopie bestimmt werden. Der Fachperson ist diese Methode bekannt. Das Copoly(ester)carbonat kann beispielsweise in CDCl₃ gelöst werden und die entsprechenden Peaks der Struktureinheiten identifiziert werden. Je nach eingesetzten Verbindungen, ist die Fachperson in der Lage, diese Peaks den Struktureinheiten zuzuordnen. Über die Integrale können die Verhältnisse und Anteile bestimmt werden. Auf der anderen Seite sind die erfindungsgemäßen mol-% auch bestimmbar über die eingesetzten Stoffmengen und Verhältnisse der Monomere. Dabei muss angenommen werden, dass alle Monomere im gleichen Verhältnis vollständig in das Copoly(ester)carbonat einbauen. So kann die Fachperson auch das Verhältnis im Vorhinein einstellen.

Ebenso ist es möglich, die Stoffmengenverhältnisse der resultierenden Einheiten im Polymer im Nachhinein mittels Totalverseifung zu bestimmen. Dazu kann das Polymer beispielsweise unter Rückfluss durch Natriummethoxid hydrolysiert werden. Die erhaltene Lösung kann im Anschluss angesäuert und bis zur Trockene eingeengt werden. Der Rückstand kann in geeigneten organischen Lösungsmitteln gelöst werden und die enthaltenen Verbindungen mittels HPLC analysiert werden. Eine entsprechende Kalibrierung und Vermessung mittels HPLC ist dem Fachmann bekannt.

Neben den Einheiten (A), (B), (C) und gegebenfalls (D) kann das erfindungsgemäß eingesetzte Copoly(ester)carbonat auch noch weitere von (A), (B), (C) und gegebenenfalls (D) verschiedene Einheiten aufweisen. Bevorzugt weist das erfindungsgemäß eingesetzte Copoly(ester)carbonat Einheit (E) auf, wobei 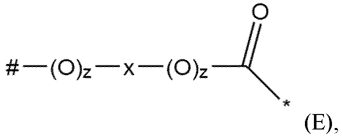 wobei beide z unabhängig von x gleichzeitig entweder 0 oder gleichzeitig 1 sind und jedes x unabhängig voneinander für eine lineare oder verzweigte Alkylen-Gruppe mit 4 bis 20, bevorzugt 5 bis 15 Kohlenstoffatomen, welche gegebenenfalls durch mindestens ein Heteroatom unterbrochen sein kann, eine Cycloalkylen-Gruppe mit 4 bis 20, bevorzugt 5 bis 15 Kohlenstoffatomen, welche gegebenenfalls durch mindestens ein Heteroatom unterbrochen sein kann und wobei die Cycloalkylen-Gruppe gegebenenfalls mehrere Cyclen enthalten kann, oder eine aromatische Gruppe steht und wobei die mit # und die mit * gekennzeichneten Positionen die Positionen sind, mit denen die Einheit (E) in das Copoly(ester)carbonat eingebunden ist, mit der Ausnahme, dass, wenn z in Formel (E) 0 ist, keine direkte Verknüpfung zweier Einheiten (E) miteinander vorliegt. Der Fachperson ist ersichtlich, dass diese Einheit (E) von der Einheit (D) verschieden sein muss. Besonders bevorzugt handelt es sich bei x in Einheit (E) um eine aromatische Gruppe, insbesondere bevorzugt um eine aromatische Gruppe mit bis zu 20 Kohlenstoffatomen, welche gegebenenfalls durch mindestens ein Heteroatom unterbrochen sein kann. Insbesondere bevorzugt handelt es sich bei x in Einheit (E) um eine Struktur der Formel (x1), (x2) oder (x3), mit 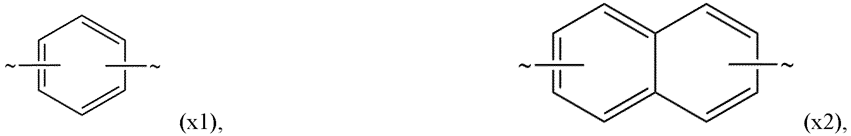 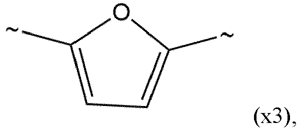 wobei die mit "~" gekennzeichneten Positionen in den Formeln (x1), (x2) und (x3) die Positionen sind, an denen sich jeweils die in Formel (E) gezeigten (O)_{z}-Gruppen befinden. Insbesondere bevorzugt handelt es sich bei x in Einheit (E) um eine Struktur der Formel (x1), (x2) oder (x3), wobei beide z gleichzeitig 0 sind.

Ebenso kann das erfindungsgemäß eingesetzte Copoly(ester)carbonat verzweigt sein. Dies kann durch die Verwendung von Mehrfach-funktionellen Alkoholen wie zum Beispiel Glycerin, Trimethylolpropan oder Tris(4-hydroxyphenyl)ethan (THPE) etc. oder Mehrfach-funktionellen Carbonsäuren wie zum Beispiel Zitronensäure, Trimellitsäure etc. bei der Synthese des erfindungsgemäß eingesetzten Copoly(ester)carbonats beeinflusst werden.

Das erfindungsgemäß eingesetzte Copoly(ester)carbonat umfasst bevorzugt höchstens 25 mol-%, besonders bevorzugt höchstens 20 mol-%, weiterhin bevorzugt höchstens 10 mol-% und ganz besonders bevorzugt höchstens 5 mol-% aromatische Gruppen. Dabei sind die gegebenenfalls vorhandenen Endgruppen jedoch bevorzugt ausgenommen. Es ist bevorzugt, dass Einheit (E) höchstens zu 20 mol-%, weiterhin bevorzugt höchstens zu 10 mol-% und ganz besonders bevorzugt höchstens zu 5 mol-% im erfindungsgemäß eingesetzten Copoly(ester)carbonat vorhanden ist. Dabei ist es insbesondere bevorzugt, dass es sich bei x in Einheit (E) um eine Struktur der Formel (x1), (x2) oder (x3) handelt, wobei beide z gleichzeitig 0 sind.

Das erfindungsgemäß eingesetzte Copoly(ester)carbonat umfasst bevorzugt Endgruppen. Diese entstehen bevorzugt durch den Einsatz von Kettenabbrechern während der Synthese. Als Kettenabbrecher können monofunktionelle Säuren oder Alkohole u.a. auch Phenole eingesetzt werden. Besonders bevorzugt umfasst das erfindungsgemäß eingesetzte Copoly(ester)carbonat Endgruppen der Formel (Z) 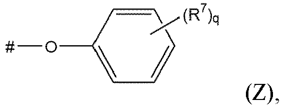 wobei jedes R⁷ unabhängig voneinander für Wasserstoff, eine Alkylgruppe mit 1 bis 34 Kohlenstoffatomen, eine Aralkylgruppe mit 7 bis 34 Kohlenstoffatomen, eine Arylgruppe mit 6 bis 34 Kohlenstoffatomen oder eine -COO-R'-Gruppe steht, wobei R' für eine Alkylgruppe mit 1 bis 34 Kohlenstoffatomen, eine Aralkylgruppe mit 7 bis 34 Kohlenstoffatomen, eine Arylgruppe mit 6 bis 34 Kohlenstoffatomen steht und jedes q unabhängig voneinander für 1 bis 5 steht und die mit # gekennzeichnete Position die Position ist, mit denen die Einheit (Z) in das Copoly(ester)carbonat angebunden ist. Es ist ersichtlich, dass die mit # gekennzeichnete Position an die mit * gekennzeichnete Position der anderen Einheiten angebunden ist. Damit kann das erfindungsgemäß eingesetzte Copoly(ester)carbonat aromatische Einheiten als Endgruppen aufweisen. Diese beeinflussen die intrinsisiche Witterungsstabilität des Polymers nicht nachteilig, da ihre Konzentration sehr gering ist. Besonders bevorzugt ist q in Einheit (Z) 1. Ebenso bevorzugt steht R⁷ für Wasserstoff oder für -COOCH₃, ganz besonders bevorzugt für Wasserstoff. Besonders bevorzugt umfasst das erfindungsgemäß eingesetzte Copoly(ester)carbonat Endgruppen, welche ausgewählt sind aus der Gruppe, bestehend aus der Formel (Z), -OH, -COOH und beliebigen Mischungen dieser Gruppen. Dabei ist für die Fachperson ersichtlich, dass durch Formel (Z) insbesondere Phenylesterendgruppen und/oder Phenylcarbonatendgruppen, umfasst sind. Freie Säure- oder OH-Endgruppen können beispielsweise durch den Einsatz von Epoxygruppen oder Carbamatderivaten reduziert werden. Solche Reaktionen sind der Fachperson bekannt.

Es ist des Weiteren bevorzugt, dass das erfindungsgemäß eingesetzte Copoly(ester)carbonat zu mindestens 50 mol-%, besonders bevorzugt zu mindestens 70 mol-% und ganz besonders bevorzugt zu mindestens 75 mol-% biobasiert ist. Im Sinne der vorliegenden Erfindung wird unter dem Ausdruck "biobasiert" verstanden, dass die betreffende chemische Verbindung zum Anmeldezeitpunkt durch einen erneuerbaren und/oder nachwachsenden Rohstoff zugänglich, erhältlich und/oder bevorzugt ein solcher erneuerbarer und/oder nachwachsender Rohstoff ist. Unter einem erneuerbaren und/oder nachwachsenden Rohstoff wird bevorzugt ein Rohstoff verstanden, welcher durch natürliche Prozesse mit einer Geschwindigkeit regeneriert wird, die mit ihrer Abbaurate vergleichbar ist (Siehe CEN/TS 16295:2012). Der Ausdruck dient insbesondere der Abgrenzung zu Rohstoffen aus fossilen Rohstoffen, auch als petrobasiert bezeichnet. Ob ein Rohstoff biobasiert ist oder petrobasiert, kann durch die Messung von Kohlenstoffisotopen in dem Rohstoff festgestellt werden, da die relativen Mengen des Kohlenstoffisotops C¹⁴ geringer sind in fossilen Rohstoffen. Dies kann beispielsweise gemäß der ASTM D6866-18 (2018) oder der ISO16620-1 bis -5 (2015) oder der DIN SPEC 91236 2011-07 erfolgen. Erfindungsgemäß wird der Begriff "biobasiert" bevorzugt für solche Verbindungen verwendet, welche einen C¹⁴ Isotopengehalt von über 0,1 x 10⁻¹², besonders bevorzugt von über 0,2 x 10⁻¹², und ganz besonders bevorzugt von über 0,3 x 10⁻¹²aufweisen. Insbesondere sind Isosorbid und auch Dimerfettsäure oder das durch Reduktion von Dimerfettsäure erhaltene Dimer-Diol biobasiert.

Das erfindungsgemäß eingesetzte Copoly(ester)carbonat weist bevorzugt eine relative Lösungsviskosität oberhalb von 1,20 auf, besonders bevorzugt von 1,21 bis 1,65, weiter bevorzugt von 1,22 bis 1,63, insbesondere bevorzugt von 1,23 bis 1,62, ebenso bevorzugt von 1,26 bis 1,55 und am bevorzugsten 1,26 bis 1,40. Gemäß der vorliegenden Erfindung wird die relative Lösungsviskosität (ηrel; auch als eta rel bezeichnet) bevorzugt in Dichlormethan bei einer Konzentration von 5 g/l bei 25 °C mit einem Ubbelohde-Viskosimeter bestimmt. Der Fachperson ist die Bestimmung der relativen Lösungsviskosität mittels Ubbelohde-Viskosimeter bekannt. Erfindungsgemäß wird diese bevorzugt gemäß DIN 51562-3; 1985-05 durchgeführt. Dabei werden die Durchlaufzeiten des zu vermessenden Copoly(ester)carbonats durch das Ubbelohde-Viskosimeter gemessen, um anschließend den Viskositätsunterschied zwischen Polymerlösung und seinem Lösungsmittel zu ermitteln. Dazu wird zunächst eine Kalibrierung des Ubbelohde-Viskosimeters mittels Vermessung der reinen Lösungsmittel Dichlormethan, Trichlorethylen und Tetrachlorethylen durchgeführt (dabei erfolgen immer mindestens 3 Messungen, höchstens 9 Messungen). Daraufhin erfolgt die eigentliche Kalibrierung mit dem Lösungsmittel Dichlormethan. Im Anschluss wird die Polymerprobe eingewogen, in Dichlormethan gelöst und für diese Lösung dann dreimal die Durchflusszeit bestimmt. Der Mittelwert der Durchflusszeiten wird über die Hagenbach-Korrektur korrigiert und die relative Lösungsviskosität errechnet.

Durch diese bevorzugte relative Lösungsviskosität wird sichergestellt, dass die erfindungsgemäßen thermoplastischen Zusammensetzungen umfassend das erfindungsgemäß eingesetzte Copoly(ester)carbonat ausreichende mechanische Eigenschaften haben. "Ausreichend" ist an dieser Stelle so zu verstehen, dass sie zu Zusammensetzungen umfassend klassische aromatische Polycarbonate vergleichbare mechanische Eigenschaften, insbesondere eine Duktilität in einem ungekerbten Schlagversuch bei Raumtemperatur, aufzuweisen.

### Additive (II)

Die erfindungsgemäße thermoplastische Zusammensetzung umfasst mindestens ein Additiv, welches ausgewählt ist aus der Gruppe bestehend aus
(IIa) einem UV-Absorber ausgewählt aus der Gruppe, bestehend aus Benzotriazol-Verbindungen, Benzophenon-Verbindungen, Triazin-Verbindungen, Benzoat-Verbindungen, Phenylsalicylat-Verbindungen, Cyanacrylat-Verbindungen, Malonsäureester-Verbindungen und Oxalanilid-Verbindungen,
(IIb) einem sterisch gehinderten Amin-Lichtstabilisator,
(IIc) einem Bläuungsmittel,
(IId) einem Antioxidationsmittel,
(IIe) einem Gleit- und Entformungsmittel ausgewählt aus der Gruppe, bestehend aus Fettsäuren mit 10 bis 30 Kohlenstoffatomen, deren Fettsäureester von ein- oder mehrwertigen Alkoholen, natürliche tierische Wachse, natürliche pflanzliche Wachse, natürliche Erdöl-basierte Wachse, Silikonöle und Organopolysiloxane,
(IIf) einem Säure-haltigen Additiv,
(IIg) einem OH- und Säuregruppenfänger,
(IIh) einer alkalischen Verbindung,
(IIi) einem Reduktionsmittel,
(IIj) einem Antistatikum ausgewählt aus der Gruppe, bestehend aus Polyetheresteramiden, Glycerolmonostearat, Ammoniumsalze der Dodecylbenzolsulfonsäure, Phosphoniumsalze der Dodecylbenzolsulfonsäure, quarternäre Ammoniumsalze einer Perfluoralkylsulfonsäure, Maleinsäureanhydridmonoglycerid und Maleinsäureanhydrid-diglycerid,
(IIk) einem Farbmittel ausgewählt aus der Gruppe der anorganischen Pigmente, welche Ruß, Titanoxid, Zinkweiß, Eisenoxidrot, Chromoxid, Eisenschwarz, Titangelb, Zink-Eisenbraun, Kupfer-Chromschwarz, Kupfer-Eisenschwarz und oxidbasierte Pigmente umfassen, organischen Pigmenten und organischen Farbstoffen, welche Phthalocyanin-Farbstoffe und -Pigmente; kondensierte Polycyclen wie Azo-, Thioindigo-, Perinon-, Perylen-, Chinacridon-, Dioxazin-, Isoindolinon- und Chinophthalon-Farbstoffe und -Pigmente, Anthrachinon-, Perinon-, Perylen-, Methin-, Chinolin-, Heterocyclen- und Methyl-basierte Farbstoffe und Pigmente umfassen,
(IIl) einem anorganischen Füllstoff,
(IIm) einem Flammschutzmittel ausgewählt aus der Gruppe, bestehend aus Phosphorverbindungs-basierten, Halogenverbindungs-basierten, Metallsulfonatbasierten und Siliciumverbindungs-basierten Flammschutzmittel,
(IIn) einem polymeren Blendpartner ausgewählt aus der Gruppe, bestehend aus Poly(milchsäure), Poly(cyclohexandimethanol-cyclohexandicarboxylat), Poly(propylenterephthalat), Polycarbonaten, Polyamid 46, Polyamid 12, semiaromatischen Polyamiden, kautschuk-modifizierten Pfropfpolymeren, Vinyl(co)polymeren ausgewählt aus der Gruppe der (Co)Polymerisate aus
B.1 50 bis 99 Gew.-%, bevorzugt 65 bis 85 Gew.-%, besonders bevorzugt 70 bis 80 Gew.-% bezogen auf das (Co)Polymerisat mindestens eines Monomeren ausgewählt aus der Gruppe der Vinylaromaten, kernsubstituierten Vinylaromaten und (Meth)Acrylsäure-(C1-C8)-Alkylester und
B.2 1 bis 50 Gew.-%, bevorzugt 15 bis 35 Gew.-%, besonders bevorzugt 20 bis 30 Gew.-% bezogen auf das (Co)Polymerisat mindestens eines Monomeren ausgewählt aus der Gruppe der Vinylcyanide, (Meth) Acrylsäure-(C1-C8)-Alkylester, ungesättigte Carbonsäuren und Derivate ungesättigter Carbonsäuren, Polyolefinen ausgewählt aus der Gruppe bestehend aus Polyethylen, Ethylen-Copolymeren, Polypropylen und 4-Methylpenten-1-Harzen, Polyacetalen, Poly(amid-imiden), Poly(ethersulfonen), Polyimiden, Poly(phenylenoxid), Poly(phenylensulfid), Poly(phenylsulfon), Polyetheretherketon, flüssigkristallinen Polyestern, Poly(vinylchlorid) und Fluorharzen.

### UV-Absorber (IIa)

Der erfindungsgemäß einsetzbare UV-Absorber wird ausgewählt aus der Gruppe, bestehend aus Benzotriazol-Verbindungen, Benzophenon-Verbindungen, Triazin-Verbindungen, Benzoat-Verbindungen, Phenylsalicylat-Verbindungen, Cyanacrylat-Verbindungen, Malonsäureester-Verbindungen und Oxalanilid-Verbindungen. Diese UV-Absorber können einzeln oder in Kombination von zwei oder mehreren davon verwendet werden. Die Molekulargewichte dieser UV-Absorber sind nicht besonders beschränkt. Die Molekulargewichte liegen im Allgemeinen bei 200 g/mol oder höher, vorzugsweise 250 g/mol oder höher, und im Allgemeinen bei 600 g/mol oder niedriger, vorzugsweise 450 g/mol oder niedriger, noch bevorzugter 400 g/mol oder niedriger. Falls die Molekulargewichte zu niedrig sind, besteht die Möglichkeit, dass die UV-Beständigkeit der erfindungsgemäßen thermoplastischen Zusammensetzungen während der langfristigen Verwendung abnimmt. Falls die Molekulargewichte zu hoch sind, besteht die Möglichkeit, dass die Transparenz der erfindungsgemäßen thermoplastischen Zusammensetzungen während der langfristigen Verwendung abnimmt.

Spezifische Beispiele für die Benzotriazol-Verbindungen umfassen 2-(2'-Hydroxy-3'-methyl-5'-hexylphenyl)benzotriazol, 2-(2'-Hydroxy-3'-t-butyl-5'-hexylphenyl)benzotriazol, 2-(2'-Hydroxy-3',5'-di-t-butylphenyl)benzotriazol, 2-(2'-Hydroxy-3'-methyl-5'-t-octylphenyl)benzotriazol, 2-(2'-Hydroxy-5'-t-dodecylphenyl)benzotriazol, 2-(2'-Hydroxy-3'-methyl-5'-t-dodecylphenyl)benzotriazol, 2-(2'-Hydroxy-5'-t-butylphenyl)benzotriazol und Methyl-3-(3-(2H-benzotriazol-2-yl)-5-t-butyl-4-hydroxyphenyl)propionat.

Bevorzugte Benzotriazol-Derivate haben die allgemeine Struktur (15) 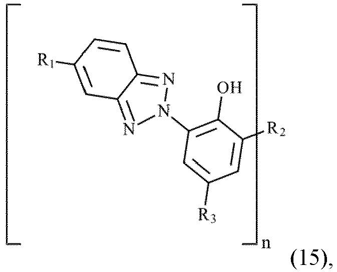 in der R₁ für Halogen, bevorzugt Chlor, oder Wasserstoff steht
R₂ und R₃ unabhängig voneinander Wasserstoff, Alkyl oder Aralkyl bedeuten können
n für 1 oder 2 steht.

Erfindungsgemäß geeignete Benzotriazol-Derivate werden beispielsweise von der BASF SE (Deutschland) unter den Handelsnamen Tinuvin 360, Tinuvin P, Tinuvin 234, Tinuvin 312, Tinuvin 326, Tinuvin 328, Tinuvin 329, Tinuvin 350 und Tinuvin 571 angeboten. Besonders geeignete Benzotriazol-Derivate sind die Verbindungen gemäß den Strukturen (16), (17), (18) oder (19):

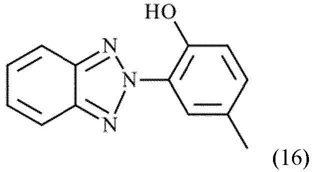

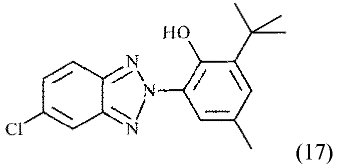

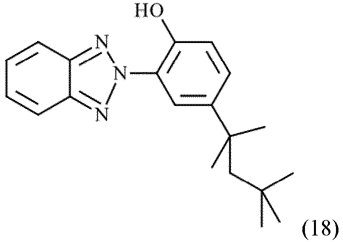

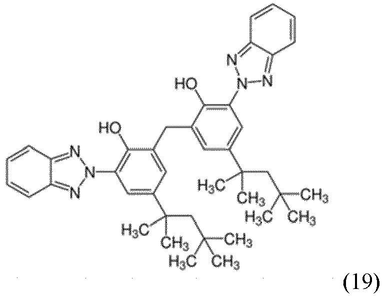

Struktur (16) ist als CAS 2440-22-4 klassifiziert und als Tinuvin P (BASF SE, Deutschland) kommerziell erhältlich. Struktur (17) ist als CAS 3896-11-5 klassifiziert und als Tinuvin 326 (BASF SE, Deutschland) kommerziell erhältlich. Struktur (18) ist als CAS 3147-75-9 klassifiziert und als Tinuvin 329 (BASF SE, Deutschland) kommerziell erhältlich. Struktur (19) ist als Tinuvin 360 (BASF SE, Deutschland) erhältlich (CAS: 103597-45-1).

### Ebenso kann der UV-Absorber auch eines der folgenden Benzotriazole sein:

2-[2-hydroxy-3,5-bis(α,α-dimethylbenzyl)phenyl]-2H-benzotriazol (TINUVIN 234), TINUVIN 320 (2-(2H-benzotriazol-2-yl)-4,6-di-tert-butylphenol), 2-[2-hydroxy-3-[(1,3,4,5,6,7-hexahydro-1,3-dioxo-2H-isoindol-2-yl)methyl]-5-methylphenyl]-2H-benzotriazol (Sumisorb 250), 2-(3,5-di-tert-amyl-2-hydroxyphenyl)benzotriazol (Sumisorb 350), Sumisorb 340, 2,2'-methylenebis[6-(benzotriazol-2-yl)-4-tert-octylphenol] (LA-31), 2-(3'-t-butyl-2'-hydroxy-5'-methylphenyl)-5-chlorobenzotriazol (LA-36, Sumisorb 300), 2-(3',5'-di-t-butyl-2'-hydroxyphenyl)-5-chlorobenzotriazol (Tinuvin 327).

Erfindungsgemäß geeignete Triazin-Derivate werden beispielsweise von der BASF SE (Deutschland) unter den Handelsnamen Tinuvin 1577 und Tinuvin 1600, Cyasorb 1164 von Solvay (Brüssel, Belgien) sowie von der Adeka Palmarole SAS (Mulhouse, Frankreich) unter dem Handelsnamen ADK Stab LA-46 angeboten.

### Besonders bevorzugt ist ein 2-(4,6-Diaryl-1,3,5-triazin-2-yl)-5-(alkoxy)phenol der allgemeinen Formel (22)

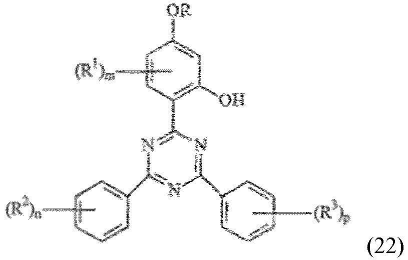

in der
R¹, R² und R³ unabhängig voneinander für gleiche oder verschiedene Reste ausgewählt aus der Gruppe bestehend aus C1- bis C8-Alkyl oder C1- bis C8-Aryl,
n und p unabhängig voneinander jeweils für eine ganze Zahl von 0 bis 5, bevorzugt für 0, 1 oder 2, besonders bevorzugt für 0 oder 1,
m für eine ganze Zahl von 0 bis 4, bevorzugt für 0 oder 1, besonders bevorzugt für 0 und
R für einen beliebigen organischen Rest aus Kohlenstoff, Wasserstoff und optional Sauerstoff, bevorzugt für C1- bis C10-Alkyl
stehen,
wobei R² und R³ bevorzugt für Methyl oder Phenyl, besonders bevorzugt für Phenyl steht. Ganz besonders bevorzut ist ein Triazin-Derivat der Formel (23)

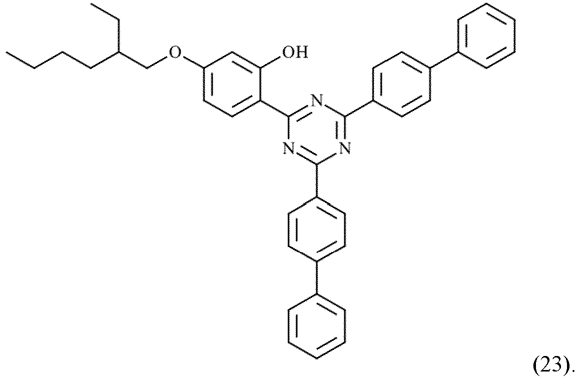

Diese ist unter dem Handelsnamen Tinuvin 1600 (BASF SE, Deutschland) kommerziell verfügbar.

Weitere bevorzugte Triazin-Verbindungen umfassen 2-[4-[(2-Hydroxy-3-dodecyloxypropyl)oxy]-2-hydroxyphenyl]-4,6-bis(2,4-dimethylphenyl)-1,3,5-triazin, 2,4-bis(2,4-dimethylphenyl)-6-(2-hydroxy-4-isooctyloxyphenyl)-s-triazin und 2-(4,6-diphenyl-1,3,5-triazin-2-yl)-5-[(hexyl)oxy]phenol (Tinuvin 1577).

### Ein bevorzugter UV-Absorber aus der Gruppe der Hydroxybenzophenon-Derivate ist die Verbindung 2-Hydroxy-4-octoxybenzophenon gemäß Struktur (20)

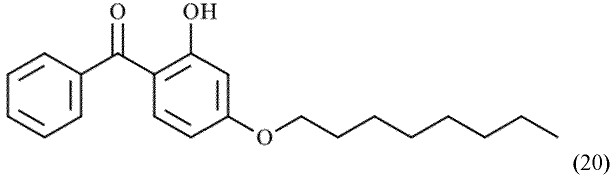

Sie ist als Songsorb 8100 (CAS 1843-05-06, Songwon, Korea.) kommerziell verfügbar. Weitere kommerziell verfügbare Additive dieser Klasse sind ADK Stab LA-12 (CAS 4221-80-1, Adeka, Japan), ADK Stab LA-51 (CAS 57472-50-1, Adeka, Japan), Lowilite 20 (CAS 131-57-7, Si Group, USA) sowie Lowilite 24 (CAS 131-56-6, Si Group USA). Ferner bevorzugt sind noch 2,2'-Dihydroxybenzophenon und 2,2',4,4'-Tetrahydroxybenzophenon.

Ein bevorzugter UV-Absorber der Cyanoacrylat-Derivate ist beispielsweise die Verbindung gemäß Struktur (24)

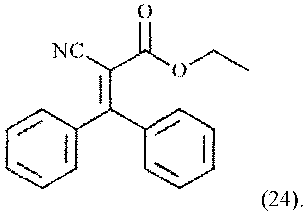

Sie ist als Uvinol 3035 (CAS 5232-99-5, BASF SE, Deutschland) kommerziell verfügbar. Ein weiteres Beispiel ist 2'-Ethylhexyl-2-cyano-3,3-diphenylacrylat.

### Erfindungsgemäß geeignete UV Absorber vom Oxalinid-Typ haben die allgemeine Struktur (21)

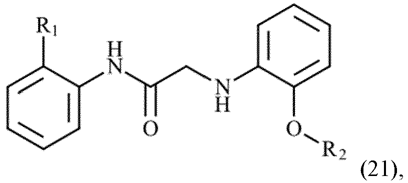

wobei R₁ und R₂ jeweils unabhängig voneinander Alkyl oder Aralkyl, bevorzugt Alkyl mit 1 bis 10 Kohlenstoffatomen bedeuten können.

Ein kommerziell verfügbarer UV Absorber vom Oxalinid-Typ ist beispielsweise die Verbindung gemäß Struktur (25) (CAS 23949-66-8, Tinuvin 312, BASF SE, Deutschland).

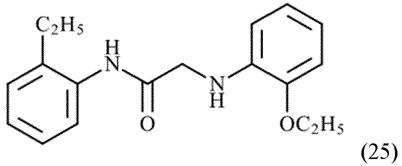

Besonders bevorzugt wird der UV-Absorber ausgewählt aus der Gruppe bestehend aus 2-(2'-Hydroxy-3'-t-butyl-5'-hexylphenyl)benzotriazol, 2-(2'-Hydroxy-5'-t-butylphenyl)benzotriazol, 2-[4-[(2-Hydroxy-3-dodecyloxypropyl)oxy]-2-hydroxyphenyl]-4,6-bis(2,4-dimethylphenyl)-1,3,5-triazin und 2,2,4,4'-Tetrahydroxybenzophenon.

Erfindungsgemäß wird der mindestens eine UV-Absorber bevorzugt in Mengen von 0 bis 10 Masseteilen, bevorzugt 0,05 bis 10,00 Masseteilen, weiter bevorzugt von 0,10 bis 1,00 Masseteilen, noch weiter bevorzugt 0,10 bis 0,50 Masseteilen sowie ganz besonders bevorzugt 0,10 bis 0,30 Masseteilen eingesetzt, wobei die Massenteile bezogen sind auf 100 Massenteile der Komponente (I).

### Sterisch gehinderte Amin-Lichtstabilisatoren (IIb)

Die erfindungsgemäße thermoplastische Zusammensetzung kann einen sterisch gehinderten Amin-Lichtstabilisator enthalten.

Der sterisch gehinderte Amin-Lichtstabilisator hat vorzugsweise ein Molekulargewicht von 1.000 g/mol oder weniger. In diesem Fall kann die Witterungsbeständigkeit des aus der thermoplastischen Zusammensetzung bzw. Formmasse erhaltenen Formkörpers weiter verbessert werden. Aus demselben Gesichtspunkt hat der sterisch gehinderte Amin-Lichtstabilisator vorzugsweise ein Molekulargewicht von 900 g/mol oder weniger. Das Molekulargewicht des sterisch gehinderten Amin-Lichtstabilisators beträgt vorzugsweise 300 g/mol oder mehr. In diesem Fall kann die Wärmebeständigkeit der erfindungsgemäßen thermoplastischen Zusammensetzung verbessert werden. Ebenso wird die Verschmutzung der Form während des Formens zuverlässiger verhindert. Dadurch kann ein erfindungsgemäßes Formteil mit besserer Oberflächenbeschaffenheit erhalten werden. Aus demselben Gesichtspunkt beträgt das Molekulargewicht des Lichtstabilisators noch bevorzugter 400 g/mol oder mehr.

Der sterisch gehinderte Amin-Lichtstabilisator ist vorzugsweise eine Verbindung mit einer Piperidin-Struktur. Die hier definierte Piperidin-Struktur muss lediglich eine gesättigte 6-gliedrige Amin-Struktur sein und schließt auch solche ein, bei denen ein Teil der Piperidin-Struktur durch einen Substituenten ersetzt ist. Beispiele für den Substituenten umfassen eine Alkylgruppe mit 4 oder weniger Kohlenstoffatomen, wobei eine Methylgruppe besonders bevorzugt ist. Der sterisch gehinderte Amin-Lichtstabilisator ist noch bevorzugter eine Verbindung mit mehreren Piperidin-Strukturen und weiter bevorzugt eine Verbindung, bei der die mehreren Piperidin-Strukturen durch eine Esterstruktur verbunden sind.

Bevorzugt weist der sterisch gehinderte Amin-Lichtstabilisator eine oder mehrere Struktureinheiten gemäß der Formel (30) auf, 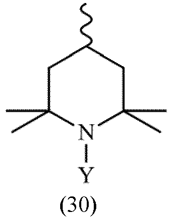
wobei in der Formel (30)
Y für H, R² oder OR² steht und
R² für verzweigtes oder unverzweigtes C₁-C₁₃-Alkyl, C₂-C₂₀-Alkenyl, C₆-C₁₂-Aryl oder -CO-C₁-C₁₈-Alkyl steht.

Beispiele für derartige sterisch gehinderte Amin-Lichtstabilisatoren sind: 4-Piperidinol, 2,2,6,6-Tetramethyl-4-benzoat, Bis(2,2,6,6-tetramethyl-piperidyl)sebacat, Bis(1,2,2,6,6-Pentamethyl-4-piperidyl)sebacat, Tetrakis(2,2,6,6-tetramethylpiperidin-4-carbonsäure)-1,2,3,4-butantetrayl, Kondensationsprodukt aus 2,2,6,6-Tetramethyl-pyrrolidinol, Tridecylalkohol und 1,2,3,4-Butantetracarbonsäure, 1,2,2,6,6-Pentamethyl-4-piperidyl und Tridecylalkohol und Tridecyl-1,2,3,4-Butantetracarboxylat, Bis(1,2,2,6,6-pentamethyl-4-piperidyl)[[3,5-bis(1,1-dimethylethyl)-4-hydroxyphenyl]methyl]butylmalonat, Decandisäure-bis(2,2,6,6-tetramethyl-1-(octyloxy)-4-piperidinyl)ester, Reaktionsprodukt von 1,1-Dimethylethylhydroperoxid und Octan, 1-[2-[3-(3,5-Di-tert-butyl-4-hydroxyphenyl)propionyloxy]ethyl]-4-[3-(3,5-di-tert-butyl-4-hydroxyphenyl)propionyloxy]ethyl]-2,2,6,6-tetramethylpiperidin, Tetrakis(1,2,2,6,6-pentamethyl-4-piperidyl)-1,2,3,4-butantetracarboxylat, Poly[{6-(1,1,3,3-tetramethylbutyl)amino-1,3,5-triazin-2,4-diyl} { (2,2,6,6-tetramethyl-4-piperidyl)imino}hexamethylen{(2,2,6,6-tetramethyl-4-piperidyl)imino}], N,N'-Bis(2,2,6,6-tetramethyl-4-piperidyl)-1,6-hexandiamin-Polymer und 2,4,6-Trichlor-1,3,5-triazin, Kondensationsprodukt aus 1,2,3,4-Butantetracarbonsäure und 2,2,6,6-Tetramethyl4-piperidinol und β,β,β,β-Tetramethyl-3,9-(2,4,8,10-tetraoxaspiro[5,5]undecan-diethanol), N,N'-Bis(3-aminopropyl)ethylendiamin-2,4-bis[N-butyl-N-(1,2,2,6,6-pentamethyl-4-piperidyl)amino]-6-chlor-1,3,5-triazin-Kondensat und Dimethyl-1-(2-hydroxyethyl)-4-hydroxy-2,2,6,6-tetramethylpiperidin-Polykondensat von Succinat.

Der Gehalt des sterisch gehinderten Amin-Lichtstabilisators beträgt vorzugsweise 0 bis 5 Massenteile, besonders bevorzugt 0,001 bis 5 Massenteile, wobei die Massenteile bezogen sind auf 100 Massenteile der Komponente (I). In diesem Fall können die Witterungsbeständigkeit der erfindungsgemäßen thermoplastischen Zusammensetzung, der daraus hergestellten Formmasse und des daraus hergestellten Formkörpers weiter verbessert und Verfärbungen und dergleichen weiter verhindert werden. Dadurch ist es zum Beispiel möglich, wenn die thermoplastische Zusammensetzung durch Zugabe eines Farbmittels tiefschwarz eingefärbt wird, das tiefschwarze Produkt bezüglich Farbtiefe und Glanz über eine längere Bewitterungsdauer zu erhalten. Eine solche thermoplastische Zusammensetzung eignet sich beispielsweise für die Verwendung in Automobil-Innen- und -Außenprodukten. Der Gehalt des sterisch gehinderten Amin-Lichtstabilisators beträgt noch bevorzugter 0,005 bis 3 Massenteile, und am meisten bevorzugt 0,01 bis 1 Massenteil.

### Bläuungsmittel (IIc)

Durch die Verarbeitung oder durch anderweitige thermische Schädigung können thermoplastische Zusammensetzungen einen Gelbstich aufweisen. Um einen farblosen Eindruck zu erhalten und den Gelbstich auszugleichen, können daher erfindungsgemäß Bläuungsmittel verwendet werden. Ferner kann das Bläuungsmittel in die erfindungsgemäßen thermoplastischen Zusammensetzungen eingearbeitet werden, um die durch das Polymer oder den gegebenenfalls vorhandenen UV-Absorber verursachte Gelbfärbung z.B. für optische Anwendungen wie z.B. für der Linsen zu eliminieren. Jedes Bläuungsmittel, dass üblicherweise in Polycarbonatzusammensetzungen verwendet wird, kann ohne besondere Probleme eingesetzt werden. Im Allgemeinen werden Anthrachinonfarbstoffe bevorzugt, da diese Farbstoffe leicht verfügbar sind. Hinsichtlich spezifischer Bläuungsmittel umfassen repräsentative Beispiele den Trivial-Namen Solvent Violet 13 [C.I.-Nr. (Color Index Nr.) 60725], Solvent Violet 31 [C.I.-Nr. 68210], Solvent Violet 33 [C.I.-Nr. 60725], Solvent Blue 94 [C.I.-Nr. 61500], Solvent Violet 36 [C.I.-Nr. 68210], Solvent Blue 97 ["Macrolex Violet RR", hergestellt von Lanxess] und Solvent Blue 45 [C.I.-Nr. 61110]. Diese Bläuungsmittel können einzeln oder in Kombination von zwei oder mehreren verwendet werden. Diese Bläuungsmittel können in einer Menge von im Allgemeinen 0,1 × 10⁻⁵ bis 2× 10⁻⁴ Masseteilen eingearbeitet werden, wobei die Massenteile jeweils bezogen sind auf 100 Massenteile der Komponente (I).

### Antioxidationsmittel (IId)

Ferner kann die erfindungsgemäße thermoplastische Zusammensetzung ein Antioxidationsmittel enthalten. Der Fachperson ist bekannt, dass Antioxidationsmittel häufig auch als Thermostabilisatoren bezeichnet werden.

Bevorzugt ist das Antioxidationsmittel ausgewählt aus sterisch gehinderten Phenolen, einem phosphorhaltigen Antioxidationsmittel und einem schwefelhaltigen Antioxidationsmittel.

Sterisch gehinderte Phenole als Antioxidationsmittel sind in der Polycarbonatchemie bekannt. Bevorzugt handelt es sich dabei um eine Verbindung der allgemeinen Struktur (7a) oder (7b) 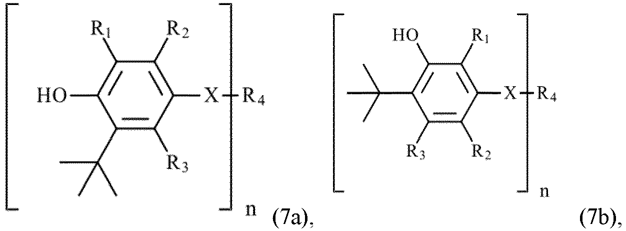 wobei n 1, 2, 3 oder 4 bedeutet,
R₁, R₂ und R₃ jeweils unabhängig voneinander für C₁- bis C₄-Alkyl oder Wasserstoff stehen,
X für eine direkte Bindung oder einen organischen Rest mit C₁- bis C₆₀- steht und der organische Rest Sauerstoff und/oder Stickstoff enthalten kann,
R₄ für eine direkte Bindung, Kohlenstoff, C₁-C₈ Alkyl, Aryl oder eine Struktur gemäß Formel (8a) (8b) oder (8c) steht.

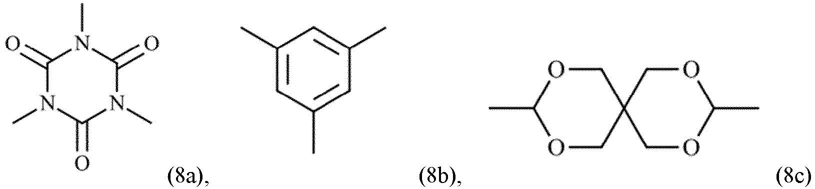

Besonders bevorzugt ist die Komponente C ausgewählt aus mindestens einer Verbindung gemäß den Strukturen (9), (10), (11) und (12).

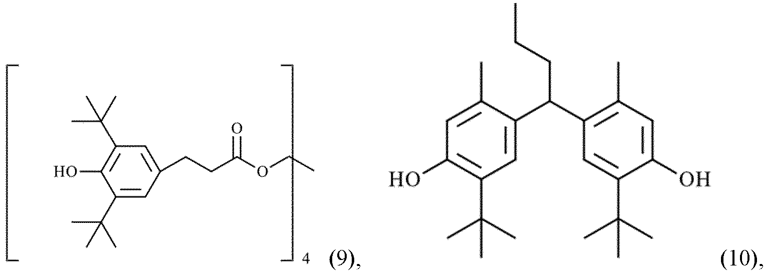

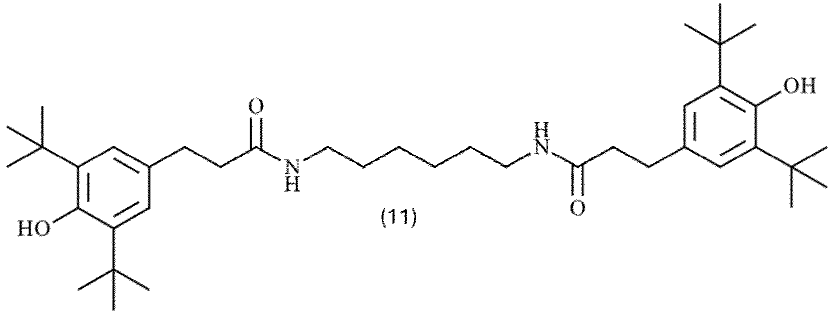

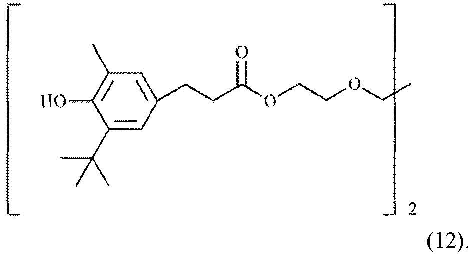

Die Verbindung (9) ist als CAS: 6683-19-8 klassifiziert und kommerziell unter dem Namen ADK Stab AO-60 der Firma Adeka (Japan) verfügbar, die Verbindung (10) ist als CAS: 85-60-9 klassifiziert und kommerziell unter dem Namen. Songnox 4425 der Firma Songwon Industrial Group (Südkorea) verfügbar, die Verbindung (11) ist als CAS: 23128-74 klassifiziert und kommerziell unter dem Namen. Songnox 1098 der Firma Songwon Industrial Group (Südkorea) verfügbar und die Verbindung (12) ist als CAS: 36443-68-2 klassifiziert und kommerziell unter dem Namen Irganox 245 der Firma BASF SE (Deutschland) verfügbar.

Weiterhin bevorzugte sterisch gehinderte Phenole sind Verbindungen der Formeln (31), (32), (33) oder (34)

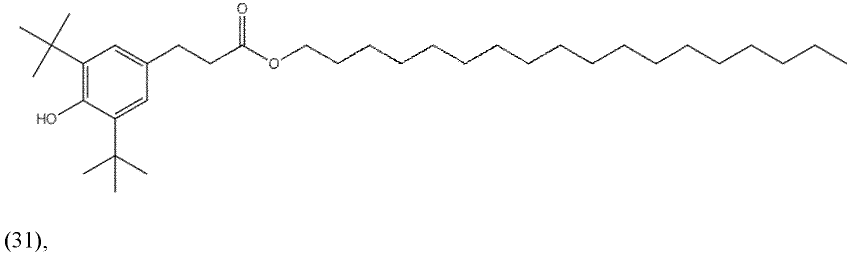

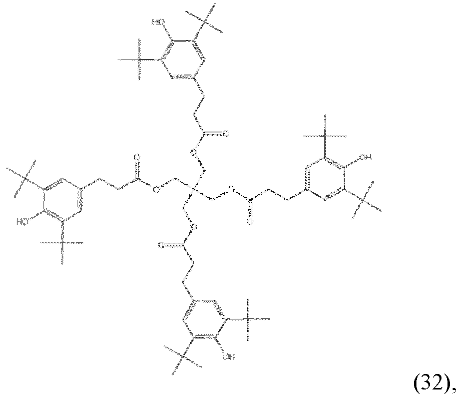

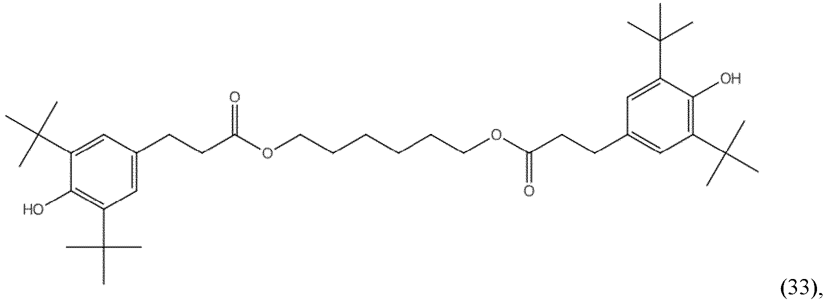

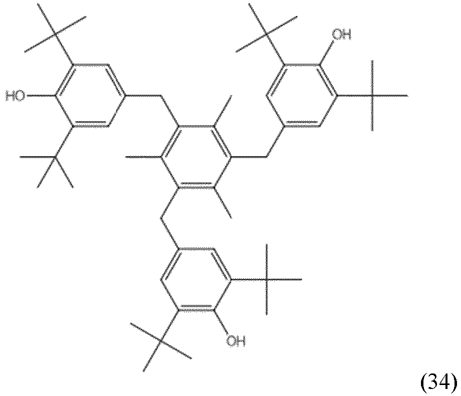

Die Verbindung der Formel (31) ist als CAS: 2082-79-3 klassifiziert und kommerziell unter dem Namen Irganox 1076 der Firma BASF SE (Deutschland) verfügbar. Die Verbindung der Formel (32) ist als CAS: 6683-19-8 klassifiziert und kommerziell unter dem Namen Irganox 1010 der Firma BASF SE (Deutschland) verfügbar. Die Verbindung der Formel (33) ist als CAS: 35074-77-2 klassifiziert und kommerziell unter dem Namen Irganox 259 der Firma BASF SE (Deutschland) verfügbar. Die Verbindung der Formel (34) ist als CAS: 1709-70-2 klassifiziert und kommerziell unter dem Namen ADK Stab AO 330 verfügbar.

Bei dem Antioxidationsmittel kann es sich auch um ein Schwefel-haltiges Antioxidationsmittel handeln. Ein schwefelhaltiges Antioxidationsmittel kann beispielsweise eine Struktur gemäß R₁-CH₂-(S)ₓ-CH₂-R₂, aufweisen, wobei x = 1 oder 2 ist und wo R₁ und R₂ gleich oder verschieden sein können und aromatische oder aliphatische Gruppen darstellen. Bevorzugt handelt es sich bei R₁ und R₂ um aliphatische Gruppen, die linear oder verzweigt sein können und funktionelle Gruppen enthalten können.

Beispiele von kommerziell verfügbaren schwefelhaltigen Antioxidationsmitteln sind Dilauryl-3,3'-thiodipropionate (CAS 123-28-4), Distearyl-3,3'-thiodipropionat (CAS 693-36-7), Ditridecylthiodipropionate (CAS 10595-72-9); Pentaerythritoltetrakis ([β-laurylthiopropionat (CAS 29598-76-3), 2,2'-Thiodiethylenbis[3-(3,5-di-t-butyl-4-hydroxyphenyl)propionat] (CAS 41484-35-9), Dimyristylthiodipropionate (CAS 16545-54-3) und Distearyldisulfide (CAS 2500-88-1) sowie Mischungen aus diesen Substanzen.

Alternativ kann das Schwefel-haltige Antioxidationsmittel ein oder mehrere Diphenylthioester umfassen wie beispielsweise 4,4'-Thiobis(2-t-butyl-5-methlylphenol) (CAS 96-69-5) und 2,2'-Thiobis(6-t-butyl-4-methylphenol) (CAS 90-66-4).

Besonders bevorzugt ist Pentaerythritoltetrakis ([β-laurylthiopropionat] (CAS 29598-76-3) (Struktur (35).

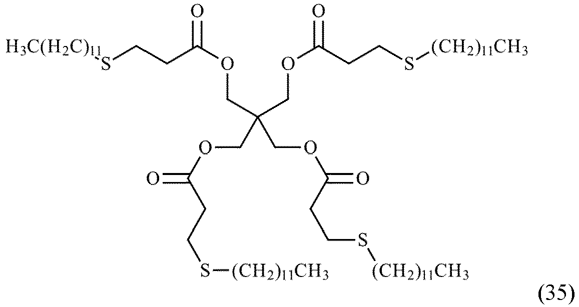

Ebenso kann das Antioxidationsmittel auch ein phosphorhaltiges Antioxidationsmittel sein. Bevorzugt handelt es sich dabei um Phosphor(III) Verbindungen, die in der Schmelze zu Phosphor (V) Verbindungen oxidiert werden. Weiter bevorzugt werden organische Phosphite, Phosphin-Verbindungen und Phosphonate, insbesondere organische Phosphite und Phosphonate, eingesetzt.

Spezifische Beispiele für die Verbindung umfassen Triphenylphosphit, Tris(nonylphenyl)phosphit, Tris(2,4-di-tert-butylphenyl)phosphit, Tridecylphosphit, Trioctylphosphit, Trioctadecylphosphit, Didecylmonophenylphosphit, Dioctylmonophenylphosphit, Diisopropylmonophenylphosphit, Monobutyldiphenylphosphit, Monodecyldiphenylphosphit, Monooctyldiphenylphosphit, Bis(2,6-di-tert-butyl-4-methylphenyl)pentaerythritoldiphosphit, 2,2-Methylenbis(4,6-di-tert-butylphenyl)octylphosphit, Bis(nonylphenyl)pentaerythritoldiphosphit, Bis(2,4-di-tert-butylphenyl)pentaerythritoldiphosphit, Distearylpentaerythritoldiphosphit, Tributylphosphat, Triethylphosphat, Trimethylphosphat, Triphenylphosphat, Diphenylmonoorthoxenylphosphat, Dibutylphosphat, Dioctylphosphat, Diisopropylphosphat, Tetrakis(2,4-di-tert-butylphenyl)-4,4'-biphenylen-diphosphinat, Dimethylbenzolphosphonat, Diethylbenzolphosphonat und Dipropylbenzolphosphonat. Als Phosphine können Triethylphosphin, Tri-n-propylphosphin, Triisopropylphosphin, Tri-n-butylphosphin, Triphenylphosphin und Tributylphosphin eingesetzt werden.

Bevorzugt sind dabei Verbindungen gemäß den Strukturen (36), (37), (38), (39), (40), (41), (42) oder (43).

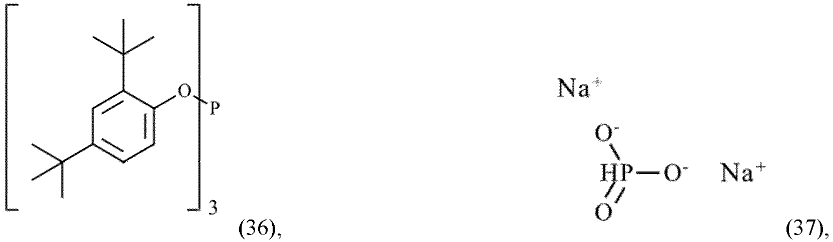

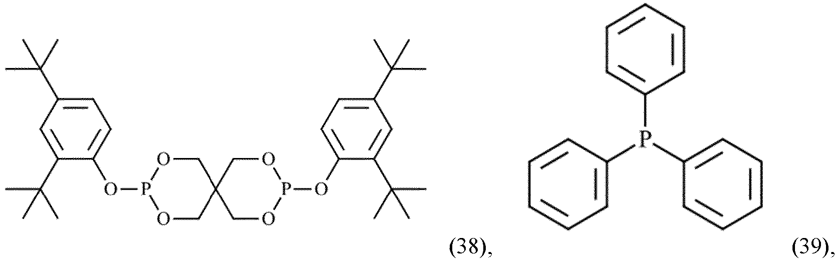

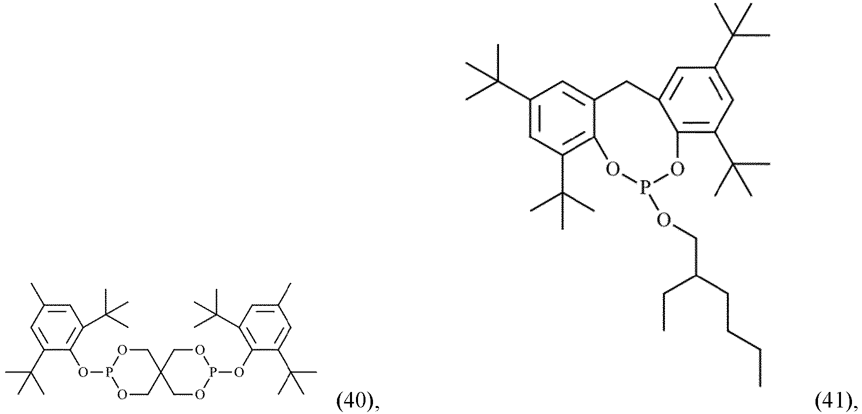

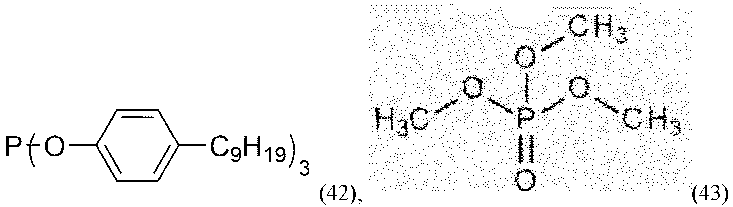

Die Verbindung (36) ist als CAS: 31570-04-4 klassifiziert und kommerziell unter dem Namen Irgafos 168 der Firma BASF SE (Deutschland) verfügbar. Die Verbindung (37) ist als CAS: 237-249-1 klassifiziert und kommerziell unter dem Namen Brüggolen H10 der Firma Brüggeman (Deutschland) verfügbar. Die Verbindung (38) ist als CAS: 26741-53-7 klassifiziert und kommerziell unter dem Namen Irgafos 126 der Firma BASF SE (Deutschland) verfügbar. Die Verbindung (39) ist als CAS: 603-35-0 klassifiziert und kommerziell unter dem Namen Triphenylphosphin der Firma BASF SE (Deutschland) verfügbar. Die Verbindung (40) ist als CAS: 80693-00-1 klassifiziert und kommerziell unter dem Namen ADK Stab PEP 36 der Firma Adeka (Japan) verfügbar. Die Verbindung (41) ist als CAS: 126050-54-2 klassifiziert und kommerziell unter dem Namen ADK Stab HP-10 der Firma Adeka (Japan) verfügbar. Die Verbindung der Formel (42) ist als CAS: 26523-78-4 klassifiziert und kommerziell unter dem Namen ADK Stab 1178 der Firma Adeka (Japan) verfügbar. Die Verbindung der Formel (43) ist als CAS: 512-56-1 klassifiziert und als Trimethylphosphat bekannt. Diese Phosphorverbindungen können einzeln oder in Kombination von zwei oder mehr davon verwendet werden.

Ein weiteres geeignetes Phosphor(III) enthaltenes Antioxidationsmittel ist AddWorks LXR 568 MP der Firma Clariant (Schweiz). Diese Verbindung ist auch als Irgafos PEP-Q bekannt und hat die Formel (44)

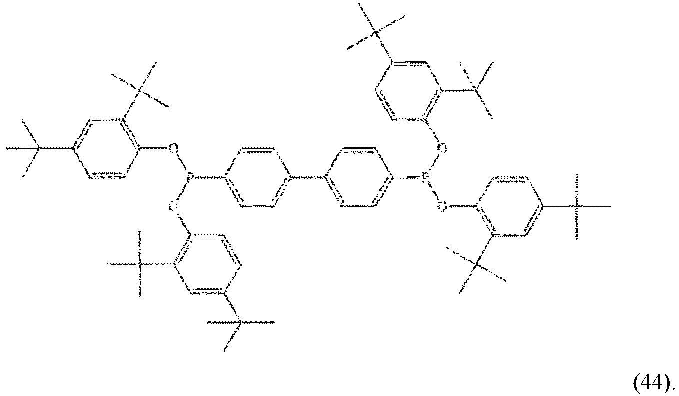

Ganz besonders bevorzugt sind Pentaerythritoltetrakis(3-mercaptopropionat), Pentaerythritoltetrakis(3-laurylthiopropionat), Glycerol-3-stearylthiopropionat, Triethylenglykol-bis[3-(3-tert-butyl-5-methyl-4-hydroxyphenyl)propionat], 1,6-Hexandiol-bis[3-(3,5-di-tert-butyl-4-hydroxyphenyl)propionat], Pentaerythritoltetrakis[3-(3,5-di-tert-butyl-4-hydroxyphenyl)propionat], Octadecyl-3-(3,5-di-tert-butyl-4-hydroxyphenyl)propionat, 1,3,5-Trimethyl-2,4,6-tris(3,5-di-tert-butyl-4-hydroxybenzyl)benzol, N,N-Hexamethylenbis(3,5-di-tert-butyl-4-hydroxyhydrozimtsäureamid), 3,5-Di-tert-butyl-4-hydroxybenzylphosphonat-diethylester, Tris(3,5-di-tert-butyl-4-hydroxybenzyl)isocyanurat, Tetrakis(2,4-di-tert-butylphenyl)-4,4'-biphenylen-diphosphinat und 3,9-Bis{1,1-dimethyl-2-[β-(3-tert-butyl-4-hydroxy-5-methylphenyl)propionyloxy]ethyl}-2,4,8,10-tetraoxaspiro(5,5)undecan.

Eine solches Antioxidationsmittel wird der erfindungsgemäßen thermoplastischen Zusammensetzung bevorzugt in einer Menge von 0 bis 1 Massenteilen, besonders bevorzugt 0,001 bis 1 Massenteilen, vorzugsweise 0,01 bis 0,5 Massenteilen, noch bevorzugter 0,02 bis 0,3 Massenteilen zugesetzt, wobei die Massenteile jeweils bezogen sind auf 100 Massenteile der Komponente (I). Zu geringe Zugabemengen des Antioxidationsmittels können dazu führen, dass die verfärbungshemmende Wirkung während des Formens unzureichend ist. Im Fall zu hoher Zugabemengen des Antioxidationsmittels besteht die Möglichkeit, dass die Zusammensetzung beim Spritzgießen zu vermehrten Werkzeugablagerungen oder beim Extrusionsformen von Filmen zu vermehrten Walzenablagerungen führt, was eine Beeinträchtigung des Oberflächenerscheinungsbildes des Produkts zur Folge hat.

### Gleit- und Entformungsmittel (IIe)

Die erfindungsgemäße Zusammensetzung kann mindestens ein Gleit- und Entformungsmittel (IIe) ausgewählt aus der Gruppe bestehend aus Fettsäuren mit 10 bis 30 Kohlenstoffatomen, deren Fettsäureester von ein- oder mehrwertigen Alkoholen, natürliche tierische Wachse, natürliche pflanzliche Wachse, natürliche Erdöl-basierte Wachse, Montanwachse, Olefinwachse, Silikonöle und Organopolysiloxane enthalten. Gleit- und Entformungsmittel können die Formtrennbarkeit z.B. im Spritzgussprozess weiter verbessern.

Als Gleit - und Entformungsmittel können Fettsäureester von ein- oder mehrwertigen Alkoholen eingesetzt werden. Dabei sind einwertige Alkohole beispielsweise Stearylalkohol, Palmitylalkohol oder Guerbet-Alkohole. Ein zweiwertiger Alkohol ist beispielsweise Glycol; ein dreiwertiger Alkohol ist beispielsweise Glycerin; vierwertige Alkohole sind beispielsweise Pentaerythrit und Mesoerythrit; fünfwertige Alkohole sind beispielsweise Arabit, Ribit und Xylit; sechswertige Alkohole sind beispielsweise Mannit, Glucit (Sorbit) und Dulcit. Ebenso kann beispielsweise Bienenwachs, Carnaubawachs oder Paraffinwachs eingesetzt werden.

Die höhermolekularen Fettsäuren sind vorzugsweise gesättigte Fettsäuren mit 10-30 Kohlenstoffatomen. Beispiele für solche gesättigten Fettsäuren sind Myristinsäure, Laurinsäure, Palmitinsäure, Stearinsäure und Behensäure.

Die höhermolekularen Fettsäureester sind vorzugsweise partielle oder vollständige Ester (Monoester, Diester, Triester, Tetraester, Pentaester und Hexaester oder deren Mischungen, insbesondere statistische Mischungen, aus gesättigten, aliphatischen C10- bis C36-Monocarbonsäuren und gegebenenfalls Hydroxymonocarbonsäuren) von ein- oder mehrwertigen Alkoholen mit 1-20 Kohlenstoffatomen mit gesättigten Fettsäuren mit 10-36 Kohlenstoffatomen. Beispiele für die partiellen oder vollständigen Ester von ein- oder mehrwertigen Alkoholen mit gesättigten Fettsäuren umfassen Stearinsäuremonoglycerid, Stearinsäurediglycerid, Stearinsäuretriglycerid, Stearinsäuremonosorbitol, Stearylstearat, Behensäuremonoglycerid, Behenylbehenat, Pentaerythritolmonostearat, Pentaerythritoltetrastearat, Pentaerythritoltetrapelargoneat, Propylenglykol-monostearat, Palmitylpalmitat, Butylstearat, Methyllaureat, Isopropylpalmitat, Sorbitanmonostearat und 2-Ethylhexylstearat. Bevorzugt sind davon Stearinsäuremonoglycerid, Stearinsäuretriglycerid, Pentaerythritoltetrastearat und Behenylbehenat.

Die kommerziell erhältlichen Fettsäureester, insbesondere des Pentaerythrits und des Glycerins, können herstellungsbedingt < 60% unterschiedlicher Teilester enthalten.

Diese Gleit- und Entformungsmittel können einzeln oder als Mischung von zwei oder mehreren verwendet werden.

Insbesondere bevorzugt werden Ester von zweiwertigen Alkoholen, insbesondere von Ethylglykol, eingesetzt. Hierzu zählen z.B. Substanzen unter der Cas-Nr. 91031-31-1 (C16 bis C18-Ester von Ethylenglykol). Handelsnamen sind z.B. Loxiol 895 und Loxiol 897. Diese Ester können den Molekulargewichtsabbau bei der Verarbeitung wie im Spritzguss reduzieren oder vermeiden und die Verarbeitung erleichtern.

Der Gehalt des Gleit- und Entformungsmittels in der erfindungsgemäßen thermoplastischen Zusammensetzung beträgt vorzugsweise 0 bis 2 Massenteile, besonders bevorzugt 0,0001 bis 2 Massenteile wobei die Massenteile bezogen sind auf 100 Massenteile der Komponente (I). Insbesondere bevorzugt wird das Gleit- und Entformungsmittel zu 0,01 bis 1,5 Massenteilen, ganz besonders bevorzugt zwischen 0,1 und 1 Massenteilen eingesetzt.

### Säure-haltiges Additiv (IIf)

Die erfindungsgemäße thermoplastische Zusammensetzung kann des Weiteren mindestens ein Säure-haltiges Additiv enthalten. Dazu zählen beispielsweise auch freie Säuren, aber auch Verbindungen, welche Säuren freisetzen, wie beispielsweise Trialkylphosphate.

Der Zusatz des mindestens einen Säure-haltigen Additivs erfolgt bevorzugt nach Abschluss der Polykondensation des Copoly(ester)carbonats. Das Säure-haltige Additiv dient vor allem dazu, alkalische Bestandteile, insbesondere Polykondensationskatalysatoren, zu neutralisieren.

Beispiele für das Säure-haltige Additiv umfassen Brønsted-Säuren und deren Ester, wie zum Beispiel Salzsäure, Salpetersäure, Borsäure, Schwefelsäure, schweflige Säure, Phosphorsäure, phosphorige Säure, unterphosphorige Säure, Polyphosphorsäure, Adipinsäure, Ascorbinsäure, Asparaginsäure, Azelainsäure, Benzoesäure, Ameisensäure, Valeriansäure, Zitronensäure, Glykolsäure, Glutaminsäure, Glutarsäure, Zimtsäure, Bernsteinsäure, Essigsäure, Weinsäure, Oxalsäure, p-Toluolsulfinsäure, p-Toluolsulfonsäure, Naphthalinsulfonsäure, Nikotinsäure, Pikrinsäure, Picolinsäure, Phthalsäure, Terephthalsäure, Propionsäure, Benzolsulfinsäure, Benzolsulfonsäure, Malonsäure und Maleinsäure. Bevorzugt unter diesen sauren Verbindungen oder deren Derivaten sind die Sulfonsäuren oder deren Ester. Besonders bevorzugt sind dabei p-Toluolsulfonsäure, Methyl-p-toluolsulfonat und Butyl-p-toluolsulfonat. Insbesondere ist der Zusatz einer freien Säure als Säure-haltiges Additiv bevorzugt.

Ebenso bevorzugt können ein oder mehrere Sulfonsäureester eingesetzt werden, welche ausgewählt sind aus der Gruppe, bestehend aus Sulfonsäureestern der Formeln (B1), (B2), (B3), (B4), (B5), (B6), (B7), (B8) 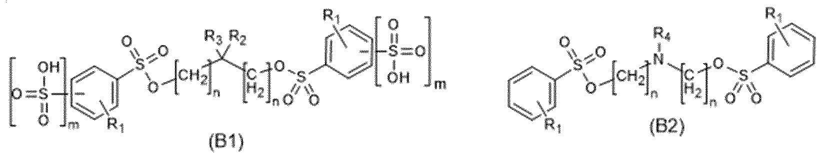 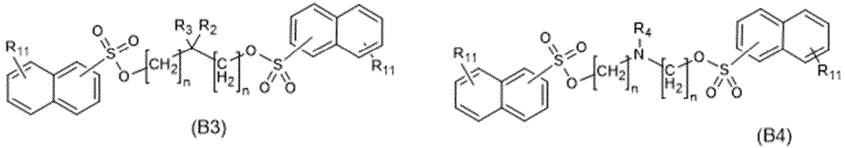 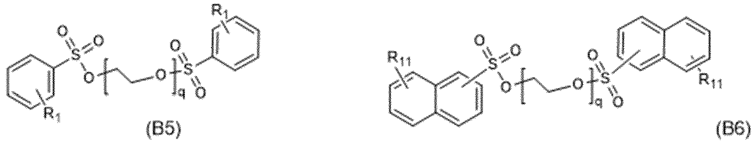 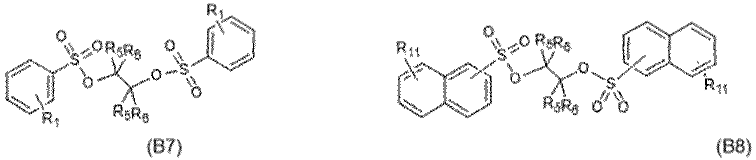 in welchen
m unabhängig voneinander für 0 oder 1 steht,
n unabhängig voneinander für eine ganze Zahl von 0 bis 8 steht,
q für eine ganze Zahl von 0 bis 10 steht,
R1 unabhängig voneinander für Wasserstoff oder für unsubstituiertes oder durch Halogen substituiertes C₁- bis C₂₀-Alkyl steht,
R2 und R3 unabhängig voneinander für Wasserstoff oder für C₁- bis C₆-Alkyl, C₄- bis C₃₀-Alkylcarboxyl oder für den Rest der Formel (b1) 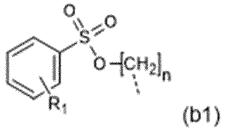
stehen,
wobei in Formel (b1) R1 und n die oben genannte Bedeutung haben,
R4 für C₄- bis C₃₀-Alkylcarboxyl oder für den Rest der Formel (b1) steht,
R5 und R6 unabhängig voneinander für Wasserstoff oder für unsubstituiertes oder durch Halogen substituiertes C₁- bis C₂₀-Alkyl stehen und
R11 unabhängig voneinander für Wasserstoff oder Di-(C₁- bis C₄)-Alkylamino steht.

Besonders bevorzugt sind Sulfonsäureester der Formeln (IV), (V), (VI), (VII), (VIII), (IX), (X), (XI), (XII) enthalten:

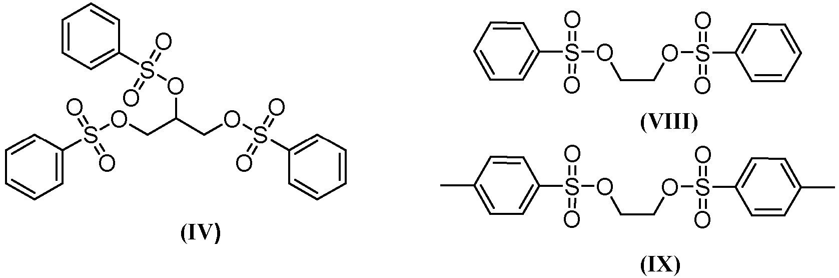

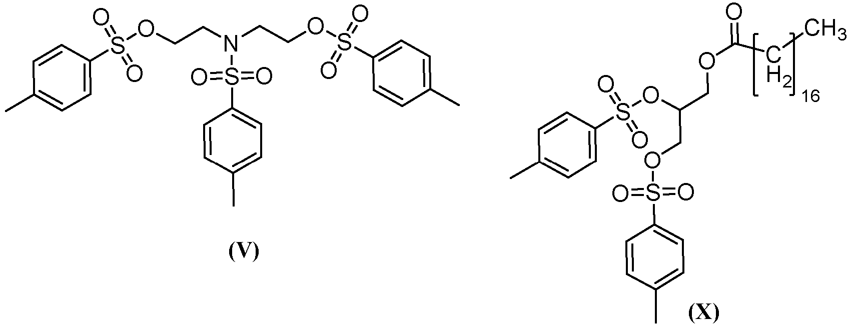

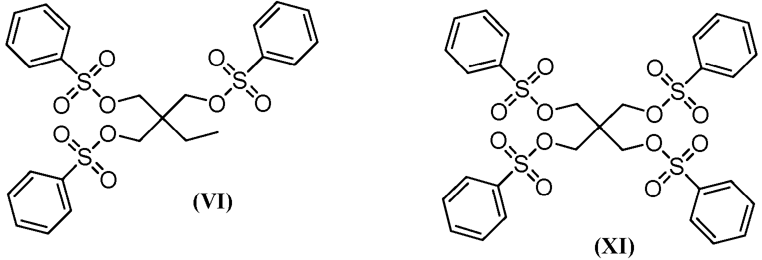

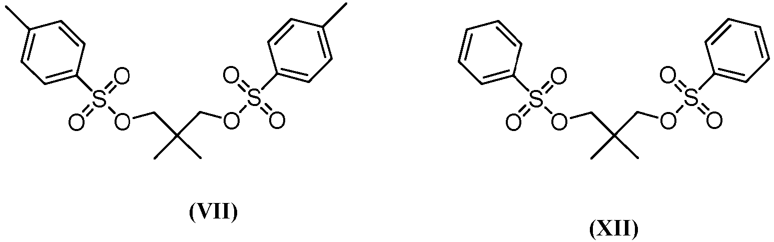

Ebenso können Trialkylphosphate als Säure-haltige Additive eingesetzt werden. Besonders bevorzugt haben die Trialkylphosphate die folgende Struktur (50) 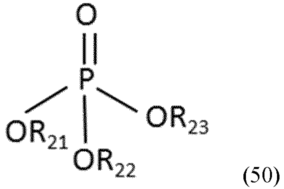 wobei R₂₁ bis R₂₃ H, gleiche oder unterschiedliche lineare, verzweigte oder zyklische Alkylreste sein können. Besonders bevorzugt sind C1-C18 Alkylreste. C1-C18-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl.

Besonders geeignete Alkylphosphate sind z. B. Mono-, Di- und Trihexylphosphat, Triisoctylphosphat und Trinonylphosphat.

Bevorzugt wird als Alkylphosphat Triisooctylphosphat (Tris-2-ethyl-hexyl-phosphat) verwendet. Es können auch Mischungen aus verschiedenen Mono-, Di- und Trialkylphosphaten verwendet werden.

Bevorzugt umfasst die erfindungsgemäße thermoplastische Zusammensetzung 0 bis 0,1 Massenteile, vorzugsweise 0,00001 bis 0,1 Massenteile, vorzugsweise 0,00005 bis 0,01 Massenteile, noch bevorzugter 0,0001 bis 0,001 Massenteile des mindestens einen Säure-haltigen Additivs, wobei die Massenteile jeweils bezogen sind auf 100 Massenteile der Komponente (I). Besonders bevorzugt ist das Säure-haltige Additiv eine Phosphor-enthaltende Verbindung und die Menge dieser Phosphor-haltigen Verbindung beträgt 0,0001 Massenteile bis 1 Massenteile, vorzugsweise 0,0005 bis 0,1 Massenteile, noch bevorzugter 0,001 bis 0,05 Massenteile. Zu geringe Einarbeitungsmengen des Säure-haltigen Additivs können dazu führen, dass die Verfärbung der erfindungsgemäßen thermoplastischen Zusammensetzung beim Spritzgießen unter Bedingungen mit verlängerter Verweilzeit der Zusammensetzung nicht ausreichend gehemmt werden kann. Ferner kann es dazu kommen, dass das Molekulargewicht abbaut. Zu hohe Einarbeitungsmengen des Säure-haltigen Additivs können dazu führen, dass die erfindungsgemäße thermoplastische Zusammensetzung eine erheblich reduzierte hydrolytische Beständigkeit aufweist. Ferner kann eine zu hohe Menge an Säurehaltigem Additiv ebenfalls zu Molekulargewichtsabbau führen.

### OH- und Säuregruppenfänger (IIg)

Ebenso kann die erfindungsgemäße thermoplastische Zusammensetzung mindestens einen OH- und Säuregruppenfänger enthalten. Bevorzugt ist der OH- und Säuregruppenfänger eine Verbindung enthaltend eine Epoxy-Gruppe oder eine Carbodiimid-Gruppe.

### Alkalische Verbindung (IIh)

Ebenso kann die erfindungsgemäße thermoplastische Zusammensetzung mindestens eine alkalische Verbindung aufweisen.

Das erfindungsgemäß eingesetzte Copoly(ester)carbonat enthält Isosorbid. Es ist bekannt, dass Isosorbid dazu neigt, durch Sauerstoff oxidiert zu werden; dies ist insbesondere unter thermischer Belastung der Fall. Spuren von Feuchtigkeit können zum Aufspalten des bicyclischen Systems beitragen. Die Oxidation von Isosorbid erzeugt Zersetzungsprodukte, wie zum Beispiel Produkte mit mehr als 2 OH-Gruppen und ggf. Ameisensäure und Sorbitolbestandteile oder Sorbitolderivate. Ferner können Oxidationsprodukte wie Furanderivate enthalten sein. Wenn Isosorbid, welches diese Zersetzungsprodukte enthält, beispielsweise zur Herstellung eines Copoly(ester)carbonats verwendet wird, verursachen diese Zersetzungsprodukte eine Verfärbung des erhaltenen Polymers oder eine erhebliche Verschlechterung seiner Eigenschaften. Die Polykondensation kann derart negativ beeinflusst werden, dass die Zielmolekulargewichte nicht erreicht werden, Gelkörper entstehen oder die Farbe deutlich zu und die Transmission abnimmt. Prinzipiell können OH- und Säurefängergruppen zur Verhinderung der Bildung von Ameisensäure, von Sorbitol- oder Furanderivaten zugesetzt werden. Diese können jedoch selbst negative Konsequenzen für die Qualität des Polykondensats haben, wie z.B. dessen Verfärbung.

Bevorzugt wird als OH- und Säuregruppenfänger ein Alkalimetallsalz wie Natriumhydroxid eingesetzt.. Ein solches Alkalimetall fungiert auch als Polykondensationskatalysator und kann damit bereits auch während der Polykondensation des erfindungsgemäß eingesetzten Copoly(ester)carbonats eingesetzt werden. Allerdings ist es unerwünscht, solche Alkalimetallsalze übermäßig zuzusetzen, da die übermäßige Zugabe eine Kontrolle der Polykondensationsreaktion unmöglich macht.

Bevorzugt enthält die erfindungsgemäße thermoplastische Zusammensetzung 0 bis 1×10⁻³ Masseteile, besonders bevorzugt 0,1×10⁻⁷ bis 1 ×10⁻³ Masseteile der alkalischen Verbindung, wobei die Massenteile jeweils bezogen sind auf 100 Massenteile der Komponente (I).

### Reduktionsmittel (IIi)

Ebenso kann die erfindungsgemäße thermoplastische Zusammensetzung mindestens ein Reduktionsmittel aufweisen. Das Reduktionsmittel wird aus demselben Zweck eingesetzt wie die alkalische Verbindung (IIh). Bevorzugt ist das Reduktionsmittel Natriumborhydrid oder Lithiumborhydrid.

Bevorzugt enthält die erfindungsgemäße thermoplastische Zusammensetzung 0 bis 1×10⁻³ Masseteile, besonders bevorzugt 0,1×10⁻⁷ bis 1 ×10⁻³ Masseteile des Reduktionsmittels, wobei die Massenteile jeweils bezogen sind auf 100 Massenteile der Komponente (I).

### Antistatikum (IIj)

Ferner kann die erfindungsgemäße thermoplastische Zusammensetzung mindestens ein Antistatikum ausgewählt aus der Gruppe bestehend aus Polyetheresteramiden, Glycerolmonostearat, Ammoniumsalze der Dodecylbenzolsulfonsäure, Phosphoniumsalze der Dodecylbenzolsulfonsäure, quarternäre Ammoniumsalze einer Perfluoralkylsulfonsäure Maleinsäureanhydrid-monoglycerid und Maleinsäureanhydrid-diglycerid enthalten.

Bevorzugt enthält die erfindungsgemäße thermoplastische Zusammensetzung 0 bis 2 Masseteile, besonders bevorzugt 0,001 bis 2 Masseteile und ganz besonders bevorzugt 0,1 bis 1 Masseteile des Antistatikums, wobei die Massenteile jeweils bezogen sind auf 100 Massenteile der Komponente (I).

### Farbmittel (IIk)

Ferner kann die erfindungsgemäße thermoplastische Zusammensetzung mindestens ein Farbmittel ausgewählt aus der Gruppe der anorganischen Pigmente, welche Ruß, Titanoxid, Zinkweiß, Eisenoxidrot, Chromoxid, Eisenschwarz, Titangelb, Zink-Eisenbraun, Kupfer-Chromschwarz, Kupfer-Eisenschwarz und oxidbasierte Pigmente umfassen, organischen Pigmenten und organischen Farbstoffen, welche Phthalocyanin-Farbstoffe und -Pigmente; kondensierte Polycyclen wie Azo-, Thioindigo-, Perinon-, Perylen-, Chinacridon-, Dioxazin-, Isoindolinon- und Chinophthalon-Farbstoffe und -Pigmente, Anthrachinon-, Perinon-, Perylen-, Methin-, Chinolin-, Heterocyclen- und Methyl-basierte Farbstoffe und Pigmente umfassen.

In der Regel werden Polycarbonat-enthaltende Zusammensetzungen mit dem Farbmittel tiefschwarz eingefärbt. In diesem Fall wird die Verbesserung der Lichtbeständigkeit der Polycarbonatharz-Zusammensetzung und ihres Formteils besonders deutlich. Das heißt, bei einer herkömmlichen tiefschwarz gefärbten Harzzusammensetzung und einem daraus hergestellten Formteil zeigt sich die Verschlechterung der Witterungsbeständigkeit häufig in Form eines mangelhaften Erscheinungsbildes (zum Beispiel durch Rissbildung oder weißliche Trübung). Andererseits weisen, wie oben beschrieben, die erfindungsgemäßen thermoplastischen Zusammensetzungen eine ausgezeichnete Witterungsbeständigkeit auf. Selbst bei tiefschwarzer Färbung können allerdings Erscheinungsmängel wie Rissbildung und weißliche Trübung auftreten, die unterdrückt werden müssen.

Die aufgezählten Farbstoffe und Pigmente können einzeln oder in Kombination von zwei oder mehreren verwendet werden. Es ist auch möglich, ein anorganisches Pigment und einen organischen Farbstoff/Pigment zusammen zu verwenden.

Bei tiefschwarzen Anwendungen ist es vorteilhaft, wenn die mit dem Farbmittel tiefschwarz eingefärbte Zusammensetzung und das daraus hergestellte Formteil eine Helligkeit L* von 0,5 bis 3 aufweisen. In diesem Fall lässt sich ein tiefschwarzes Formteil mit ausgezeichneter Designqualität realisieren. Die Helligkeit L* kann innerhalb des oben genannten Bereichs durch entsprechende Anpassung der Art, Kombination und Zugabemenge der verschiedenen oben genannten Farbmittel eingestellt werden.

Um einen transparenten Farbeindruck oder auch einen gedeckten Farbeindruck zu erhalten, liegt die Gesamtmenge des Farbmittels vorzugsweise bei 0,001 bis 5 Massenteilen, wobei die Massenteile jeweils bezogen sind auf 100 Massenteile der Komponente (I). Die untere Grenze der Gesamtmenge des Farbmittels beträgt noch bevorzugter 0,002 Massenteile und besonders bevorzugt 0,01 Massenteile. Die obere Grenze der Gesamtmenge des Farbmittels beträgt noch bevorzugter 3 Massenteile, ganz besonders bevorzugt 2 Massenteil.

### Anorganischer Füllstoff (IIl)

Die erfindungsgemäße thermoplastische Zusammensetzung kann des Weiteren mindestens einen anorganischen Füllstoff enthalten.

Bevorzugt ist der anorganische Füllstoff ausgewählt aus der Gruppe, bestehend aus Glasfasern, gemahlenen Glasfasern, Glasflocken, Glasperlen, Kohlenstofffasern, Silica, Aluminiumoxid, Titanoxid, Calciumsulfatpulver, Gips, Gipswhisker, Bariumsulfat, Talk, Glimmer, Calciumsilikat wie Wollastonit, Ruß, Graphit, Eisenpulver, Kupferpulver, Molybdändisulfid, Siliciumcarbid, Siliciumcarbidfasern, Siliciumnitrid, Siliciumnitridfasern, Messingfasern, Edelstahlfasern, Kaliumtitanatfasern und -whisker.

Insbesondere bevorzugt sind faserige Glasfüllstoffe, pulverförmige Glasfüllstoffe und schuppenförmige Glasfüllstoffe; faserige Kohlenstofffüllstoffe, pulverförmige Kohlenstofffüllstoffe und schuppenförmige Kohlenstofffüllstoffe; sowie verschiedene Arten von Whiskern, Glimmer und Talk. Besonders bevorzugte Beispiele umfassen Glasfasern, Glasflocken, gemahlene Glasfasern, Kohlenstofffasern, Wollastonit, Glimmer und Talk. Von diesen anorganischen Füllstoffen können alle Glasfasern oder gemahlenen Glasfasern verwendet werden, die bei thermoplastischen Harzen zum Einsatz kommen. Insbesondere wird alkalifreies Glas (E-Glas) bevorzugt. Die Glasfasern haben vorzugsweise einen Durchmesser von 6 µm bis 20 µm, noch bevorzugter von 9 µm bis 14 µm. Bei zu kleinem Durchmesser der Glasfasern tendiert die Verstärkungswirkung dazu, unzureichend zu sein. Bei zu großem Durchmesser der Glasfasern neigen diese dazu, das Erscheinungsbild des Produkts negativ zu beeinflussen.

Bevorzugte Beispiele für Glasfasern umfassen Schnittrovings, die vorzugsweise auf eine Länge von 1 mm bis 6 mm geschnitten wurden, sowie handelsübliche gemahlene Glasfasern, die in gemahlener Form mit einer Länge von vorzugsweise 0,01 mm bis 0,5 mm vorliegen. Diese beiden Arten von Glasfasern können einzeln oder als Mischung verwendet werden. Die in der Erfindung zu verwendenden Glasfasern können vor dem Gebrauch einer Oberflächenbehandlung mit beispielsweise einem Silankopplungsmittel wie einem Aminosilan oder Epoxysilan zur Verbesserung der Haftung am erfindungsgemäß eingesetzten Copoly(ester)carbonat oder einer Schlichte-Behandlung mit einem Acrylharz, Urethanharz oder dergleichen zur Verbesserung der Handhabbarkeit unterzogen werden.

Als Glasperlen können alle Glasperlen verwendet werden, die bei thermoplastischen Harzen zum Einsatz kommen. Davon wird alkalifreies Glas (E-Glas) bevorzugt. Hinsichtlich der Form der Glasperlen wird eine kugelförmige Form mit einem Durchmesser von 10 µm bis 50 µm bevorzugt.

Beispiele für Glasflocken umfassen schuppenförmige Glasflocken. Die in das erfindungsgemäß verwendete Copoly(ester)carbonat eingearbeiteten Glasflocken können einen maximalen Durchmesser von im Allgemeinen 1.000 µm oder weniger, vorzugsweise 1 µm bis 500 µm, und ein Aspektverhältnis (Verhältnis von maximalem Durchmesser zur Dicke) von 5 oder größer, vorzugsweise 10 oder größer, besonders bevorzugt 30 oder größer aufweisen.

Die Kohlenstofffasern sind nicht besonders eingeschränkt, und Beispiele dafür umfassen Kohlenstofffasern verschiedener Arten, wie flammbeständige Fasern, kohlenstoffhaltige Fasern und Graphitfasern, die aus Rohstoffen wie Acrylfasern, Erdöl- oder Kohle-basierten Spezialpechs, Cellulosefasern und Lignin durch Verbrennung hergestellt werden. Solche Kohlenstofffasern haben ein durchschnittliches Aspektverhältnis (Faserlänge/Faserdurchmesser) von vorzugsweise 10 oder größer, besonders bevorzugt 50 oder größer. Bei einem zu kleinen durchschnittlichen Aspektverhältnis der Kohlenstofffasern tendiert die Polycarbonatharz-Zusammensetzung zu verringerter elektrischer Leitfähigkeit, Festigkeit und Steifigkeit. Die Kohlenstofffasern können einen Durchmesser von 3 µm bis 15 µm aufweisen und können in jeder Form wie beispielsweise als Schnittrovings, Rovingstränge oder gemahlene Fasern verwendet werden, um das Aspektverhältnis zu erreichen. Es können Kohlenstofffasern einer Art oder eine Mischung aus zwei oder mehr Arten von Kohlenstofffasern verwendet werden.

Die Kohlenstofffasern können einer Oberflächenbehandlung wie beispielsweise einer Epoxid-Behandlung, Urethan-Behandlung oder Oxidationsbehandlung unterzogen werden, um die Affinität zum erfindungsgemäß eingesetzten Copoly(ester)carbonat zu erhöhen, sofern die Oberflächenbehandlung die Eigenschaften der erfindungsgemäßen thermoplastischen Zusammensetzung der Erfindung nicht beeinträchtigt.

Der Zeitpunkt der Zugabe eines anorganischen Füllstoffs zum Copoly(ester)carbonat und die Methoden für dessen Zugabe sind nicht besonders eingeschränkt. Beispiele für den Zugabezeitpunkt umfassen Folgendes: Bei der Herstellung des Copoly(ester)carbonates durch ein Umesterungsverfahren kann der Füllstoff zum Zeitpunkt der Beendigung der Polymerisationsreaktion zugegeben werden. Weitere Beispiele für den Zugabezeitpunkt umfassen, unabhängig vom Polymerisationsverfahren: den Zeitpunkt, wenn das Copoly(ester)carbonat sich in einem geschmolzenen Zustand befindet, wie beim Kneten des Copoly(ester)carbonats zusammen mit anderen Zusatzstoffen; und den Zeitpunkt, wenn das Copoly(ester)carbonat in festem Zustand, z.B. in Form von Pellets oder Pulver, mittels eines Extruders oder dergleichen gemischt/geknetet wird. Beispiele für Zugabemethoden umfassen: eine Methode, bei der der anorganische Füllstoff direkt mit dem Copoly(ester)carbonat gemischt oder geknetet wird; und eine Methode, bei der der anorganische Füllstoff als hochkonzentriertes Masterbatch zugegeben wird, das unter Verwendung des anorganischen Füllstoffs und einer kleinen Menge des Copoly(ester)carbonates, eines anderen Harzes usw. hergestellt wurde.

Bevorzugt enthält die erfindungsgemäße thermoplastische Zusammensetzung den anorganischen Füllstoff in einer Menge von 0 bis 100 Massenteilen, vorzugsweise 1 bis 100 Massenteile, besonders bevorzugt 3 bis 50 Massenteile, wobei die Massenteile jeweils bezogen sind auf 100 Massenteile der Komponente (I). Zu geringe Mengen des anorganischen Füllstoffs führen zu einer unzureichenden Verstärkungswirkung. Zu große Mengen führen tendenziell zu einer Beeinträchtigung des Erscheinungsbildes.

### Flammschutzmittel (IIm)

Die erfindungsgemäße thermoplastische Zusammensetzung kann des Weiteren mindestens ein Flammschutzmittel ausgewählt aus der Gruppe, bestehend aus Phosphorverbindungs-basierten, Halogenverbindungs-basierten, Metallsulfonat-basierten und Siliciumverbindungs-basierten Flammschutzmittel enthalten.

Bevorzugte Beispiele für Phosphorverbindungs-basierte Flammschutzmittel umfassen Phosphorsäureesterverbindungen, Phosphazenverbindungen, roten Phosphor, beschichteter roter Phosphor und Polyphosphatverbindungen. Die Menge eines solchen Phosphorverbindungs-basierten Flammschutzmittels beträgt vorzugsweise 0,1 bis 20 Massenteile bezogen auf 100 Massenteile der Komponente (I). Bei zu geringer Menge des eingearbeiteten Flammschutzmittels ist es schwierig, ausreichende Flammwidrigkeit zu erzielen. Bei zu großer Menge kann die Wärmebeständigkeit nachteilig beeinflusst werden.

Bevorzugte Phosphorsäureesterverbindungen sind solche der allgemeinen Formel (50): 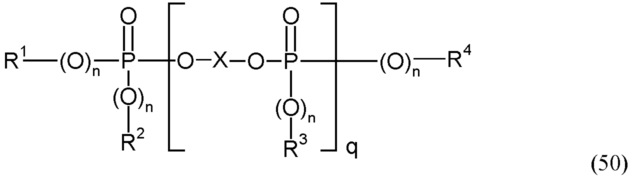 worin
R¹, R², R³ und R⁴, unabhängig voneinander jeweils gegebenenfalls halogeniertes C₁ bis C₈-Alkyl, jeweils gegebenenfalls durch Alkyl, vorzugsweise C₁ bis C₄-Alkyl, und/oder Halogen, vorzugsweise Chlor, Brom, substituiertes C₅ bis C₆-Cycloalkyl, C₆ bis C₂₀-Aryl oder C₇ bis C₁₂-Aralkyl,
n unabhängig voneinander, 0 oder 1
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁ bis C₄-Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise Chlor, Brom und/oder C₁ bis C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (50) bedeutet bevorzugt einen ein- oder mehrkernigen aromatischen Rest mit 6 bis 30 C-Atomen. Dieser leitet sich bevorzugt von Diphenolen ab.

n in der Formel (50) kann, unabhängig voneinander, 0 oder 1 sein, vorzugsweise ist n gleich 1.

q steht für Werte von 0 bis 30. Bei Einsatz von Mischungen verschiedener Komponenten der Formel (50) können Mischungen vorzugsweise zahlengemittelte q-Werte von 0,3 bis 10, besonders bevorzugt 0,5 bis 10, insbesondere 1,05 bis 1,4 verwendet werden.

X steht besonders bevorzugt für 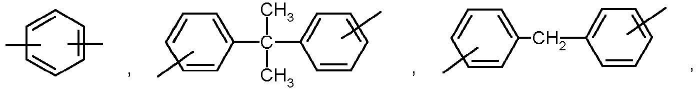 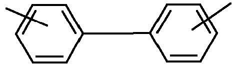 oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Als Flammschutzmittel können Monophosphate (q=O), Oligophosphate (q=1-30) oder Mischungen aus Mono- und Oligophosphaten eingesetzt werden.

Monophosphorverbindungen der Formel (50) sind insbesondere Tributylphosphat, Tris-(2-chlorethyl)-phosphat, Tris-(2,3-dibromprobyl)-phosphat, Tri-(2-ethylhexylphosphat), Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Ein bevorzugtes Flammschutzmittel ist Bisphenol-A basierendes Oligophosphat gemäß Formel (51).

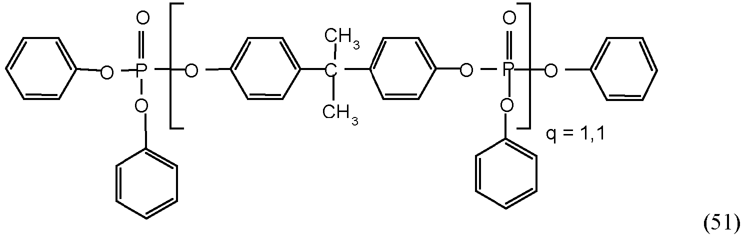

Die Phosphorverbindungen gemäß Formel (50) sind bekannt (vgl. z.B. EP-A 363 608, EP-A 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Alternativ besonders bevorzugt als Flammschutzmittel sind Phosphazene gemäß Formel (52) oder (53): 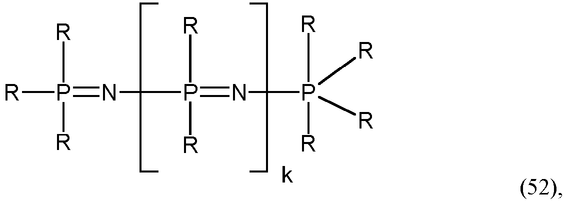 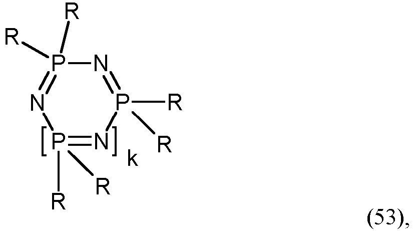 worin
R jeweils gleich oder verschieden ist und für Amino, jeweils gegebenenfalls halogeniertes, vorzugsweise mit Fluor halogeniertes C₁ bis C₈-Alkyl, oder C₁ bis C₈-Alkoxy, jeweils gegebenenfalls durch Alkyl, vorzugsweise C₁ bis C₄-Alkyl, und/oder Halogen, vorzugsweise Chlor und/oder Brom, substituiertes C₅ bis C₆-Cycloalkyl, C₆ bis C₂₀-Aryl, vorzugsweise Phenyl oder Naphthyl, C₆ bis C₂₀-Aryloxy, vorzugsweise Phenoxy, Naphthyloxy, oder C₇ bis C₁₂-Aralkyl, vorzugsweise Phenyl-C₁-C₄-alkyl, steht,
k für 0 oder eine Zahl von 1 bis 15, vorzugsweise für eine Zahl von 1 bis 10 steht.

Beispielhaft seien Propoxyphosphazen, Phenoxyphosphazen, Methylphenoxyphosphazen, Aminophosphazen und Fluoralkylphosphazene genannt. Bevorzugt ist Phenoxyphosphazen. Die Phosphazene können allein oder als Mischung eingesetzt werden. Der Rest R kann immer gleich sein oder 2 oder mehre Reste in den Formeln (52) und (53) können verschieden sein. Phosphazene und deren Herstellung sind beispielsweise in EP-A 728 811, DE-A 1 961668 und WO 97/40092 beschrieben.

Beispiele für Halogenverbindungs-basierte Flammschutzmittel umfassen Tetrabrombisphenol A, Tribromphenol, bromierte aromatische Triazine, Tetrabrombisphenol-A-Epoxyoligomere, Tetrabrombisphenol-A-Epoxypolymere, Decabromdiphenyloxid, Tribromallylether, Tetrabrombisphenol-A-Carbonatoligomere, Ethylenbistetrabromphtalimid, Decabromdiphenylethan, bromiertes Polystyrol und Hexabromcyclododecan.

Die Menge eines solchen Halogenverbindungs-basierten Flammschutzmittels kann 0,1 bis 20 Massenteile bezogen auf 100 Massenteile der Komponente (I) betragen. Bei zu geringer Menge des eingearbeiteten Halogenverbindungs-basierten Flammschutzmittels ist es schwierig, ausreichende Flammwidrigkeit zu erzielen. Bei zu großer Menge hat die Zusammensetzung nicht nur eine reduzierte mechanische Festigkeit, sondern es kann auch zu Verfärbungen durch Ausbluten des Flammschutzmittels kommen.

Beispiele für Metallsulfonat-basierte Flammschutzmittel umfassen Metallsalze aliphatischer Sulfonsäuren, Metallsalze aromatischer Sulfonsäuren und Metallsalze von Perfluoralkansulfonsäuren. Bevorzugte Beispiele für die Metalle dieser Metallsalze umfassen Metalle der 1. Gruppe und Metalle der 2. Gruppe des Periodensystems. Spezifische Beispiele sind: Alkalimetalle wie Lithium, Natrium, Kalium, Rubidium und Cäsium; Erdalkalimetalle wie Calcium, Strontium und Barium; sowie Beryllium und Magnesium.

Von den Metallsulfonat-basierten Flammschutzmitteln sind unter den Gesichtspunkten der Flammwidrigkeit und thermischen Stabilität Metallsalze von aromatischen Sulfonsulfonsäuren, Metallsalze von Perfluoralkansulfonsäuren und dergleichen bevorzugt. Bevorzugte Metallsalze von aromatischen Sulfonsulfonsäuren sind Alkalimetallsalze von aromatischen Sulfonsulfonsäuren und Erdalkalimetallsalze von aromatischen Sulfonsulfonsäuren. Diese Salze können Polymere sein. Spezifische Beispiele für die Metallsalze von aromatischen Sulfonsulfonsäuren umfassen das Natriumsalz der (Diphenylsulfon)-3-sulfonsäure, das Kaliumsalz der (Diphenylsulfon)-3-sulfonsäure, das Natriumsalz der (4,4'-Dibromdiphenylsulfon)-3-sulfonsäure, das Kaliumsalz der (4,4'-Dibromdiphenylsulfon)-3-sulfonsäure, das Calciumsalz der (4-Chlor-4'-nitrodiphenylsulfon)-3-sulfonsäure, das Dinatriumsalz der (Diphenylsulfon)-3,3'-disulfonsäure und das Dikaliumsalz der (Diphenylsulfon)-3,3'-disulfonsäure.

Bevorzugte Metallsalze von Perfluoralkansulfonsäuren sind Alkalimetallsalze von Perfluoralkansulfonsäuren, Erdalkalimetallsalze von Perfluoralkansulfonsäuren und dergleichen. Besonders bevorzugt sind Alkalimetallsulfonate mit einer Perfluoralkylgruppe mit 4-8 Kohlenstoffatomen, Erdalkalimetallsulfonate mit einer Perfluoralkylgruppe mit 4-8 Kohlenstoffatomen und dergleichen.

Spezifische Beispiele für die Metallsalze von Perfluoralkansulfonsäuren umfassen Natriumperfluorbutansulfonat, Kaliumperfluorbutansulfonat, Natriumperfluormethylbutansulfonat, Kaliumperfluormethylbutansulfonat, Natriumperfluoroctansulfonat, Kaliumperfluoroctansulfonat und Tetraethylammoniumperfluorbutansulfonat.

Die Menge eines solchen Metallsulfonat-basierten Flammschutzmittels beträgt vorzugsweise 0 bis 5 Massenteile, besonders bevorzugt 0,01 bis 5 Massenteile bezogen auf 100 Massenteile der Komponente (I). Bei zu geringer Menge des eingearbeiteten Metallsulfonat-basierten Flammschutzmittels ist es schwierig, ausreichende Flammwidrigkeit zu erzielen. Zu große Mengen führen tendenziell zu verringerter thermischer Stabilität.

Beispiele für Siliciumverbindungs-basierte Flammschutzmittel umfassen Silikonharze mit siliciumgebundenen Substituenten einschließlich aromatischer Kohlenwasserstoffgruppen und aliphatischer Kohlenwasserstoffgruppen mit 2 oder mehr Kohlenstoffatomen, Silikonverbindungen mit einer verzweigten Hauptkettenstruktur und organischen Funktionsgruppen einschließlich einer aromatischen Gruppe, Silikonpulver, die aus Silicapartikeln aufgebaut sind und auf deren Oberfläche ein Polydiorganosiloxan-Polymer, das eine funktionelle Gruppe aufweisen kann, aufgebracht ist, sowie Organopolysiloxan/Polycarbonat-Copolymere.

Beispiele für Silikone umfassen weiterhin lösungsmittelhaltige Silikonharze mit einem relativ niedrigen Molekulargewicht, die hauptsächlich aus einer difunktionellen Einheit [R₂SiO] und einer trifunktionellen Einheit [RSiO_{1,5}] bestehen und eine monofunktionelle Einheit [R₃SiO_{0,5}] und/oder eine tetrafunktionelle Einheit [SiO₂] enthalten können. Das Symbol R steht für eine Kohlenwasserstoffgruppe mit 1-12 Kohlenstoffatomen oder eine Kohlenwasserstoffgruppe mit 1-12 Kohlenstoffatomen, die mit einem oder mehreren Substituenten substituiert ist. Beispiele für die Substituenten umfassen eine Epoxygruppe, Aminogruppe, Hydroxylgruppe und Vinylgruppe. Durch Änderung der Art von R kann die Verträglichkeit mit dem Matrixharz verbessert werden.

Die Menge eines solchen Siliciumverbindungs-basierten Flammschutzmittels beträgt vorzugsweise 0,1 bis 10 Massenteile bezogen auf 100 Massenteile der Komponente (I). Bei zu geringer Menge des eingearbeiteten Siliciumverbindungs-basierten Flammschutzmittels ist es schwierig, ausreichende Flammwidrigkeit zu erzielen. Zu große Mengen führen tendenziell zu verringerter Wärmebeständigkeit.

In dieser Ausführungsform ist es vorzuziehen, dass ein Flammschutzmittel in Kombination mit Polytetrafluorethylen (siehe hierzu auch Komponente (IIn), umfassend Fluorharze) zur Tropfenverhinderung (Vermeidung des Abtropfens oder brennenden Abtropfens im Brandfall) verwendet wird, um eine höhere Flammwidrigkeit zu erreichen. Polytetrafluorethylen zur Tropfenverhinderung dispergiert leicht in Polymeren und neigt dazu, Polymermoleküle miteinander zu verbinden, um ein faserförmiges Material zu bilden.

Die Menge des einzuarbeitenden Flammschutzmittels wird entsprechend der Art des Flammschutzmittels und dem gewünschten Grad der Flammwidrigkeit gewählt. Im allgemeinen und bevorzugt umfasst die erfindungsgemäße thermoplastische Zusammensetzung ein Flammschutzmittel im Bereich von 0 bis 30 Massenteile, bevorzugt 0,01 bis 30 Massenteile, besonders bevorzugt 0,02 bis 25 Massenteile, wobei die Massenteile jeweils bezogen sind auf 100 Massenteile der Komponente (I). Je nach Auswahl des speziellen Flammschutzmittels sind die oben angegebenen Mengen bevorzugt.

### Polymere Blendpartner (IIn)

Die erfindungsgemäße thermoplastische Zusammensetzung kann einen polymeren Blendpartner ausgewählt aus der Gruppe, bestehend aus Poly(milchsäure), Poly(cyclohexandimethanol-cyclohexandicarboxylat), Poly(propylenterephthalat), Polycarbonaten, Polyamid 46, Polyamid 12, semiaromatischen Polyamiden, kautschuk-modifizierten Pfropfpolymeren, Vinyl(co)polymeren ausgewählt aus der Gruppe(Co)Polymerisate aus
B.1 50 bis 99 Gew.-%, bevorzugt 65 bis 85 Gew.-%, besonders bevorzugt 70 bis 80 Gew.-% bezogen auf das (Co)Polymerisat mindestens eines Monomeren ausgewählt aus der Gruppe der Vinylaromaten, kernsubstituierten Vinylaromaten und (Meth)Acrylsäure-(C1-C8)-Alkylester und
B.2 1 bis 50 Gew.-%, bevorzugt 15 bis 35 Gew.-%, besonders bevorzugt 20 bis 30 Gew.-% bezogen auf das (Co)Polymerisat mindestens eines Monomeren ausgewählt aus der Gruppe der Vinylcyanide, (Meth)Acrylsäure-(C1-C8)-Alkylester, ungesättigte Carbonsäuren und Derivate ungesättigter Carbonsäuren,

Polyolefinen ausgewählt aus der Gruppe bestehend aus Polyethylen, Ethylen-Copolymeren, Polypropylen und 4-Methylpenten-1-Harzen, Polyacetalen, Poly(amid-imiden), Poly(ethersulfonen), Polyimiden, Poly(phenylenoxid), Poly(phenylensulfid), Poly(phenylsulfon), Polyetheretherketon, flüssigkristallinen Polyestern, Poly(vinylchlorid) und Fluorharzen enthalten. Es versteht sich, dass dieser polymere Blendpartner (IIn) verschieden vom erfindungsgemäß eingesetzten Copoly(ester)carbonat ist.

Der Fachperson ist ersichtlich, dass der Meth)Acrylsäure-(C1-C8)-Alkylester der Komponente B.1 vom Meth)Acrylsäure-(C1-C8)-Alkylester der Komponente B.2 verschieden ist.

Bevorzugte Polycarbonate sind aromatische Polycarbonate, beispielsweise gebildet aus verschiedenen Bisphenolen einschließlich Bisphenol A und Bisphenol TMC; alicyclische Polycarbonate, beispielsweise gebildet aus alicyclischen Diolen wie 3(4),8(9)-Bis(hydroxymethyl)tricyclo[5.2.1.02,6]decan oder aliphatische Polycarbonate, beispielsweise gebildet aus heterocyclischen Diolen, z.B. 3,9-Bis(1,1-dimethyl-2-hydroxyethyl)-2,4,8,10-tetraoxaspiro[5,5]undecan.

Ein bevorzugtes Fluorharz ist Polytetrafluorethylen. Die Menge des einzuarbeitenden Polytetrafluorethylens insbesondere zur Tropfenverhinderung (siehe oben) beträgt vorzugsweise 0,01 bis 2,0 Massenteile bezogen auf 100 Massenteile der Komponente (I). Wenn Polytetrafluorethylen zur Tropfenverhinderung in zu geringer Menge eingearbeitet wird, ist die Wirkung zur Verhinderung des Schmelzens und Abtropfens des Copoly(ester)carbonats beim Verbrennen unzureichend. Zu große Mengen führen tendenziell zu einer Beeinträchtigung des Erscheinungsbildes der geformten Artikel.

Bevorzugt enthält die erfindungsgemäße thermoplastische Zusammensetzung 0 bis 95 Massenteile, besonders bevorzugt 5 bis 95 Massenteile des polymeren Blendpartners, wobei die Massenteile jeweils bezogen sind auf 100 Massenteile der Komponente (I).

Es ist insbesondere bevorzugt, dass der polymere Blendpartner (IIn) ein Vinyl(co)polymer ist, wobei das Vinyl(co)polymer ausgewählt ist aus der Gruppe der (Co)Polymerisate aus B.1 und B.2. Es handelt sich somit bevorzugt um Copolymere von mindestens einem Monomeren aus der Gruppe der Vinylaromaten, Vinylcyanide (ungesättigte Nitrile), (Meth)-Acrylsäure-(C1 bis C8)-Alkylester, ungesättigte Carbonsäuren sowie Derivate (wie Anhydride und Imide) ungesättigter Carbonsäuren. Die (Co)Polymerisate B.1 und B.2 sind harzartig, thermoplastisch und kautschukfrei. Besonders bevorzugt ist das Copolymerisat aus B.1 Styrol und B.2 Acrylnitril.

Derartige (Co)Polymerisate sind bekannt und lassen sich durch radikalische Polymerisation, insbesondere durch Emulsions-, Suspensions-, Lösungs- oder Massepolymerisation herstellen. Die (Co)Polymerisate besitzen ein gewichtsgemitteltes Molekulargewicht (M_{w}), bestimmt per Gelpermeationschromatographie mit GPC in Tetrahydrofuran mit Polystyrol als Standard, von bevorzugt 50000 bis 250000 g/mol, besonders bevorzugt von 70000 bis 200000 g/mol, besonders bevorzugt von 80000 bis 160000 g/mol. Bevorzugt wird dieses Gewichtsmittel der Molmasse (M_{w}) bestimmt über Gelpermeationschromatographie in Tetrahydrofuran mit einem Polystyrol als Standard (bevorzugt in Anlehnung an DIN 55672-1:2007-08 unter Verwendung einer Polystyrol-Kalibrierung). Die Kalibrierung kann über engverteilte Polystyrol-Standards (z.B. ReadyCal Kit Polystyrene low, nominal Mp 266 66,000 Da) erfolgen. Die allgemeine Methode ist bei der Currenta GmbH & Co. OHG unter AM 2011-0623701-09D definiert, die jederzeit bei der Currenta angefragt werden kann. Tetrahydrofuran (THF) wurde als Elutionsmittel verwendet. Die GPC kann eine oder mehrere hintereinander geschaltete handelsübliche GPC-Säulen (z.B. SDV Säulen) zur Größenausschluss-Chromatographie umfassen. Die Detektion kann über Ultraviolettstrahlung (UV) und/oder Brechungsindex erfolgen.

Bevorzugt ist die erfindungsgemäße thermoplastische Zusammensetzung dadurch gekennzeichnet, dass der polymere Blendpartner (IIn) ein kautschuk-modifiziertes Propfpolymer ist, welches
B.1a 5 bis 95 Gew.-%, vorzugsweise 20 bis 92 Gew.-%, insbesondere 30 bis 91 Gew.-%, bezogen auf das Pfropfpolymerisat, wenigstens eines Vinylmonomeren auf
B.2a 95 bis 5 Gew.-%, vorzugsweise 80 bis 8 Gew.-%, insbesondere 70 bis 9 Gew.-%, bezogen auf das Pfropfpolymerisat, einer oder mehrerer kautschukelastischer Pfropfgrundlagen mit Glasübergangstemperaturen < -50°C, weiter bevorzugt von < - 60°C, besonders bevorzugt < -70°C umfasst.

Bevorzugte kautschukbasierte Pfropfpolymerisate können
B.1a 5 bis 95 Gew.-%, vorzugsweise 20 bis 92 Gew.-%, insbesondere 30 bis 91 Gew.-%, bezogen auf das Pfropfpolymerisat, wenigstens eines Vinylmonomeren auf
B.2a 95 bis 5 Gew.-%, vorzugsweise 80 bis 8 Gew.-%, insbesondere 70 bis 9 Gew.-%, bezogen auf das Pfropfpolymerisat, einer oder mehrerer kautschukelastischer Pfropfgrundlagen mit Glasübergangstemperaturen < -50°C, weiter bevorzugt von < -60°C, besonders bevorzugt < -70°C umfassen.

Die Glasübergangstemperatur wird, sofern in der vorliegenden Erfindung nicht ausdrücklich anders beschrieben, für alle Komponenten mittels dynamischer Differenzkalorimetrie (DSC) nach DIN EN 61006 (Version von 1994) bei einer Heizrate von 10 K/min mit Bestimmung der Tg als Mittelpunkttemperatur (Tangentenmethode) ermittelt.

Die Pfropfgrundlage B.2a hat im Allgemeinen eine mittlere Teilchengröße (D50-Wert) von 0,05 bis 10,00 µm, vorzugsweise von 0,1 bis 5,0 µm und besonders bevorzugt von 0,2 bis 1,5 µm.

Die mittlere Teilchengröße D50 ist der Durchmesser, oberhalb und unterhalb dessen jeweils 50 Gew.-% der Teilchen liegen. Er wird, soweit in der vorliegenden Erfindung nicht ausdrücklich anders beschrieben, für alle Komponenten mittels Ultrazentrifugenmessung (W. Scholtan, H. Lange, Kolloid, Z. und Z. Polymere 250 (1972), 782-1796) bestimmt.

Die Monomere B.1a sind vorzugsweise Gemische aus
B.1.1 65 bis 85 Gew.-%, besonders bevorzugt 70 bis 80 Gew.-%, weiter bevorzugt 74 bis 78 Gew.-%, jeweils bezogen auf die Summe aus B.1.1 und B.1.2, Vinylaromaten und/oder kernsubstituierten Vinylaromaten (wie Styrol, α-Methylstyrol, p-Methylstyrol, p-Chlorstyrol) und/oder (Meth)Acrylsäure-(C1-C8)-Alkylester, wie Methylmethacrylat, Ethylmethacrylat), und
B.1.2 15 bis 35 Gew.-%, besonders bevorzugt 20 bis 30 Gew.-%, weiter bevorzugt 22 bis 26 Gew.-%, jeweils bezogen auf die Summe aus B.1.1 und B.1.2, Vinylcyanide (ungesättigte Nitrile wie Acrylnitril und Methacrylnitril) und/oder (Meth)Acrylsäure-(C1-C8)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid.

Bevorzugte Monomere B.1.1 sind ausgewählt aus mindestens einem der Monomere Styrol, α -Methylstyrol und Methylmethacrylat, bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril. Alternativ bevorzugte Monomere sind B.1.1 Methylmethacrylat und B.1.2 Methylmethacrylat.

Als Pfropfgrundlage B.2a der Pfropfpolymerisate eignen sich beispielsweise Dienkautschuke, EP(D)M-Kautschuke, also solche auf Basis Ethylen/Propylen und gegebenenfalls Dien, Acrylat-, Polyurethan-, Silikon-, Chloropren, Ethylen/Vinylacetat- sowie Acrylat-Silikon-Komposit-Kautschuke.

Bevorzugte Pfropfgrundlagen B.1.2 sind Dienkautschuke, bevorzugt enthaltend Butadien oder Copolymerisate aus Dienen, bevorzugt enthaltend Butadien, und weiteren copolymerisierbaren Vinyl-Monomeren (z.B. gemäß B.1.1 und B.1.2) oder Gemische aus einer oder mehrerer der zuvor genannten Komponenten.

Besonders bevorzugt ist als Pfropfgrundlage B.2a reiner Polybutadienkautschuk. In einer weiteren bevorzugten Ausführungsform handelt es sich bei B.2a um Styrol-Butadien-Kautschuk, besonders bevorzugt um Styrol-Butadien-Blockcopolymer-Kautschuk.

Der Gelanteil der Pfropfgrundlage B.2a beträgt mindestens 30 Gew. %, vorzugsweise mindestens 40 Gew.-%, insbesondere mindestens 60 Gew.-%, jeweils bezogen auf B.2a und gemessen als unlöslicher Anteil in Toluol.

Der Gelgehalt der Pfropfgrundlage B.2a bzw. der erfindungsgemäß eingesetzten kautschukmodifizierten Pfropfpolymere wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Geeignete Polymerisate sind beispielsweise ABS- oder MBS-Polymerisate, wie sie z.B. in der DE-OS 2 035 390 (=US PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die kautschukmodifizierten Pfropfcopolymerisate werden durch radikalische Polymerisation, z.B. durch Emulsions-, Suspensions-, Lösungs- oder Massepolymerisation hergestellt. Es können auch Mischungen von in unterschiedlichen Verfahren hergestellten Pfropfpolymerisaten verwendet werden.

Wenn die kautschukmodifizierten Pfropfpolymerisate in Emulsions-Polymerisation hergestellt werden, so umfassen diese
B.1a 5 bis 75 Gew.-%, bevorzugt 20 bis 60 Gew.-%, besonders bevorzugt 25 bis 50 Gew.-%, bezogen auf das Pfropfpolymerisat, wenigstens eines Vinylmonomeren auf
B.2a 95 bis 25 Gew.-%, bevorzugt 80 bis 40 Gew.-%, besonders bevorzugt 75 bis 50 Gew.-%, bezogen auf das Pfropfpolymerisat, einer oder mehrerer kautschukelastischer Pfropfgrundlagen mit Glasübergangstemperaturen < -50°C, weiter bevorzugt von < -60°C, besonders bevorzugt < -70°C.

Die Pfropfgrundlage B.2a von in Emulsions-Polymerisation hergestellten kautschukmodifizierten Pfropfpolymerisaten haben eine mittlere Teilchengröße (D50-Wert) von 0,05 bis 2,00 µm, bevorzugt von 0,1 bis 1,0 µm, besonders bevorzugt von 0,2 bis 0,5 µm. In Emulsions-Polymerisation hergestellte kautschukmodifizierte Pfropfpolymerisate weisen einen Gelgehalt, gemessen in Aceton als Lösungsmittel, von bevorzugt mindestens 30 Gew.-%, besonders bevorzugt von mindestens 60 Gew.-%, weiter bevorzugt von mindestens 80 Gew.-% auf.

Wenn die kautschukmodifizierten Pfropfpolymerisate in Suspensions-, Lösungs- oder Massepolymerisation hergestellt werden, so umfassen diese
B.1a 80 bis 95 Gew.-%, bevorzugt 84 bis 92 Gew.-%, besonders bevorzugt 87 bis 91 Gew.-%, bezogen auf das Pfropfpolymerisat, wenigstens eines Vinylmonomeren auf
B.2a 20 bis 5 Gew.-%, bevorzugt 16 bis 8 Gew.-%, besonders bevorzugt 13 bis 9 Gew.-%, bezogen auf das Pfropfpolymerisat, einer oder mehrerer kautschukelastischer Pfropfgrundlagen mit Glasübergangstemperaturen < -50°C, weiter bevorzugt von < -60°C, besonders bevorzugt < -70°C.

Die Pfropfgrundlage B.2a von in Suspensions-, Lösungs- oder Massepolymerisation hergestellten Pfropfpolymerisaten haben eine mittlere Teilchengröße (D50-Wert) von 0,3 bis 10,00 µm, bevorzugt von 0,4 bis 5,0 µm, besonders bevorzugt von 0,5 bis 1,5 µm.

In Suspensions-, Lösungs- oder Massepolymerisation hergestellte Pfropfpolymerisate weisen einen Gelgehalt, gemessen in Aceton als Lösungsmittel, von bevorzugt 10 bis 50 Gew.-%, besonders bevorzugt von 15 bis 40 Gew.-%, weiter bevorzugt von 18 bis 30 Gew.-% auf.

Besonders geeignete im Emulsions-Polymerisationsverfahren hergestellte Pfropfpolymerisate sind beispielsweise ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Weitere besonders geeignete im Emulsions-Polymerisationsverfahren hergestellte Pfropfpolymerisate sind MBS-Modifikatoren mit Kern-Schale-Struktur.

Es ist bevorzugt, dass das kautschuk-modifizierte Pfropfpolymer zusätzlich ein freies, d.h. nicht an die Kautschukgrundlage chemisch gebundenes und nicht in den Kautschukpartikeln eingeschlossenes Vinyl(co)polymerisat enthält, bevorzugt ein Vinyl(co)polymerisat bestehend aus den Monomeren gemäß B.1a. Dieses kann herstellungsbedingt bei der Polymerisation der Pfropfpolymerisate entstehen (die Pfropfung auf die Pfropfgrundlage ist nicht immer vollständig) oder aber separat polymerisiert und zugemischt werden. Ebenso ist es möglich, dass ein Teil des freien Vinyl(co)polymerisat herstellungsbedingt aus den Pfropfpolymeren selbst stammt und ein anderer Teil separat polymerisiert und dann zugesetzt wurde. Der Anteil des freien Vinyl(co)polymerisat (unabhängig von dessen Ursprung), gemessen als in Aceton löslicher Anteil, in einer möglichen Mischung aus kautschukmodifizierten Pfropfpolymeren und kautschukfreien Vinyl(co)polymerisaten beträgt, bezogen auf diese Mischung, bevorzugt mindestens 5 Gew.-%, besonders bevorzugt mindestens 30 Gew-%, weiter bevorzugt mindestens 50 Gew.-%.

Besonders bevorzugt handelt es sich bei dem kautschuk-modifizierten Pfropfpolymer um Kern-Schale Propfcopolymere. Dabei handelt es sich insbesondere um einen Schlagzähmodifikator. Beispiele für kommerziell erhältliche Kern-Schale-Pfropfcopolymere umfassen:
Von Dow Chemical Japan: Paraloid EXL2602, Paraloid EXL2603, Paraloid EXL2690, Paraloid EXL2691J, Paraloid EXL2650J, Paraloid EXL2655, Paraloid EXL2311, Paraloid EXL2313, Paraloid EXL2315, Paraloid KM330, Paraloid KM336P, Paraloid KCZ201; Von Mitsubishi Rayon Co., Ltd.: Metablene C-223A, Metablene E-901, Metablene S-2001, Metablene W-450A, Metablene SRK-200; Von Kaneka Corporation: Kaneace M-210, Kaneace M-511, Kaneace M-600, Kaneace M-400, Kaneace M-580, Kaneace M-711, Kaneace MR-01.

Der Gehalt kautschuk-modifizierten Pfropfpolymers in Mischung mit dem Vinyl(co)polymer in der erfindungsgemäßen thermoplastischen Zusammensetzung beträgt vorzugsweise 3 bis 20 Massenteile bezogen auf 100 Massenteile der Komponente (I). Bei Überschreitung der oberen Grenze dieses Bereichs verschlechtert sich tendenziell das Erscheinungsbild des resultierenden Formteils und die Wärmebeständigkeit nimmt ab. Bei Unterschreitung der unteren Grenze wird die Verbesserung der Oberflächenschlagzähigkeit und Schlagfestigkeit weniger deutlich. Die untere Grenze des Gehalts kautschuk-modifizierten Pfropfpolymers in Mischung mit dem Vinyl(co)polymer beträgt besonders bevorzugt 5 Massenteile. Die obere Grenze des Gehalts liegt besonders bevorzugt bei 15 Massenteilen.

Die polymeren Blendpartner können einzeln oder als Mischung von zwei oder mehr davon verwendet werden, und ein oder mehrere zu verwendende polymere Blendpartner können entsprechend dem beabsichtigten Verwendungszweck unter Berücksichtigung erforderlicher Eigenschaften wie Wärmebeständigkeit, chemische Beständigkeit und Formbarkeit geeignet ausgewählt werden.

Der Fachperson ist ersichtlich, wie der mindestens eine polymere Blendpartner mit dem Copoly(ester)carbonat vermischt werden kann. Es gibt keine besonderen Einschränkungen hinsichtlich der Methoden zum Mischen des Copoly(ester)carbonats mit diesem polymeren Blendpartner und ggf. weiteren Additiven und des Zeitpunkts des Mischens. Hinsichtlich des Zeitpunkts des Mischens kann der polymere Blendpartner beispielsweise während der Polymerisationsreaktion oder zum Zeitpunkt der Beendigung der Polymerisationsreaktion zugegeben werden, oder es kann zugegeben werden, wenn sich das Copoly(ester)carbonat in einem geschmolzenen Zustand befindet, wie zum Beispiel beim Kneten des Copoly(ester)carbonats. Es ist auch möglich, den polymeren Blendpartner mit dem Copoly(ester)carbonat, das sich in festem Zustand befindet, z.B. in Form von Pellets oder Pulver, zu vermischen und dann die Mischung mittels eines Extruders oder dergleichen zu kneten.

Der Fachperson ist des Weiteren ersichtlich, wie das mindestens eine Additiv dem Copoly(ester)carbonat hinzugefügt werden kann. Dies kann bevorzugt durch Mischen der Bestandteile entweder gleichzeitig oder in beliebiger Reihenfolge mittels einer Mischmaschine wie einem Taumelmischer, Zweizylindermischer, Nauta-Mischer, Banbury-Mischer, Knetwalzen oder Extruder hergestellt werden.

Erfindungsgemäß ist der Begriff "umfassen" bevorzugt als "im Wesentlichen bestehend aus" und ganz besonders bevorzugt als "bestehend aus" zu verstehen.

Bevorzugt ist die erfindungsgemäße thermoplastische Zusammensetzung dadurch gekennzeichnet, dass die Zusammensetzung mindestens ein Additiv (IIa) bis (IIn) in den angegebenen Mengen enthält.
0,05 bis 10 Massenteile (IIa) des UV-Absorber,
0,001 bis 5 Massenteile (IIb) des sterisch gehinderten Amin-Lichtstabilisators,
0,1×10⁻⁵ bis 2×10⁻⁴ Massenteile (IIc) des Bläuungsmittels,
0,001 bis 1 Massenteile (IId) des Antioxidationsmittels,
0,0001 bis 2 Massenteile (IIe) des Gleit- und Entformungsmittels,
0,00001 bis 1 Massenteile (IIf) des säurehaltigen Additivs,
0,05 bis 5 Massenteile (IIg) des OH- und Säuregruppenfängers,
0,1×10⁻⁷ bis 1 ×10⁻³ Masseteile (IIh) der alkalischen Verbindung,
0,1×10⁻⁷ bis 1 ×10⁻³ (IIi) Masseteile des Reduktionsmittels,
0,001 bis 2 Masseteile (IIj) des Antistatikums,
0,001 bis 3 Massenteile (IIk) des Farbmittels,
1 bis 100 Massenteile (IIl) des anorganischen Füllstoffs,
0,01 bis 30 Massenteile (IIm) des Flammschutzmittels und / oder
5 bis 95 Massenteile (IIn) des polymeren Blendpartners umfasst,
wobei die Massenteile jeweils bezogen sind auf 100 Massenteile der Komponente (I).

Es ist insbesondere bevorzugt, dass das die erfindungsgemäße thermoplastische Zusammensetzung zumindest (IId) und (IIe) als Additive enthält.

Dabei ist es ebenso bevorzugt, dass die erfindungsgemäße thermoplastische Zusammensetzung zusätzlich noch zumindest (IIc) und / oder (IIk) als Additiv enthält.

Es ist ebenso bevorzugt, dass das die erfindungsgemäße thermoplastische Zusammensetzung zusätzlich zu (IId) und (IIe) zumindest noch (IIa) und / oder (IIb) als Additiv enthält.

Es ist ebenso bevorzugt, dass das die erfindungsgemäße thermoplastische Zusammensetzung zusätzlich zu (IId) und (IIe) zumindest noch (IIl) und / oder (IIm) als Additiv enthält.

Es ist ebenso bevorzugt, dass das die erfindungsgemäße thermoplastische Zusammensetzung zusätzlich zu (IId) und (IIe) zumindest noch (IIn) als Additiv enthält.

Ganz besonders bevorzugt enthält die erfindungsgemäße thermoplastische Zusammensetzung mindestens ein Additiv (IId), (IIe) und (IIf).

Die erfindungsgemäßen thermoplastischen Zusammensetzungen weisen hervorragende Eigenschaften auf. Es wurde beobachtet, dass aliphatische Polycarbonate aus Isosorbid unstabilisiert zu Viskositäts- bzw. Molekulargewichtsabbau bei Verarbeitung neigen. Dies führt dazu, dass sich die physikalischen Eigenschaften des Polymers durch beispielsweise Spritzguss und/oder Compoundierung negativ verändern. Jeder thermische Verarbeitungsschritt hat also das Potential die Eigenschaften des Polymer zu verschlechtern.

Polycarbonate bzw. Polyestercarbonate weisen üblicherweise entweder OH- oder Phenylendgruppen auf. Bei den Phenylendgruppen kann es sich um Phenylcarbonat oder im Falle der Estercarbonate auch um Phenylestergruppen handeln. Im Falle von Polyestercarbonate sind prinzipiell auch freie Säuregruppen möglich.

Vor allem OH-Endgruppen können zu Umesterungen führen und damit das Molekulargewicht abbauen. Dies kann insbesondere in Kombination mit Feuchtigkeit und Restgehalten an Katalysatoren auftreten. OH-Gruppen können auch thermisch oder photochemisch oxidiert werden. Dies führt zu gefärbten Produkten und ist unerwünscht.

Freie OH-Gruppen können im Falle von Isosorbid auch zu Eliminierungen führen. Prinzipiell ist die Eliminierung aber auch durch Kettenbruch möglich. Derartige Vorgänge werden meist thermisch induziert und schädigen das Polymer da sie zu Farbe und zu Molekulargewichtsabbau führen können. Erfindungsgemäß ist die thermoplastische Zusammensetzung bevorzugt dadurch gekennzeichnet, dass das Copoly(ester)carbonat (I) weniger als 8 % Endgruppen der Formel (Y) enthält, 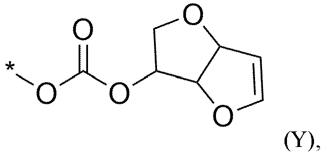 wobei die mit "*" gekennzeichnete Position der Formel (Y), die Position ist, mit der die Endgruppe der Formel (Y) in das Copoly(ester)carbonat einbindet und die % sich auf die Gesamtheit der Endgruppen bezieht.

Insbesondere ist es bevorzugt, dass das Copoly(ester)carbonat (I) weniger als 6 % und ganz besonders bevorzugt weniger als 5 % dieser Endgruppen enthält, wobei die % sich auf die Gesamtheit der Endgruppen bezieht. Diese Endgruppen liegen üblicherweise in einem Bereich von 0,0001 bis 5 %. Prinzipiell können derartige Endgruppen reduziert werden, indem man für die Polykondensation ausreichende Mengen an Arylcarbonat einsetzt, um einen hohen Anteil an Aryl-terminierten Endgruppen zu erreichen. Andererseits darf die Menge an Arylcarbonat nicht zu hoch sein, da sonst das Zielmolekulargewicht nicht erreicht werden kann. Ferner darf das Copoly(ester)carbonat während des Herstellprozesses und in späteren Verarbeitungsschritten nicht auf Temperaturen oberhalb von 300 °C , insbesondere bevorzugt nicht oberhalb von 280 °C erwärmt werden. Bevorzugt enthält das Copoly(ester)carboant mehr als 20 % insbesondere bevorzugt mehr als 30 % an Phenylendgruppen. Der Anteil an Phenylendgruppen zu OH-Endgruppen kann mittels ¹H-NMR bestimmt werden.

Prinzipiell ist es möglich, dass sich der Isosorbidring aufspaltet, was zu einer höheren Anzahl an OH Gruppen beiträgt. Dies kann zu Umesterung, Kettenbruch oder Verzweigung führen. Insgesamt können sich dadurch die Polymereigenschaften deutlich verschlechtern. Die Öffnung des bicyclischen Systems kann vor allem durch im Polymer verbleibende Katalysatoren, wie zum Beispiel alkalische oder saure Bestandteile sowie durch oxidative Prozesse hervorgerufen werden. Prinzipiell ist es auch möglich, das Sorbitol-Verunreinigungen durch den Rohstoff (Isosorbid) eingeschleppt werden. In US20110077377 sind derartige Verunreinigungen bzw. Fehlstrukturen beschrieben.

Die oben genannten Phänomene können dazu beitragen, die Qualität des Copoly(ester)carbonats zu verschlechtern. Deshalb ist es sinnvoll erfindungsgemäß mindestens ein Additiv einzusetzen. Dadurch können thermoplastische Zusammensetzungen mit hervorragenden Eigenschaftsprofilen bereit gestellt werden.

Weiterhin ist es möglich, dass das Polymer Restmonomere enthält. Dabei kann es sich insbesondere um Phenol bzw. substituiertes Phenol handeln, welches in der Polykondensation nicht vollständig entfernt wurde. Phenol und andere Diol-monomere können zu Umesterung und Molekulargewichtsabbau beitragen. Es ist bevorzugt, dass das Polymer weniger als 0,15 Gew.-% bevorzugt weniger als 0,1 Gew.-% insbesondere bevorzugt weniger als 0,09 Gew.-% Phenol enthält.

Die erfindungsgemäßen Zusammensetzungen können beispielsweise hergestellt werden, indem man das Copoly(ester)carbonat und die weiteren Bestandteile in bekannter Weise vermischt und bei Temperaturen von bevorzugt 220°C bis 300°C, in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet. Durch das Compoundieren wird die erfindungsgemäße thermoplastische Formmasse erhalten. In einem Aspekt der vorliegenden Erfindung wird eine thermoplastische Formmasse bereitgestellt, welche erhalten wird aus erfindungsgemäßen thermoplastischen Zusammensetzung. In einem weiteren Aspekt der Erfindung wird ein Formkörper bereitgestellt, welcher erhalten wird aus der thermoplastischen Formmasse. Die erfindungsgemäßen Formkörper können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

### Beschreibung der Figur

Figur 1: ¹H-NMR Spektrum des Copolycarbonats des erfindungsgemäßen Beispiels 17 in CDCl₃
Figur 2: ¹H-NMR Spektrum des Copolycarbonats des erfindungsgemäßen Beispiels 16 in CDCl₃

### Beispiele

### Verwendete Materialien:

Cyclohexandicarbonsäure: 1,4-Cyclohexandicarbonsäure; CAS 1076-97-7 99 %; Tokyo Chemical Industries, Japan, abgekürzt als CHDA.
Diphenylcarbonat: Diphenylcarbonat, 99,5 %, CAS 102-09-0; Acros Organics, Geel, Belgien, abgekürzt als DPC
4-Dimethylaminopyridin: 4-(Dimethylaminopyridin; ≥98,0 %; purum; CAS 1122-58-3; Sigma-Aldrich, München Deutschland, abgekürzt als DMAP
Isosorbid: Isosorbid (CAS: 652-67-5), 99,8 %, Polysorb PS A; Roquette Frères (62136 Lestrem, Frankreich); abgekürzt als ISB
Lithiumhydroxid-monohydrat (CAS: 1310-66-3); >99,0 %; Sigma- Aldrich
Terephthalsäure: (CAS: 100-21-0), 99+%, Acros Organics, Geel, Belgien
Tricyclodecandimethanol: (CAS: 26896-48-0) ; Isomerengemisch ; OQ Chemicals, 40789 Monheim, Deutschland
Dimerfettsäure: Pripol 1009 (CAS : 68783-41-5); Mn ca. 570 g/mol; hydriert, Croda, 41334 Nettetal, Deutschland
Natrium-(2-ethyl)hexanoat: (CAS: 19766-89-3); 97%; Sigma-Aldrich, München Deutschland
Dimerdiol: Pripol 2030 (CAS: 147853-32-5) ; Croda, 41334 Nettetal, Deutschland
Methyl-tert-butylether (CAS: 1634-04-4); Azelis Deutschland GmbH, 53757 Sankt Augustin, Deutschland, abgekürzt als MTBE
Methylethylketon (CAS: 78-93-3); Azelis Deutschland GmbH, 53757 Sankt Augustin, Deutschland, abgekürzt als MEK
Isopropanol (CAS: 67-63-0); Azelis Deutschland GmbH, 53757 Sankt Augustin, Deutschland
Zeolith 4A: Natriumaluminiumsilikat (CAS: 1318-02-1)
Polycarbonat auf Basis von Isosorbid und Cyclohexandimethanol 30:70 (CAS: 25037-45-0): herstellbar nach EP2033981 A1; abgekürzt als PC1
2-Butyl-2-ethyl-1,3-propandiol (CAS: 115-84-4); 99,0 %; Sigma-Aldrich, München Deutschland, abgekürzt als BEPD
Toluol (CAS: 108-88-3); 99%; Sigma-Aldrich, München Deutschland
2,2,4-Trimethylpentan oder auch Isooctan (CAS: 540-84-1); 99,5%; Sigma-Aldrich, München Deutschland
Lipidlösung: SmofKabiven zentral Emulsion zur Infusion; qualitative und quantitative Zusammensetzung: 1000 ml enthalten: 508 ml Aminosäurenlösung mit Elektrolyten, 302 ml Glucoselösung 42 %, 190 ml Lipidemulsion. Dies entspricht folgenden Gesamt-Zusammensetzungen: Alanin 7,1 g, Arginin 6,1 g, Glycin 5,6 g, Histidin 1,5 g, Isoleucin 2,5 g, Leucin 3,8 g, Lysinacetat 3,4 g, Methionin 2,2 g, Phenylalanin 2,6 g, Prolin 5,7 g, Serin 3,3 g, Taurin 0,5 g, Threonin 2,2 g, Tryptophan 1,0 g, Tyrosin 0,20 g, Valin 3,1 g, Calciumchlorid (als Calciumchlorid-Dihydrat) 0,28 g, Natriumglycerophosphat (hydratisiert) 2,1 g, Magnesiumsulfat (als Magnesiumsulfat-Heptahydrat) 0,61 g, Kaliumchlorid 2,3 g, Natriumacetat (als Natriumacetat-Trihydrat) 1,7 g, Zinksulfat (als Zinksulfat-Heptahydrat) 0,0066 g, Glucose (als Glucose-Monohydrat Ph.Eur.) 127 g, raffiniertes Sojaöl (Ph.Eur.) 11,4 g, mittelkettige Triglyceride 11,4 g, raffiniertes Olivenöl 9,5 g, Omega-3-Säuren-reiches Fischöl 5,7 g.
Durabio D7340 ; Copolycarbonat aus Isosorbid und Cyclohexandimethanol
Phenolisches Antioxidanz: Irganox 1010; CAS 6683-19-8 der Firma BASF SE, Ludwigshafen.
Phosphor-haltiges Antioxidationsmittel: ADK Stab PEP 36; CAS 80693-00-1 der Firma ADEKA Polymer Additives Europe, Mulhouse, Frankreich
Entformungsmittel: Loxiol 895; Ethylenglycoldistearat; CAS 91031-31-1 / 627-83-8 der Firma Emery Oleochemicals
Säure-haltiges Additiv: 1,2,3-Propantriol, 1,2,3-tribenzenesulfonat; CAS 81420-25-9

### Analytische Methoden:

### Lösungsviskosität:

Die relative Lösungsviskosität (ηrel; auch als eta rel bezeichnet) wurde in Dichlormethan bei einer Konzentration von 5 g/l bei 25 °C mit einem Ubbelohde-Viskosimeter bestimmt. Die Bestimmung erfolgte nach DIN 51562-3; 1985-05. Dabei werden die Durchlaufzeiten des zu vermessenden Polyestercarbonats durch das Ubbelohde-Viskosimeter gemessen, um anschließend den Viskositätsunterschied zwischen Polymerlösung und seinem Lösungsmittel zu ermitteln. Dazu wird zunächst eine Kalibrierung des Ubbelohde-Viskosimeters mittels Vermessung der reinen Lösungsmittel Dichlormethan, Trichlorethylen und Tetrachlorethylen durchgeführt (dabei erfolgen immer mindestens 3 Messungen, höchstens 9 Messungen). Daraufhin erfolgt die eigentliche Kalibrierung mit dem Lösungsmittel Dichlormethan. Im Anschluss wird die Polymerprobe eingewogen, in Dichlormethan gelöst und für diese Lösung dann dreimal die Durchflusszeit bestimmt. Der Mittelwert der Durchflusszeiten wird über die Hagenbach-Korrektur korrigiert und die relative Lösungsviskosität errechnet.

### Bestimmung der Glastemperatur:

Die Glastemperatur wurde mittels dynamischer Differenzkalorimetrie (DSC) gemäß der Norm DIN EN ISO 11357-1:2009-10 und ISO 11357-2:2013-05 bei einer Heizrate von 10 K/min unter Stickstoff mit Bestimmung der Glastemperatur (Tg) gemessen als Wendepunkt im zweiten Aufheizvorgang bestimmt.

### Test der Heißwasserbeständigkeit:

Die Polymerproben wurden für 4 Stunden unter Rückfluss in vollentsalztem Wasser gekocht und danach visuell abgemustert. Sofern diese nicht vollständig deformiert waren, wurden sie für weitere 4 Stunden unter selbigen Bedingungen gekocht und das Resultat visuell ausgewertet.

### Deformations- und Bruchverhalten unter Schlagbelastung ohne Kerbe (Charpy-Schlagversuch):

Schlagbiegeversuch ohne und mit 2mm V-Kerbe im Charpy-Versuch bei Raumtemperatur, durchgeführt mit einem Eigenbaufallwerk der Polymerphysik mit 1.86 kg Fallmasse, Dorndurchmesser 20mm, Auflagerdurchmesser 62 mm.

### Test der Chemikalienbeständigkeit (Lipidlösung, Isooktan:Toluol 1:1):

Mindestens zwei Flachstäbe mit 80mm Länge, 4mm Höhe und 10mm Breite wurden in eine gebogene Schablone mit einem Radius von 99cm eingespannt. Dies entsprach einer Randfaserdehnung von 2%. Die Oberfläche der Stäbe wurde durch ständiges Benetzen mit oder dem vollständigen Eintauchen in das Testmedium kontaminiert. Die Zeit bis zum Bruch wurde gemessen. Nach 5-14 Tagen wurde die Messung abgebrochen.

### Bestimmung der Scherrheologie:

Die Messung wurde an einem ARES-G2 Rheometer der Firma TA bestimmt. Der oszillatorische Frequenz-Durchlauf-Test im Bereich 0,001 Hz bis 10000 Hz wurde isotherm bei 200°C durchgeführt und die komplexe Viskosität daraus abgeleitet.

### Bestimmung der Kratzbeständigkeit:

Zur Bestimmung der Kratzbeständigkeit wurden 80x10x4mm Flachstäben oder 60x60x2mm Platten bei 245 °C bis 260 °C spritzgegossen. Die Vermessung erfolgte mit einem Erichsenprüfstab 318, welcher mit der Prüfspitze 1 (Hartmetallkugel) und der Feder im Messbereich von 0-10N versehen war. Er wurde in ein Fahrgestell eingespannt, so dass die eingestellte Kraft auf die Prüfspitze wirkte. Das Gestell samt Prüfstab wurde auf 1N eingestellt und 10mm über die zu prüfende Oberfläche gerollt. Sind von zwei Prüfern keine Kratzspuren visuell erkennbar, wurde die Kraft um 0,5N erhöht und der Test erneut durchgeführt. Dies wurde so lange wiederholt, bis eine sichtbare Kratzspur im Polymer verblieb. Die dabei höchste ausgeübte Kraft wird angegeben.

### ¹H-NMR-Spektroskopie:

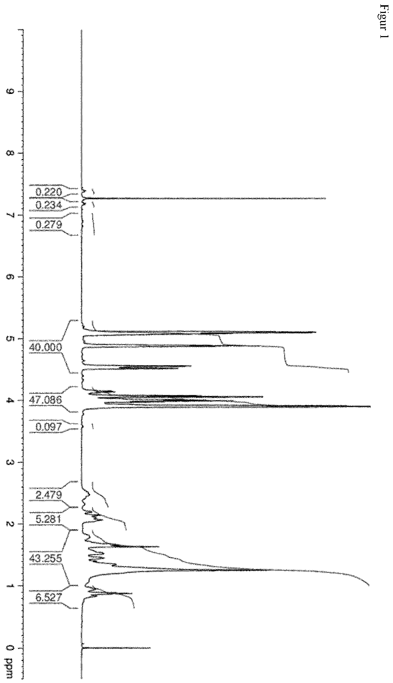

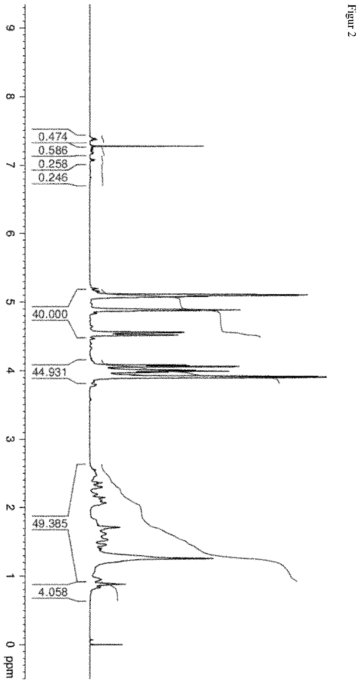

Die Messungen wurden an einem Bruker Avance NEO 600 MHz NMR-Spektrometer durchgeführt. Die Messung wurde in CDCl₃ durchgeführt. Die vermessenen Proben enthielten Isosorbid, Tricyclodecandimethanol und Dimerdiol oder Dimerfettsäure. Zur Auswertung der molaren Verhältnisse dieser Komponenten zueinander wurde, wie folgt, vorgegangen:
Die jeweiligen charakteristischen Signale der Monomere wurden integriert und auf die Anzahl der jeweiligen Protonen "normiert".
Beispielhaft wird hier die Auswertung der erfindungsgemäßen Polymere der Beispiele 17 (mit Dimerdiol) und 16 (mit Dimerfettsäure) erläutert. Dazu wird auf Figuren 1 und 2 verwiesen.

Für Polymere basierend auf einer Monomerzusammensetzung aus Isosorbid, TCD-Dimethanol und Dimerdiol (hier anhand Pripol 2030; erfindungsgemäßes Beispiel 17, siehe Figur 1) erfolgt die Berechnung der molaren Anteile beispielhaft wie folgt:
Für den Gehalt an Isosorbid wurden die Signale zwischen 5,3 und 4,5 ppm herangezogen. Das Integral wurde auf "40" gesetzt und korrespondiert zu 4 Protonen von Isosorbid.
Der Gehalt an TCD-Dimethanol sowie an Dimerdiol wurde aus den Signalen zwischen 4,2 und 3,8 ermittelt. Hier liegen 4 Protonen von Isosorbid sowie 2 -CH₂- Gruppen von TCD-Dimethanol (-O-CH₂-) und 2 -CH₂-Gruppen von Dimerdiol (-O-CH₂-). In diesem Bereich liegen somit ebenfalls 4 Protonen von TCD-Dimethanol und 4 Protonen von Dimerdiol.

Den relativen Anteil an TCD-Dimethanol konnte man aus dem Bereich von 2,3 bis 1,9 ppm ermitteln. In diesem Bereich liegen keine Protonen von Dimerdiol. Dieser Bereich entspricht ca. 4 Protonen von TCD-Dimethanol. Für 1 Proton ergab sich somit 5,281/4 = 1,32. Im Signalbereich zwischen 1,0 und 0,65 ppm lagen 8,3 H von Dimerdiol und 1 H von TCD-Dimethanol. Damit ergab sich für den Anteil von Dimerdiol 6,527 - 1,32 = 5,207 und damit 5,207/8,3 = 0,627. Der relative Anteil von TCD-Dimethanol zu Dimerdiol entsprach somit 1,32 zu 0,627. Mit diesen Anteilen wure das Integral des Bereichs 4,2 bis 3,8 ppm gewichtet. Abzüglich der Protonen von Isosorbid ergab sich für die Protonen von Dimerdiol und TCD-Dimethanol folgendes bereinigtes Integral: 47,086 - 40 = 7,086. Dieses Integral wurde mit dem Verhältnis von 1,32 zu 0,627 gewichtet. Damit ergaben sich als bereinigtes Integral für TCD-Dimethanol 4,80 und für Dimerdiol 2,28.

| Bereich Signal [ppm] | Molekül | Bereinigtes Integral | Anzahl Protonen | Mol-Teile | Mol-% |
|---|---|---|---|---|---|
| 5,3 - 4,5 | Isosorbid | 40 | 4 | 10 | 85,0 |
| 4,2 - 3,8 | TCD-Dimethanol | 4,80 | 4 | 1,20 | 10,2 |
| 4,2 - 3,8 | Dimerdiol | 2,28 | 4 | 0,57 | 4,8 |

| | | | | | |
|---|---|---|---|---|---|
| Σ: 11,77 | | | | | |

Des Weiteren lässt sich die Zusammensetzung des erfindungsgemäßen Beispiels 16 basierend auf einem Polymer aus Isosorbid, Tricyclodecandimethanol sowie Dimerfettsäure ebenso anhand des H-NMR-Spektrums brechnen.

Für den Gehalt an Isosorbid wurden die Signale zwischen 5,3 und 4,5 ppm herangezogen. Das Integral wurde auf "40" gesetzt und korrespondiert zu 4 Protonen von Isosorbid.

Der Gehalt an Tricyclodecandimethanol wurd aus den Signalen zwischen 4,2 und 3,8 ppm ermittelt. Hier liegen 4 Protonen von Isosorbid sowie 2 -CH₂- Gruppen von Tricyclodecandimethanol (-O-CH₂-). In diesem Bereich liegen somit ebenfalls 4 Protonen von Tricyclodecandimethanol.

Den Dimerfettsäuregehalt wurde durch die Integration der Signale bei 0,95 - 0,6 ppm berechnet.

Hier liegen 2 CH₃ Gruppen der Dimerfettsäure sowie ein Proton des Tricyclodecandimethanols. 4 Protonen des Tricyclodecandimethanols entsprechen 4,931 (Integral bei 4,2 bis 3,8 ppm ist 44,931 - 40 (4 Protonen von Isosorbid) = 4,931). 4,931/4 = 1,23, was der Intensität eines Protons von Tricyclodecandimethanol entspricht. Diese Signalintensität wurde vom Integral bei 0,95 - 0,6 ppm abgezogen, um die Intensität der CH₃ Gruppen der Dimerfettsäure zu erhalten: 4,058-1,23 = 2,828.

| Bereich Signal [ppm] | Molekül | Bereinigtes Integral | Anzahl Protonen | Mol-Teile | Mol-% |
|---|---|---|---|---|---|
| 5,3 - 4,5 | Isosorbid | 40 | 4 | 10 | 85,4 |
| 4,2 - 3,8 | TCD-Dimethanol | 4,9311 | 4 | 1,233 | 10,5 |
| 0,95 - 0,6 | Dimerfettsäure | 2,8255 | 6 | 0,471 | 4,0 |

| | | | | | |
|---|---|---|---|---|---|
| Σ: 11,704 | | | | | |

### Herstellung der Edukte:

### Herstellung von Dimerfettsäurediphenylester

107,32 g (0,501 mol) Diphenylcarbonat sowie 142,5 g (0,250 mol) Dimerfettsäure wurden mit 0,0025 g (100 ppm) 4-Dimethylaminopyridin in einem Mehrhalskolben vorgelegt. Das Gemisch wurde mit viermaligem Evakuieren und Belüften mit Stickstoff inertisiert. Das Gemisch wurde mittels Metallbad auf 160 °C erwärmt. Dabei entwickelte sich ab etwa 140 °C Kohlenstoffdioxid. Sobald der Volumenstrom nachließ, wurde die Temperatur bis auf maximal 240 °C erhöht. Dabei wurde Phenol abdestilliert. Sobald die Gasentwicklung beendet war, wurde Vakuum angelegt und der Druck sukzessive bis auf ca. 1 mbar reduziert. Die Reaktion wurde so lange weitergeführt, bis sich kein Phenol mehr entwickelte.

### Herstellung von Tetrabutylphosphoniumacetat

483,38 g einer wässrigen Tetrabutylphosphonumhydroxid-Lösung (Massenanteil: 40%) wurden in einen Erlenmeyerkolben vorgelegt. Nun wurden etwa 40 mL (0,7 mol) reine Essigsäure hinzugetropft, bis ein pH-Wert von ca. 6 erreicht war. Das Wasser wurde mittels Destillation bei 80 °C und <0,2 mbar entfernt. Es wurden 200 mL Isopropanol, Zeolithe (4A) zur Trocknung sowie 0,5 g Aktivkohle zur Aufreinigung hinzugegeben und für mindestens 12 h in einem abgeschlossenem Gefäß ruhen gelassen. Anschließend wurde das Produkt filtriert und bei 80 °C und <0,2 mbar maximal eingeengt. Beim Abkühlen im gasdichten Gefäß kristallisierte das Produkt bei etwa 40 °C aus. Farbe: hellbraun

### Herstellung von 1,4-Cyclohexandicarbonsäure-diphenylester

200g (1,1616 mol) CHDA, 500 g (2,334 mol) DPC sowie 0,14 g (200 ppm) DMAP wurden in einen 1L Dreihalskolben mit Destillationsbrücke vorgelegt. Es wurde 4 mal evakuiert und mit N₂ inertisiert um den Sauerstoffgehalt zu minimieren.

Nach dem Aufschmelzen bei 180 °C entwickelte sich CO₂. Sobald der Volumenstrom nachließ, wurde die Temperatur bis auf maximal 240 °C erhöht (Phenol destilliert ab ca. 220 °C). Nach Abschluss der Gasentwicklung (Farbumschlag) wurde der Druck bei laufender Destillation bis auf etwa 50 mbar verringert. Es wurde mit N₂ belüftet und die Vorlage gewechselt. Nun wurde der Druck weiter verringert. Der Zwischenlauf war DPC und konnte ebenfalls entfernt werden. Die dritte Fraktion (<5 mbar, 240 °C) war das Hauptprodukt. Es wurde destilliert, bis der Sumpf auf etwa 50 mL eingeengt war, und das weiße Produkt nach dem Abkühlen entnommen. Es war ein leichter Phenolgeruch erkennbar.

Es erfolgte eine Umkristallisation mit einem Hexan/Ethylacetat Gemisch (Verhältnis ca. 2:1) unter Verwendung von 2-5 % de r Gesamtmasse Aktivkohle. Das vakuumfiltrierte Produkt war feinkristallin und hellweiß.

### Herstellung von Terephthalsäurediphenylester

428,44 g (2,00 mol) DPC, 162,81 g (0,98 mol) Terephthalsäure, sowie 0,15 g (250 ppm) DMAP wurden in einen 1L Dreihalskolben mit Destillationsbrücke vorgelegt. Es wurde 4 mal evakuiert und mit N₂ inertisiert, um den Sauerstoffgehalt zu minimieren.

Nach dem Erwärmen der Suspension bei 180 °C entwickelte sich CO₂. Sobald der Volumenstrom nachließ, wurde die Temperatur bis auf maximal 260 °C erhöht (Phenol destilliert ab ca. 220 °C). Nach Abschluss der Gasentwicklung (Farbumschlag der nun klaren Lösung in ein orange) wurde der Druck bei laufenden Destillation bis auf etwa 50 mbar verringert. Es wurde mit N₂ belüftet und die Vorlage gewechselt. Nun wurde der Druck weiter verringert. Der Zwischenlauf war DPC und konnte ebenfalls entfernt werden. Sobald sich kein Destillat mehr bildete, wurde der Sumpf ausgegossen.

Nach dem Abkühlen wurde dieser mechanisch möglichst fein zerkleinert und mit Aceton am Rückfluss ausgekocht (die Dauer richtete sich nach der eingesetzten Menge Aceton sowie dem Zerkleinerungsgrad des Rohprodukts). Anschließend wurde das Aceton/Terephthalsäurediphenylestergemisch auf 10 °C gekühlt und abgenutscht. Die intensiv gelbliche Mutterlauge wurde verworfen, das reine, fein kristalline Produkt nachgetrocknet. Das Produkt hatte einen perlmuttartigen Glanz und wies eine weißlich, leicht gelbliche Färbung auf.

### Beispiel 1 (Vergleich; PC1)

### Beispiel 2: Polyestercarbonat aus 67 % Isosorbid und 33 % CHDA (Vergleich)

51,60 (0,300 mol) 1,4-Cyclohexandicarbonsäure, 89,49 g (0,612 mol) Isosorbid sowie 192,90 g (0,900 mol) Diphenylcarbonat, 300 ppm DMAP (bezogen auf die Gesamtmasse aller Edukte) und 0,365 g (1,15 mmol) Tetrabutylphosphoniumacetat wurden in einem Kolben mit Kurzwegabscheider vorgelegt. Die Apparatur mit den Edukten wurde durch 4-faches Evakuieren und Belüften mit Stickstoff von Sauerstoff befreit. Danach wurde das Gemisch auf 160 °C erwärmt. Nachdem die Temperatur erreicht war, entstand Kohlenstoffdioxid. Die Temperatur wurde innerhalb von ca. 90 Minuten schrittweise - je nach beobachteter Reaktivität - bis auf 220 °C erhöht. Dabei begann sich Phenol abzuscheiden. Dann wurde der Druck schrittweise reduziert. Innerhalb von ca. 30 Minuten wurde der Druck auf 0,5 mbar reduziert. Es wurden noch 10 Minuten bei diesem Druck rühren gelassen.

Man erhielt ein transparentes, leicht orange-gefärbtes Polymer mit einer eta rel von 1,293.

### Beispiel 3: Polyestercarbonat aus Cyclohexandicarbonsäure, Terephthalsäure, Dimerfettsäure und Isosorbid (Vergleich)

8,31 g (0,05 mol) Terephthalsäure, 8,60 g (0,05 mol) CHDA, 4,275 g (0,0075 mol) Dimerfettsäure sowie 29,83 g (0,204 mol) Isosorbid wurden in einem Kolben mit Kurzwegabscheider vorgelegt. Ferner wurden 13,5 ppm Natrium in Form von Natrium-2-ethylhexanoat in MTBE-Lösung (0,5 g/L) und 0,0226 g (200 ppm) DMAP zugegeben. Der Kolbeninhalt wurde durch 4-faches Evakuieren und Belüften mit Stickstoff von Sauerstoff befreit. Danach wurde das Gemisch aufgeschmolzen und auf 160 °C erwärmt. Dabei wurde eine Kohlenstoffdioxidentwickelung beobachtet. Innerhalb von 60 Minuten wurde die Temperatur schrittweise bis auf 225 °C erhöht. Danach wurde der Druck vorsichtig in mehreren Schritten innerhalb von 60 Minuten auf 0,5 mbar gesenkt. Dann wurde die Temperatur auf 235 °C erhöht. Es wurde noch 10 Minuten bei 235 °C und 0,5 mbar gerührt. Man erhielt ein gelbes Polymer mit einem eta rel von 1,335.

### Beispiel 4: Herstellung eines Copolycarbonats mit Dimerdiol ohne TCD (Vergleich)

64,91 g (0,303 mol) Diphenylcarbonat, 8,1 g (0,015 mol) Pripol 2030 sowie 41,65 g (0,285 mol) Isosorbid wurden in einem Kolben mit Kurzwegabscheider vorgelegt. Zu diesem Gemisch wurden noch 0,0001 g Natriumethylhexanoat in Form von 200 µl einer MTBE-Lösung (0,5 g/L) sowie 0,00389 g (38,9 µl) Tetrabutylphosphoniumacetat in einer MEK-Lösung (100 g/L) gegeben. Das Gemisch wurde durch vierfaches Evakuieren und Inertisieren mit Stickstoff von Sauerstoff befreit und bei Normaldruck auf 160 °C unter Rühren erwärmt und aufgeschmolzen. Sobald eine homogene, niederviskose Flüssigkeit vorlag, wurde die Temperatur unter schnellem Rühren (ca. 500 rpm) langsam auf 245 °C erhöht. Dabei destillierte ab ca. 220 °C Phenol ab. Der Druck wurde nun vorsichtig, schrittweise auf bis ca. 0,5 mbar reduziert. Dabei wurde kontinuierlich Phenol entfernt. Bei ca. 0,5 mbar wurde noch für 10 Minuten bei niedriger Drehzahl gerührt. Man erhielt ein transparentes leicht gelb gefärbtes Polymer mit einem eta rel. von 1,389.

### Beispiel 5: Herstellung eines Copolycarbonats mit Dimerdiol ohne TCD (Vergleich)

Das Beispiel wurde wie in Beispiel 4 durchgeführt; abweichend wurden 64,91 g (0,303 mol) Diphenylcarbonat, 10 g (0,0185 mol) Pripol 2030 sowie 41,14 g (0,281 mol) Isosorbid eingesetzt. Man erhielt ein transparentes, gelbliches Polymer mit einer eta rel von 1,329.

### Beispiel 6: Herstellung eines Copolycarbonats mit Dimerdiol ohne TCD (Vergleich)

Das Beispiel wurde wie in Beispiel 4 durchgeführt; abweichend wurden 64,91 g (0,303 mol) Diphenylcarbonat, 11,79 g (0,022 mol) Pripol 2030 sowie 40,65 g (0,278 mol) Isosorbid eingesetzt. Man erhielt ein transparentes, gelbliches Polymer mit einer eta rel von 1,382.

### Beispiel 7: Polycarbonat aus Isosorbid und BEPD (Vergleich)

29,83 g (0,204 mol) Isosorbid, 64,3 g (0,3 mol) Diphenylcarbonat sowie 20 ppm Lithium in Form von 75 µl LiOH Lösung (100 g LiOH/L) wurden in einem Kolben mit Kurzwegabscheider vorgelegt. Der Kolbeninhalt wurde durch 4-faches Evakuieren und Belüften mit Stickstoff von Sauerstoff befreit. Das Gemisch wurde auf 180 °C erwärmt. Nach 15 Minuten wurden 16,35 g (0,102 mol) 2-Butyl-2-ethyl-1,3-propandiol hinzugegeben. Die Temperatur wurde schrittweise innerhalb von 30 min. auf 225 °C erhöht. Dabei begann sich Phenol abzuscheiden. Der Druck wurde vorsichtig innerhalb von 45 min. auf 0,5 mbar reduziert. Die Temperatur wurde auf 235 °C erhöht. Bei dieser Temperatur und Druck wurde noch 10 Minuten gerührt. Man erhielt ein transparentes Polymer mit einer eta rel. von 1,202.

### Beispiel 8: Polyestercarbonat mit einem geringen Gehalt an CHDA (Vergleich)

4,42 g (0,0225 mol) Tricyclodecandimethanol, 2,673 g (0,0083 mol) 1,4-Cyclohexandicarbonsäurediphenylester und 4,87 g (0,0068 mol) Dimerfettsäurediphenylester wurden in einem Kolben mit Kurzwegabscheider und Tropftrichter vorgelegt. Ferner wurden 0,0015 g (15 µl ) Lithiumhydroxid in Form einer wässrigen Lösung (100 g / l) zugesetzt. Das Gemisch wurde durch vierfaches Evakuieren und Intertisieren mit Stickstoff von Sauerstoff befreit, aufgeschmolzen und bei Normaldruck auf 160 °C unter Rühren erwärmt. Je nach beobachteter Reaktivität wurde die Temperatur schrittweise bis max. 210 °C erhöht. Nun wurde der Druck auf ca. 50 mbar reduziert und für 15 Minuten gehalten, um Phenol zu entfernen. Danach wurde mit Stickstoff auf Umgebungsdruck belüftet und 16,66 g (0,1140 mol) Isosorbid und 25,71 g (0,1200 mol) Diphenylcarbonat bei 225 °C zum Reaktionsgemisch unter schnellem Rühren zudosiert. Nach vollständiger Zugabe destillierte Phenol ab. Die Temperatur wurde auf bis zu 235 °C erhöht und der Druck vorsichtig, schrittweise auf bis <1 mbar reduziert; dabei wurde kontinuierlich Phenol entfernt. Bei ca. 0,5 mbar wurde noch 10 Minuten bei niedriger Drehzahl nachgerührt. Man erhielt ein transparentes, gelbliches Polymer mit einer Lösungsviskosität von 1,27.

### Beispiel 9 (Vergleich; Polyestercarbonat mit CHDA und TCD)

7,86 g (0,04 mol) Tricyclodecandimethanol und 11,66 g (0,036 mol) 1,4 Cyclohexandicarbonsäurediphenylester wurden in einem Kolben mit Kurzwegabscheider und Tropftrichter vorgelegt. Ferner wurden 0,0015 g (15 µl ) Lithiumhydroxid in Form einer wässrigen Lösung (100 g / l) zugesetzt. Das Gemisch wurde durch vierfaches Evakuieren und Inertisieren mit Stickstoff von Sauerstoff befreit, aufgeschmolzen und bei Normaldruck auf 160 °C unter Rühren erwärmt. Je nach beobachteter Reaktivität wurde die Temperatur schrittweise bis max. 210°C erhöht. Nun wurde der Druck auf ca. 50mbar reduziert und für 15 Minuten gehalten, um Phenol zu entfernen. Danach wurde mit Stickstoff auf Umgebungsdruck belüftet und 16,66 g (0,1140 mol) Isosorbid und 25,71 g (0,1200 mol) Diphenylcarbonat bei 225 °C zum Reaktionsgemisch unter schnellem Rühren zudosiert. Nach vollständiger Zugabe destillierte Phenol ab. Die Temperatur wurde auf bis zu 235 °C erhöht und der Druck vorsichtig, schrittweise auf bis <1 mbar reduziert; dabei wurde kontinuierlich Phenol entfernt. Bei ca. 0,5 mbar wurde noch 10 Minuten bei niedriger Drehzahl nachgerührt. Man erhielt ein transparentes, gelbliches Polymer mit einer Lösungsviskosität von 1,27.

### Beispiel 10 (Vergleich)

64,91 g (0,303 mol) Diphenylcarbonat, 17,67 g (0,09 mol) Tricyclodecandimethanol sowie 30,69 g (0,210 mol) Isosorbid wurden in einem Kolben mit Kurzwegabscheider vorgelegt. Zu diesem Gemisch wurden noch 0,0001 g Natriumethylhexanoat in Form von 200 µl einer MTBE-Lösung (0,5 g/L) sowie 0,00389 g (38,9 µl) Tetrabutylphosphoniumacetat in einer MEK-Lösung (100 g/L) gegeben. Das Gemisch wurde durch vierfaches Evakuieren und Inertisieren mit Stickstoff von Sauerstoff befreit und bei Normaldruck auf 160 °C unter Rühren erwärmt und aufgeschmolzen. Sobald eine homogene, niederviskose Flüssigkeit vorlag, wurde die Temperatur unter schnellem Rühren (ca. 500 rpm) langsam auf 245 °C erhöht. Dabei destillierte ab ca. 220 °C Phenol ab. Der Druck wurde nun vorsichtig, schrittweise auf bis ca. 0,5 mbar reduziert und parallel die Temperatur auf bis zu 255 °C erhöht. Dabei wurde kontinuierlich Phenol entfernt. Bei ca. 0,5 mbar wurde noch für 10 Minuten bei niedriger Drehzahl gerührt. Man erhielt ein leicht trübes, gelb gefärbtes Polymer mit einer eta rel. von 1,294.

### Beispiel 11 (Vergleich)

70,32 g (0,3283 mol) Diphenylcarbonat, 5,90 g (0,03 mol) Tricyclodecandimethanol, 8,10 g (0,04 mol) 1,12-Dodecandiol sowie 37,27 g (0,255 mol) Isosorbid wurden in einem Kolben mit Kurzwegabscheider vorgelegt. Zu diesem Gemisch wurden noch 0,0001 g Natriumethylhexanoat in Form von 200 µl einer MTBE-Lösung (0,5 g/L) sowie 0,00389 g (38,9 µl) Tetrabutylphosphoniumacetat in einer MEK-Lösung (100 g/L) gegeben. Das Gemisch wurde durch vierfaches Evakuieren und Inertisieren mit Stickstoff von Sauerstoff befreit und bei Normaldruck auf 160 °C unter Rühren erwärmt und aufgeschmolzen. Sobald eine homogene, niederviskose Flüssigkeit vorlag, wurde die Temperatur unter schnellem Rühren (ca. 500 rpm) langsam auf 245 °C erhöht. Dabei destillierte ab ca. 220 °C Phenol ab. Der Druck wurde nun vorsichtig, schrittweise auf bis ca. 0,5 mbar reduziert und parallel die Temperatur auf bis zu 255 °C erhöht. Dabei wurde kontinuierlich Phenol entfernt. Bei ca. 0,5 mbar wurde noch für 10 Minuten bei niedriger Drehzahl gerührt. Man erhielt ein transparentes, gelb gefärbtes Polymer mit einer eta rel. von 1,191.

### Beispiel 12 (Vergleich)

73,65 g (0,344 mol) Diphenylcarbonat, 5,90 g (0,03 mol) Tricyclodecandimethanol, 8,10 g (0,0554 mol) Octandiol sowie 37,27 g (0,255 mol) Isosorbid wurden in einem Kolben mit Kurzwegabscheider vorgelegt. Zu diesem Gemisch wurden noch 0,0001 g Natriumethylhexanoat in Form von 200 µl einer MTBE-Lösung (0,5 g/L) sowie 0,00389 g (38,9 µl) Tetrabutylphosphoniumacetat in einer MEK-Lösung (100 g/L) gegeben. Das Gemisch wurde durch vierfaches Evakuieren und Inertisieren mit Stickstoff von Sauerstoff befreit und bei Normaldruck auf 160 °C unter Rühren erwärmt und aufgeschmolzen. Sobald eine homogene, niederviskose Flüssigkeit vorlag, wurde die Temperatur unter schnellem Rühren (ca. 500 rpm) langsam auf 245 °C erhöht. Dabei destillierte ab ca. 220 °C Phenol ab. Der Druck wurde nun vorsichtig, schrittweise auf bis ca. 0,5 mbar reduziert und parallel die Temperatur auf bis zu 255 °C erhöht. Dabei wurde kontinuierlich Phenol entfernt. Bei ca. 0,5 mbar wurde noch für 10 Minuten bei niedriger Drehzahl gerührt. Man erhielt ein trübes, braun gefärbtes Polymer mit einer eta rel. von 1,076.

### Beispiel 13 (Vergleich)

70,32 g (0,3283 mol) Diphenylcarbonat, 5,90 g (0,03 mol) Tricyclodecandimethanol, 8,10 g (0,040 mol) Sebacinsäure sowie 37,27 g (0,255 mol) Isosorbid wurden in einem Kolben mit Kurzwegabscheider vorgelegt. Zu diesem Gemisch wurden noch 0,0001 g Natriumethylhexanoat in Form von 200 µl einer MTBE-Lösung (0,5 g/L) sowie 0,00389 g (38,9 µl) Tetrabutylphosphoniumacetat in einer MEK-Lösung (100 g/L) und 0,0243 g (200 ppm) DMAP gegeben. Das Gemisch wurde durch vierfaches Evakuieren und Inertisieren mit Stickstoff von Sauerstoff befreit und bei Normaldruck auf 160 °C unter Rühren erwärmt und aufgeschmolzen. Sobald eine homogene, niederviskose Flüssigkeit vorlag, wird die Temperatur unter schnellem Rühren (ca. 500 rpm) langsam auf 245 °C erhöht. Dabei konnte eine Kohlenstoffdioxidentwicklung beobachtet werden und ab ca. 220 °C destillierte Phenol ab. Nachdem die Gasentwicklung beendet war, wurde der Druck vorsichtig, schrittweise auf bis ca. 0,5 mbar reduziert und parallel die Temperatur auf bis zu 255 °C erhöht. Dabei wurde kontinuierlich Phenol entfernt. Bei ca. 0,5 mbar wurde noch für 10 Minuten bei niedriger Drehzahl gerührt. Man erhielt ein leicht trübes, hellbraun gefärbtes Polymer mit einer eta rel. von 1,338.

### Beispiel 14 (Vergleich)

64,91 g (0,303 mol) Diphenylcarbonat, 5,90 g (0,03 mol) Tricyclodecandimethanol, 26,5 g (0,045 mol) Pripol 2030 sowie 32,88 g (0,225 mol) Isosorbid wurden in einem Kolben mit Kurzwegabscheider vorgelegt. Zu diesem Gemisch wurden noch 0,0001 g Natriumethylhexanoat in Form von 200 µl einer MTBE-Lösung (0,5 g/L) sowie 0,00389 g (38,9 µl) Tetrabutylphosphoniumacetat in einer MEK-Lösung (100 g/L) gegeben. Das Gemisch wurde durch vierfaches Evakuieren und Inertisieren mit Stickstoff von Sauerstoff befreit und bei Normaldruck auf 160 °C unter Rühren erwärmt und aufgeschmolzen. Sobald eine homogene, niederviskose Flüssigkeit vorlag, wurde die Temperatur unter schnellem Rühren (ca. 500 rpm) langsam auf 245 °C erhöht. Dabei destillierte ab ca. 220 °C Phenol ab. Der Druck wurde nun vorsichtig, schrittweise auf bis ca. 0,5 mbar reduziert und parallel die Temperatur auf bis zu 255 °C erhöht. Dabei wurde kontinuierlich Phenol entfernt. Bei ca. 0,5 mbar wurde noch für 10 Minuten bei niedriger Drehzahl gerührt. Man erhielt ein transparentes, hellgelbes Polymer mit einer eta rel. von 1,423.

### Beispiel 15 (Vergleich)

64,91 g (0,303 mol) Diphenylcarbonat, 26,50 g (0,135 mol) Tricyclodecandimethanol, 8,1 g (0,015 mol) Pripol 2030 sowie 21,92 g (0,150 mol) Isosorbid wurden in einem Kolben mit Kurzwegabscheider vorgelegt. Zu diesem Gemisch wurden noch 0,0001 g Natriumethylhexanoat in Form von 200 µl einer MTBE-Lösung (0,5 g/L) sowie 0,00389 g (38,9 µl) Tetrabutylphosphoniumacetat in einer MEK-Lösung (100 g/L) gegeben. Das Gemisch wurde durch vierfaches Evakuieren und Intertisieren mit Stickstoff von Sauerstoff befreit und bei Normaldruck auf 160 °C unter Rühren erwärmt und aufgeschmolzen. Sobald eine homogene, niederviskose Flüssigkeit vorlag, wurde die Temperatur unter schnellem Rühren (ca. 500 rpm) langsam auf 245 °C erhöht. Dabei destillierte ab ca. 220 °C Phenol ab. Der Druck wurde nun vorsichtig, schrittweise auf bis ca. 0,5 mbar reduziert und parallel die Temperatur auf bis zu 255 °C erhöht. Dabei wurde kontinuierlich Phenol entfernt. Bei ca. 0,5 mbar wurde noch für 10 Minuten bei niedriger Drehzahl gerührt. Man erhielt ein leicht trübes, hellgelbes Polymer mit einer eta rel. von 1,339.

### Beispiel 16: Herstellung eines Polyestercarbonats enthaltend Dimerfettsäure (Referenz)

29,22 g (0,0405 mol) Dimerfettsäurediphenylester sowie 17,7 g (0,09 mol) Tricyclodecandimethanol und 0,0003 g (943.5 ppb) Natrium-2-ethylhexanoat in Form einer Lösung (5 g/L in MTBE) sowie 0,0115 g (36 ppm) Tetrabutylphosphoniumacetat in Form einer Lösung (100 g/L in MEK) wurden in einem Kolben mit Kurzwegabscheider und Tropftrichter vorgelegt. Das Gemisch wurde durch vierfaches Evakuieren und Intertisieren mit Stickstoff von Sauerstoff befreit, aufgeschmolzen und bei Normaldruck auf 160 °C unter Rühren erwärmt. Je nach beobachteter Reaktivität wurde die Temperatur schrittweise bis max. 210 °C erhöht. Nun wurde der Druck auf ca. 50 mbar reduziert und für 15 Minuten gehalten, um Phenol zu entfernen. Danach wurde mit Stickstoff auf Umgebungsdruck belüftet und 177,21 g (0,8272 mol) Diphenylcarbonat sowie 112,45 g (0,7695 mol) Isosorbid zum Reaktionsgemisch bei 225 °C und schnellem Rühren zudosiert. Nach vollständiger Zugabe destillierte Phenol ab. Die Temperatur wurde auf bis zu 235 °C erhöht und der Druck vorsichtig, schrittweise auf bis <1 mbar reduziert; dabei wurde kontinuierlich Phenol entfernt. Bei ca. 0,5 mbar wurde noch 10 Minuten bei niedriger Drehzahl nachgerührt. Man erhielt ein hellgelbes Polymer mit einer eta rel von 1,240.

### Beispiel 17: Herstellung eines Copolycarbonats mit Dimerdiol (Referenz)

194,73 g (0,909 mol) Diphenylcarbonat, 24,3 g (0,045 mol) Pripol 2030, 17,7 g (0,090 mol) Tricyclodecandimethanol sowie 111,8 g (0,765 mol) Isosorbid wurden in einem Kolben mit Kurzwegabscheider vorgelegt. Zu diesem Gemisch wurden noch 0,001 g Natriumethylhexanoat in Form von 600 ul einer MTBE-Lösung (0,5 g/L) sowie 116,5 µL g Tetrabutylphosphoniumacetat in einer MEK-Lösung (100 g/L) gegeben. Das Gemisch wurde durch vierfaches Evakuieren und Intertisieren mit Stickstoff von Sauerstoff befreit, aufgeschmolzen und bei Normaldruck auf 160 °C unter Rühren erwärmt und aufgeschmolzen. Sobald eine homogene, niederviskose Flüssigkeit vorlag, wurde die Temperatur unter schnellem Rühren (ca. 500 rpm) langsam auf 245 °C erhöht. Dabei destillierte ab ca. 220 °C Phenol ab. Der Druck wurde nun vorsichtig, schrittweise auf bis ca. 0,5 mbar reduziert. Dabei wurde kontinuierlich Phenol entfernt. Bei ca. 0,5 mbar wurde noch für 10 Minuten bei niedriger Drehzahl gerührt. Man erhielt ein farbhelles transparentes Polymer mit einer eta rel. von 1,356.

### Beispiel 18: Herstellung eines Copolycarbonats mit Dimerdiol (Referenz)

Das Beispiel wurde wie in Beispiel 17 durchgeführt; abweichend wurden 194,73 g (0,909 mol) Diphenylcarbonat, 30,0 g (0,055 mol) Pripol 2030, 14,75 g (0,075 mol) Tricyclodecandimethanol sowie 112,45 g (0,7695 mol) Isosorbid eingesetzt. Man erhielt ein hellgelbes Polymer mit einer eta rel von 1,320.

### Beispiel 19: Herstellung eines Copolycarbonats mit Dimerdiol (Referenz)

Das Beispiel wurde wie in Beispiel 17 durchgeführt; abweichend wurden 194,73 g (0,909 mol) Diphenylcarbonat, 27,0 g (0,05 mol) Pripol 2030, 17,7 g (0,09 mol) Tricyclodecandimethanol sowie 111,07 g (0,760 mol) Isosorbid eingesetzt. Man erhielt ein hellgelbes Polymer mit einer eta rel von 1,325.

### Beispiel 20: Herstellung eines Copolycarbonats mit Dimerdiol (Referenz)

Das Beispiel wurde wie in Beispiel 17 durchgeführt; abweichend wurden 32,46 g (0,1515 mol) Diphenylcarbonat, 4,05 g (0,0075 mol) Pripol 2030, 4,43 g (0,0335 mol) Tricyclodecandimethanol sowie 17,54 g (0,120 mol) Isosorbid eingesetzt. Man erhielt ein hellgelbes Polymer mit einer eta rel von 1,352.

### Beispiel 21: Herstellung eines Copolycarbonats mit Dimerdiol (Referenz)

Das Beispiel wurde wie in Beispiel 17 durchgeführt; abweichend wurden 64,91 g (0,303 mol) Diphenylcarbonat, 8,10 g (0,015 mol) Pripol 2030, 5,02 g (0,0255 mol) Tricyclodecandimethanol sowie 37,92 g (0,2595 mol) Isosorbid eingesetzt. Man erhielt ein hellgelbes Polymer mit einer eta rel von 1,331.

### Beispiel 22: Herstellung eines Copolyestercarbonats enthaltend Dimerfettsäure und Terephthalsäure (Referenz)

64,23 g (0,300 mol) Diphenylcarbonat, 4,95 g (0,0253 mol) Tricyclodecandimethanol, 11,21g (0,0625 mol) Terephthalsäure, 4,28g (0,0075mol) Dimerfettsäure sowie 29,52g (0,202mol) Isosorbid wurden in einem Kolben mit Kurzwegabscheider vorgelegt. Zu diesem Gemisch wurden noch 0,00571 g Tetrabutylphosphoniumacetat sowie 0,0114 g DMAP gegeben. Das Gemisch wurde durch vierfaches Evakuieren und Inertisieren mit Stickstoff von Sauerstoff befreit und bei Normaldruck auf 160 °C unter Rühren erwärmt und aufgeschmolzen. Sobald eine homogene, niederviskose Flüssigkeit vorlag, wird die Temperatur unter schnellem Rühren (ca. 500 rpm) langsam auf 245 °C erhöht. Dabei konnte eine Kohlenstoffdioxidentwicklung beobachtet werden und ab ca. 220 °C destillierte Phenol ab. Nachdem die Gasentwicklung beendet war, wurde der Druck vorsichtig, schrittweise auf bis ca. 0,5 mbar reduziert und parallel die Temperatur auf bis zu 255 °C erhöht. Dabei wurde kontinuierlich Phenol entfernt. Bei ca. 0,5 mbar wurde noch für 10 Minuten bei niedriger Drehzahl gerührt. Man erhielt ein transparentes, rötliches Polymer mit einem eta rel. von 1,206.

**Tabelle 1: Heißwasserbeständigkeit**

| **Bs p-Nr.** | **Bsp.** | **Polymerstruktur** | **Aussehen nach Heißwassertest** | **Tg** |
|---|---|---|---|---|
| 1 | Vergleichsbsp. PC1 | PC aus 70 % ISB und 30 % CHDM | Trüb, einige Blasen | 122 °C |
| 2 | Vergleichsbsp. | PEC-Standard CHDA/ISB | Opak, blasig, brüchig (vorher transparent) | 150 °C |
| 3 | Vergleichsbsp. | PEC aus ISB/CHDA, TA, DFA | Opak (vorher transparent) | 134 °C |
| 4 | Vergleichsbsp. | ISB + Dimerdiol ohne TCD ; 12,5 Gew-% Dimerdiol | Klar, transparent | 138 °C |
| 5 | Vergleichsbsp. | ISB + Dimerdiol ohne TCD ; 17 Gew-% Dimerdiol | Klar, transparent | 132 °C |
| 6 | Vergleichsbsp. | ISB + Dimerdiol ohne TCD ; 20 Gew-% Dimerdiol | Klar, transparent | 127 °C |
| 7 | Vergleichsbsp. | P(I₆₇BEPD₃₃) | Trüb gequollen, brüchig | 131 °C |
| 8 | Vergleichsbsp. | PEC mit geringem Anteil an CHDA; P(I₇₅C_{5,5}DFA_{4,5}TCD₁₅) | Opak, blasige Oberfläche | 132 °C |
| 9 | Vergleichsbsp. | P(I_{50,5}C₂₃TCD_{25,5}) | Opak; Oberfläche deformiert | 127 °C |
| 10 | Vergleichsbsp. | ISB + TCD ohne Dimerdiol | Klar, transparent | 135 °C |
| 11 | Vergleichsbsp. | Pripol durch Dodecandiol ersetzt; | Opak, blasig | 99 °C |
| 12 | Vergleichsbsp. | Pripol durch Octandiol ersetzt; | klar, blasig | <100° C |
| 13 | Vergleichsbsp. | Ansatz mit Sebacinsäure statt Pripol | Opak, blasig | 114 °C |
| 14 | Vergleichsbsp. | Zu hoher Pripol-Anteil; I₇₅TCD₁₀P₁₅ | opak, weißlich leichte Oberflächendeformatio n | 91 °C |
| 15 | Vergleichsbsp. | Zu hoher TCD Anteil; I₅₀TCD₄₅P₅ | opak, weißlich deutliche Oberflächendeformatio n | 82 °C |
| 16 | Referenzbsp. | P(I_{85,5}DFA_{4,5}TCD₁₀) | Klar, transparent | 111 °C |
| 17 | Referenzbsp. | P(I₈₅Pripol2030₅TCD₁₀) | Klar, transparent | 123 °C |
| 18 | Referenzbsp. | P(I_{85,5}Pripol 2030_{6,2}TCD_{8,3}) | Klar, transparent | 117 °C |
| 19 | Referenzbsp. | P(I_{84,5}Pripol 2030_{5,5}TCD₁₀) | Klar, transparent | 117 °C |
| 20 | Referenzbsp. | P(I₈₀Pripol2030₅TCD₁₅) | Klar transparent | 113 °C |
| 21 | Referenzbsp. | P(I₈₇Pripol2030_{4,5}TCD_{8,5}) | Klar transparent | 124 °C |
| 22 | Referenzbsp. | P(I₆₇DFA_{2,5}TCD_{8,45}TA_{22,5} ) | Klar transparent | 132 |

**Tabelle 2: Weitere Beständigkeitstests**

| Bsp. Nr. | Bsp | Rapsöl | Lipidlösung | Isooktan/Toluol (1:1) |
|---|---|---|---|---|
| 1 | PC1; Vergleich | Bruch; 9min | Bruch; <10 s | Bruch; <10 s |
| 10 | Vergleichsbsp(P(I₇₀BDO₂TCD₂₈) | Bruch; 4h 42min | Bruch; 1d | >7d; Kantenrisse |
| 17 | Referenzbsp. | >5d | >5 d | >7 d |
| 16 | Referenzbsp. | >5d | >7d | >7d |

**Tabelle 3: Scherrheologie**

| Bsp. | | Komplexe Viskosität [Pas] bei 0,01 Hz | Komplexe Viskosität [Pas] bei 1 Hz |
|---|---|---|---|
| 4 | Vergleich | 1,2x10⁶ | 1,0x10⁵ |
| 5 | Vergleich | 5,0x10⁵ | 6,6x10⁴ |
| 6 | Vergleich | 7,6x10⁵ | 7,1x10⁴ |
| 16 | Referenzbsp. | 3,4x10⁴ | 1,6x10⁴ |
| 18 | Referenzbsp. | 5,1x10⁴ | 1,9x10⁴ |
| 19 | Referenzbsp. | 5,1x10⁴ | 2,4x10⁴ |

Man erkennt, dass die erfindungsgemäß eingesetzten Copoly(ester)carbonate eine hohe Stabilität gegen heißes Wasser aufweisen. Überraschenderweise sind Polymere aus häufig eingesetzten Diolen wie Cyclohexandimethanol und Isosorbid (Bsp. 1) - wie sie z.B. in EP 2033981 beschrieben sind - nicht sehr stabil gegen Heißwasserbelastung. Auch andere Diole wie die Kombination aus sterisch gehinderten Diolen wie Isosorbid und 2-Butyl-2-Ethyl-1,3-propandiol weisen keine gute Stabilität auf (Beispiel 7). Dies ist überraschend da diese sterisch gehinderten Diole wie BEPD oder Neopentylglykol normalerweise die Hydrolysestabilität verbessern. Beispiel 2 zeigt, dass Polyestercarbonate aus 1,4-Cyclohexandicarbonsäure und Isosorbid ebenso keine gute Stabilität im Heißwassertest aufweisen. Dies war überraschend, da Polyester z.B. aus Cyclohexandimethanol und 1,4 Cyclohexandicarbonsäure eine hohe Stabilität gegen wässrige Medien aufweisen.

Beispiel 11 zeigt, dass die Kombination aus Isosorbid und langkettigen Diolen - wie in diesem Fall Dodecandiol (vgl. EP2840102) - nicht unbedingt zu einem besseren Ergebnis führen. Auch dieses Polymer wies deutliche Schwächen im Heißwassertest auf. Auch aus anderer Hinsicht können diese Polymere nachteilig sein; so weisen sie häufig niedrige Glastemperaturen auf.

Es ist bekannt, dass aromatische Polyester häufig stabil gegen Heißwasserbelastung sind. So sind Polyester wie Polyethylenterephthalat und entsprechende Abkömmlinge gegen heißes Wasser stabil. Der Einbau solcher aromatischen Disäuren wie Terephthalsäure oder Isophthalsäure in ein ansonsten aus aliphatischen Bausteinen bestehendes Polycarbonat bzw. Polyestercarbonat führt - wie in Beispiel 3 gezeigt - jedoch überraschenderweise nicht zu stabilen Produkten. Auch der Einbau von Dimerfettsäure in derartige Strukturen hilft nicht. Es wäre zu erwarten gewesen, dass die unpolaren bzw. hydrophoben Eigenschaften der aromatischen Säuren bzw. der Dimerfettsäure die Stabilität gegen Wasser verbessern. Dies gilt überraschenderweise z.T. auch für Polymere die TCD-Alkohol enthalten. So ist ein Polymer aus Isosorbid, Cyclohexandicarbonsäure, Dimerfettsäure und TCD-Dimethanol überraschenderweise nicht stabil (Beispiel 8). Dies kann auf die Anwesenheit der Cyclohexandicarbonsäure zurück geführt werden.

Überraschenderweise sind auch Polymere, welche im Wesentlichen nur aus Isosorbid und langkettigen unpolaren Fettsäuren wie, z.B. Sebazinsäure bestehen, nicht gegen heißes Wasser stabil (Beispiel 13).

Die Kombination von Dimerdiol bzw. Dimerfettsäure und Isosorbid zeigen eine hohe Beständigkeit gegen wässrige Medien. Überraschenderweise zeigen diese Polymere jedoch eine hohe Schmelzeviskosität (Beispiel 4 bis 6). Rheologische Untersuchungen belegen, dass die Viskosität gegenüber den erfindungsgemäßen Polymeren deutlich erhöht sind. Die hohe Schmelzeviskosität ist von entscheidendem Nachteil, weil dadurch die Verarbeitung dieser Materialien deutlich erschwert wird. Eine deutliche Anhebung der Prozesstemperaturen, um die Fließfähigkeit zu erhöhen, ist bei aliphatischen Materialien nicht möglich, da sie nicht so stabil wie beispielsweise aromatische Polycarbonate sind und deshalb bei höheren Prozesstemperaturen zu Zersetzung und Molekulargewichtsabbau neigen. Überraschenderweise weisen die erfindungsgemäßen Polymere eine bessere Oberflächenhärte auf als Polycarbonate auf Basis von Bisphenol A und auch als Polymere auf Basis von ISB und Dimerdiol (siehe unten Tabelle 4). Polymere mit einem hohen Anteil an TCD-Alkohol weisen keine guten Eigenschaften im Heißwassertest auf (Beispiel 15). Es war daher sehr überraschend, dass nur die erfindungsgemäß eingesetzten Copoly(ester)carbonate mit den erfindungsgemäßen Anteilen an Einheiten (A), (B) und (C) sowohl eine hohe Heißwasserstabilität wie auch eine gute Stabilität gegen Lösungsmittel wie Treibstoffgemische (Isooktan-Toluol-Gemisch) aufweisen und gleichzeitig eine hohe Oberflächenhärte bei ausreichend guten mechanischen Eigenschaften zeigen.

Man erkennt ferner, dass die erfindungsgemäßen Polymere Glastemperaturen von mehr als 110 °C aufweisen.

**Tabelle 4: Kratzbeständigkeit**

| Beispiel | Zusammensetzung | Kratzbeständigkeit (N) | Tg (°C) | Eta rel. |
|---|---|---|---|---|
| 4 (Vergleich) | P(I₉₅Pripol2030₅) | 4,5-5 | 137 | 1,389 |
| 5 (Vergleich) | P(I₉₄Pripol2030₆) | 3,5 | 132 | 1,329 |
| 6 (Vergleich) | P(I_{92,7}Pripol2030_{7,3}) | 2 - 2,5 | 135 | 1,382 |
| 17 (Referenzbsp.) | P(I₈₅Pripol2030₅TCD₁₀) | 9-10 | 123 | 1,356 |
| 20 (Referenzbsp.) | P(I₈₀Pripol2030₅TCD₁₅) | 7,5-8 | 113 | 1,352 |

Die Ergebnisse der Tabelle 4 zeigen, dass mit steigendem Gehalt an Pripol und in Abwesenheit von TCD-Dimethanol die Kratzbeständigkeit sinkt (obwohl die Tg und das Molekulargewicht nicht signifikant zwischen den Versuchen variieren). Im Gegensatz dazu weisen die erfindungsgemäßen Copolymere mit niedrigerer Tg, aber mit TCD-Dimethanol als Comonomer eine bessere Kratzbeständigkeit auf.

**Tabelle 5: Charpy Schlagversuch**

| Beispiel | Charpy Schlagversuch; ungekerbt |
|---|---|
| 18 | 10 x nicht gebrochen |
| 16 | 10 x nicht gebrochen |
| 17 | 10 x nicht gebrochen |

**Tabelle 6: ¹H-NMR-Spektroskopie**

| | ISB (mol-%) | TCD-DM (mol-%) | Dimerfettsäure/Dimerdiol (mol-%) |
|---|---|---|---|
| Referenz Beispiel 16 | 85,4 | 10,5 | 4,0 |
| Referenz Beispiel 17 | 85,0 | 10,2 | 4,8 |
| Referenz Beispiel 18 | 85,3 | 8,9 | 5,8 |
| Referenz Beispiel 19 | 84,6 | 10,1 | 5,3 |
| Referenz Beispiel 21 | 86,8 | 8,4 | 4,8 |
| Referenz Beispiel 20 | 80,1 | 14,8 | 5,1 |

Wie aus Tabelle 6 ersichtlich ist, bauen die eingesetzten Monomere nahezu vollständig in das Copoly(ester)carbonat ein. Damit bleiben die molaren Verhältnisse der eingesetzten Monomere auch nahezu vollständig im Copoly(ester)carbonat vorhanden. Dies bedeutet, dass man durch das Verhältnis und die Menge der Einsatzstoffe das Verhältnis und die Menge der im resultierenden Polymer vorhandenen strukturellen Einheiten steuern kann.

### Beispiel 22 (erfindungsgemäß)

Ein Copolyestercarbonat aus Isosorbid, TCD-Dimethanol und Dimerfettsäure (85/10/5 mol-%) wurde auf einem Extruder (ZSK 27 mit 110 U/min bei 240 °C) aufgeschmolzen und über einen Seitenenxtruder (als Seitenextruder diente ein Einwellenextruder mit 25 mm Wellendurchmesser und eine Länge/Durchmesser-Verhältnis von 18; Fabrikat der Firma ESDE Maschinentechnik GmbH, Typ ESE 1-25-18) im letzten Gehäuseteil mit Additiven versetzt. Es wird ein Granulat erhalten und die Lösungsviskosität ermittelt (eta rel).

Als Träger der Additive wurde Durabio D7340 verwendet. Mittels des Masterbatch wurde phenolisches Antioxidanz, Phosphorstabilisator, Entformungsmittel sowie säure-haltiges Additiv (siehe Materialliste oben) zugesetzt, so dass sich die Mengen bezogen auf die Gesamtzusammensetzung (siehe Tabelle) ergeben.

| Komponente | Menge im Polymer (Gew.-% bzw. ppm) |
|---|---|
| Durabio D7340 | 4,00 % |
| Irganox 1010 (phenolisches Antioxidationsmittel) | 0,037 % |
| ADK Stab PEP 36 (phosphor-haltiges Antioxidationsmittel | 37 ppm |
| Loxiol 895 | 0,18 % |
| Sulfonsäureester (säure-haltiges Additiv) | 3,7 ppm |

### Beispiel 23: Vergleichsbeispiel ohne Additive

Ein Copolyestercarbonat aus Isosorbid, TCD-Dimethanol und Dimerfettsäure (85/10/5 mol-%) wurde wie in Beispiel 22 auf einem Extruder (ZSK 27 mit 110 U/min bei 240 °C) aufgeschmolzen und extrudiert. Abweichend zu Beispiel 22 wurden keine Additive zugesetzt. Es wird ein Granulat erhalten und die Lösungsviskosität ermittelt (eta rel).

### Spritzguss:

Die Zusammensetzungen des Beispiels 22 und des Beispiels 23 wurden bei 80 °C im Vakuumtrockenschrank für 4 Stunden getrocknet.

Über eine Boy XS Spritzgussmaschine wurden bei einer Zylindertemperatur von 250 °C, einer Werkzeugtemperatur von 70 °C und einem Einspritzdruck von 1720 bar Normstäbe mit den Abmessungen 80x10x3 mm hergestellt. Es wurde die Lösungsviskosität (eta rel) ermittelt.

Viskosität:

| Bsp | Eta rel Granulat | Eta rel Stab | Delta |
|---|---|---|---|
| Beispiel 22 (Erf.) | 1,283 | 1,272 | 0,011 |
| Beispiel 23 (Vergl.) | 1,290 | 1,255 | 0,035 |

Aus den Lösungsviskositäten erkennt man, dass das additivierte Polymer deutlich weniger bei thermomechanischer Belastung (Spritzgussprozess) abbaut im Vergleich zum nichtadditivierten Polymer.

## Patentansprüche

1. Thermoplastische Zusammensetzung, umfassend
(I) ein Copoly(ester)carbonat, enthaltend die Einheiten (A), (B), (C), optional (D) und gegebenenfalls von (A), (B), (C) und (D) verschiedene Einheiten, mit 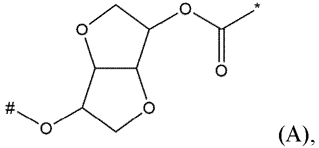 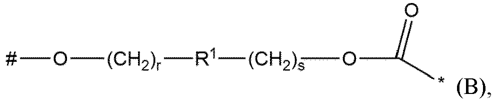 wobei jedes r und jedes s unabhängig voneinander für eine Zahl zwischen 0 und 4 steht, und jedes R¹ unabhängig voneinander für eine Struktur der Formeln (R1A), (R1B), (R1C) oder (R1D) steht 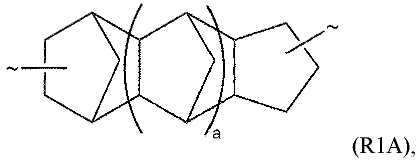 wobei a 0 oder 1 ist, 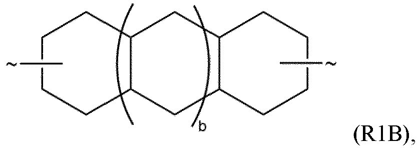 wobei b 0 oder 1 ist, 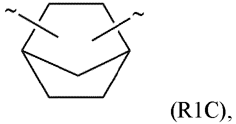 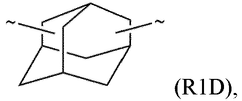 wobei die mit "~" gekennzeichneten Positionen in den Formeln (R1A) bis (R1D) die Positionen sind, an denen sich die in Formel (B) gezeigte (CH₂)ᵣ-Gruppe beziehungsweise (CH₂)ₛ-Gruppe befindet, und 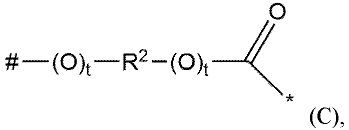 wobei beide t unabhängig von R² gleichzeitig entweder 0 oder gleichzeitig 1 sind und jedes R² unabhängig voneinander für eine aliphatische Gruppe mit 16 bis 44 Kohlenstoffatomen steht, welche gegebenenfalls ein oder mehrere Doppelbindungen enthält, 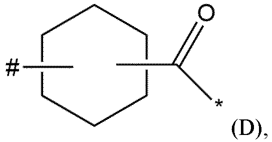 wobei zumindest teilweise direkte Verknüpfungen zwischen den Einheiten (A), (B), (C), optional (D) und gegebenenfalls von (A), (B), (C) und (D) verschiedene Einheiten vorliegen, wobei, wenn eine direkte Verknüpfung von mindestens zwei der Einheiten ausgewählt aus der Gruppe bestehend aus (A), (B), (C) und gegebenenfalls (D) vorliegt, die mit "*" gekennzeichnete Position der Einheiten (A), (B), (C), (D) dann mit den mit "#" gekennzeichneten Position dieser Einheiten verknüpft ist, mit der Ausnahme, dass,
wenn t in Formel (C) 0 ist, keine direkte Verknüpfung zweier Einheiten (C) miteinander vorliegt,
wenn t in Formel (C) 0 ist, keine direkte Verknüpfung der Einheit (C) mit der Einheit (D) vorliegt und
keine direkte Verknüpfung zweier Einheiten (D) miteinander vorliegt,
wobei das Copoly(ester)carbonat 4 bis 25 mol-% der Einheit (B), 2 bis 14 mol-% der Einheit (C), 0 bis 5 mol-% der Einheit (D) und mindestens 55 mol-% der Einheit (A) enthält, wobei die mol-%-Angaben sich auf die Gesamtstoffmenge der Einheiten (A), (B), (C), gegebenfalls (D) und gegebenenfalls von (A), (B), (C) und (D) verschiedenen Einheiten beziehen
und
(II) mindestens ein Additiv, welches ausgewählt ist aus der Gruppe bestehend aus
(IIa) einem UV-Absorber ausgewählt aus der Gruppe, bestehend aus Benzotriazol-Verbindungen, Benzophenon-Verbindungen, Triazin-Verbindungen, Benzoat-Verbindungen, Phenylsalicylat-Verbindungen, Cyanacrylat-Verbindungen, Malonsäureester-Verbindungen und Oxalanilid-Verbindungen,
(IIb) einem sterisch gehinderten Amin-Lichtstabilisator,
(IIc) einem Bläuungsmittel,
(IId) einem Antioxidationsmittel,
(IIe) einem Gleit- und Entformungsmittel ausgewählt aus der Gruppe, bestehend aus Fettsäuren mit 10 bis 30 Kohlenstoffatomen, deren Fettsäureester von ein- oder mehrwertigen Alkoholen, natürliche tierische Wachse, natürliche pflanzliche Wachse, natürliche Erdöl-basierte Wachse, Montanwachse, Olefinwachse, Silikonöle und Organopolysiloxane,
(IIf) einem Säure-haltigen Additiv,
(IIg) einem OH- und Säuregruppenfänger,
(IIh) einer alkalischen Verbindung,
(IIi) einem Reduktionsmittel,
(IIj) einem Antistatikum ausgewählt aus der Gruppe, bestehend aus Polyetheresteramiden, Glycerolmonostearat, Ammoniumsalze der Dodecylbenzolsulfonsäure, Phosphoniumsalze der Dodecylbenzolsulfonsäure, quarternäre Ammoniumsalze einer Perfluoralkylsulfonsäure Maleinsäureanhydrid-monoglycerid und Maleinsäureanhydrid-diglycerid,
(IIk) einem Farbmittel ausgewählt aus der Gruppe der anorganischen Pigmente, welche Ruß, Titanoxid, Zinkweiß, Eisenoxidrot, Chromoxid, Eisenschwarz, Titangelb, Zink-Eisenbraun, Kupfer-Chromschwarz, Kupfer-Eisenschwarz und oxidbasierte Pigmente umfassen, organischen Pigmenten und organischen Farbstoffen, welche Phthalocyanin-Farbstoffe und -Pigmente; kondensierte Polycyclen wie Azo-, Thioindigo-, Perinon-, Perylen-, Chinacridon-, Dioxazin-, Isoindolinon- und Chinophthalon-Farbstoffe und -Pigmente, Anthrachinon-, Perinon-, Perylen-, Methin-, Chinolin-, Heterocyclen- und Methyl-basierte Farbstoffe und Pigmente umfassen,
(IIl) einem anorganischen Füllstoff,
(IIm) einem Flammschutzmittel ausgewählt aus der Gruppe, bestehend aus Phosphorverbindungs-basierten, Halogenverbindungs-basierten, Metallsulfonat-basierten und Siliciumverbindungs-basierten Flammschutzmittel,
(IIn) einem polymeren Blendpartner ausgewählt aus der Gruppe, bestehend aus Poly(milchsäure), Poly(cyclohexandimethanol-cyclohexandicarboxylat), Poly(propylenterephthalat), Polycarbonaten, Polyamid 46, Polyamid 12, semiaromatischen Polyamiden, kautschuk-modifizierten Pfropfpolymeren, Vinyl(co)polymeren ausgewählt aus der Gruppe(Co)Polymerisate aus
B.1 50 bis 99 Gew.-%, bevorzugt 65 bis 85 Gew.-%, besonders bevorzugt 70 bis 80 Gew.-% bezogen auf das (Co)Polymerisat mindestens eines Monomeren ausgewählt aus der Gruppe der Vinylaromaten, kernsubstituierten Vinylaromaten und (Meth)Acrylsäure-(C1-C8)-Alkylester und
B.2 1 bis 50 Gew.-%, bevorzugt 15 bis 35 Gew.-%, besonders bevorzugt 20 bis 30 Gew.-% bezogen auf das (Co)Polymerisat mindestens eines Monomeren ausgewählt aus der Gruppe der Vinylcyanide, (Meth)Acrylsäure-(C1-C8)-Alkylester, ungesättigte Carbonsäuren und Derivate ungesättigter Carbonsäuren,
Polyolefinen ausgewählt aus der Gruppe bestehend aus Polyethylen, Ethylen-Copolymeren, Polypropylen und 4-Methylpenten-1-Harzen, Polyacetalen, Poly(amidimiden), Poly(ethersulfonen), Polyimiden, Poly(phenylenoxid), Poly(phenylensulfid), Poly(phenylsulfon), Polyetheretherketon, flüssigkristallinen Polyestern, Poly(vinylchlorid) und Fluorharzen.

2. Thermoplastische Zusammensetzung nach Anspruch 1, **dadurch gekennzeichnet, dass** (IIb) der sterisch gehinderte Amin-Lichtstabilisator eine oder mehrere Struktureinheiten gemäß der Formel (30) aufweist, 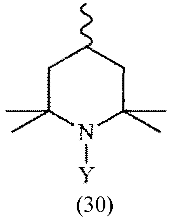 wobei in der Formel (30)
Y für H, R² oder OR² steht und
R² für verzweigtes oder unverzweigtes C₁-C₁₃-Alkyl, C₂-C₂₀-Alkenyl, C₆-C₁₂-Aryl oder -CO-C₁-C₁₈-Alkyl steht.

3. Thermoplastische Zusammensetzung nach einem der Ansprüche 1 oder 2, **dadurch gekennzeichnet, dass** das (IIc) Bläuungsmittel ein Anthrachinonfarbstoff ist.

4. Thermoplastische Zusammensetzung nach einem der Ansprüche 1 bis 3, **dadurch gekennzeichnet, dass** das (IId) Antioxidationsmittel ausgewählt wird aus sterisch gehinderten Phenolen, einem phosphorhaltigen Antioxidationsmittel und einem schwefelhaltigen Antioxidationsmittel.

5. Thermoplastische Zusammensetzung nach einem der Ansprüche 1 bis 4, **dadurch gekennzeichnet, dass** der (IIg) OH- und Säuregruppenfänger eine Verbindung enthaltend eine Epoxy-Gruppe oder eine Carbodiimid-Gruppe ist.

6. Thermoplastische Zusammensetzung nach einem der Ansprüche 1 bis 5, **dadurch gekennzeichnet, dass** die (IIh) alkalische Verbindung ein Alkalimetallsalz ist.

7. Thermoplastische Zusammensetzung nach einem der Ansprüche 1 bis 6, **dadurch gekennzeichnet, dass** das (IIi) Reduktionsmittel Natriumborhydrid oder Lithiumborhydrid ist.

8. Thermoplastische Zusammensetzung nach einem der Ansprüche 1 bis 7, **dadurch gekennzeichnet, dass** der (IIl) anorganische Füllstoff ausgewählt wird aus der Gruppe, bestehend aus Glasfasern, gemahlenen Glasfasern, Glasflocken, Glasperlen, Kohlenstofffasern, Silica, Aluminiumoxid, Titanoxid, Calciumsulfatpulver, Gips, Gipswhisker, Bariumsulfat, Talk, Glimmer, Calciumsilikat wie Wollastonit, Ruß, Graphit, Eisenpulver, Kupferpulver, Molybdändisulfid, Siliciumcarbid, Siliciumcarbidfasern, Siliciumnitrid, Siliciumnitridfasern, Messingfasern, Edelstahlfasern, Kaliumtitanatfasern und -whisker.

9. Thermoplastische Zusammensetzung nach einem der Ansprüche 1 bis 8, **dadurch gekennzeichnet, dass** der (IIn) polymere Blendpartner ein kautschuk-modifiziertes Propfpolymer ist, welches
B.1a 5 bis 95 Gew.-%, vorzugsweise 20 bis 92 Gew.-%, insbesondere 30 bis 91 Gew.-%, bezogen auf das Pfropfpolymerisat, wenigstens eines Vinylmonomeren auf
B.2a 95 bis 5 Gew.-%, vorzugsweise 80 bis 8 Gew.-%, insbesondere 70 bis 9 Gew.-%, bezogen auf das Pfropfpolymerisat, einer oder mehrerer kautschukelastischer Pfropfgrundlagen mit Glasübergangstemperaturen < -50°C, weiter bevorzugt von < - 60°C, besonders bevorzugt < -70°C umfasst.

10. Thermoplastische Zusammensetzung nach einem der Ansprüche 1 bis 9, **dadurch gekennzeichnet, dass** die Zusammensetzung mindestens ein Additiv (IIa) bis (IIn) in den angegebenen Mengen umfasst
0,05 bis 10 Massenteile (IIa) des UV-Absorber,
0,001 bis 5 Massenteile (IIb) des sterisch gehinderten Amin-Lichtstabilisators,
0,1×10⁻⁵ bis 2×10⁻⁴ Massenteile (IIc) des Bläuungsmittels,
0,001 bis 1 Massenteile (IId) des Antioxidationsmittels,
0,0001 bis 2 Massenteile (IIe) des Gleit- und Entformungsmittels,
0,00001 bis 1 Massenteile (IIf) des säurehaltigen Additivs,
0,05 bis 5 Massenteile (IIg) des OH- und Säuregruppenfängers,
0,1×10⁻⁷ bis 1 ×10⁻³ Masseteile (IIh) der alkalischen Verbindung,
0,1×10⁻⁷ bis 1 ×10⁻³ (IIi) Masseteile des Reduktionsmittels,
0,001 bis 2 Masseteile (IIj) des Antistatikums,
0,001 bis 5 Massenteile (IIk) des Farbmittels,
1 bis 100 Massenteile (IIl) des anorganischen Füllstoffs,
0,01 bis 30 Massenteile (IIm) des Flammschutzmittels und / oder
5 bis 95 Massenteile (IIn) des polymeren Blendpartners umfasst,
wobei die Massenteile jeweils bezogen sind auf 100 Massenteile der Komponente (I).

11. Thermoplastische Zusammensetzung nach einem der Ansprüche 1 bis 10, wobei das Copoly(ester)carbonat (I),
- 5 bis 20 mol-% der Einheit (B),
- 3 bis 12 mol-% der Einheit (C) und
- mindestens 65 mol-%,der Einheit (A) umfasst,
wobei die mol-%-Angaben sich auf die Gesamtstoffmenge der Einheiten (A), (B), (C), gegebenfalls (D) und gegebenenfalls von (A), (B), (C) und (D) verschiedenen Einheiten beziehen.

12. Thermoplastische Zusammensetzung nach einem der Ansprüche 1 bis 11, wobei das Copoly(ester)carbonat (I),
8 bis 12 mol-% der Einheit (B),
3,5 bis 8,0 mol-% der Einheit (C) und
mindestens 80 mol-% der Einheit (A) umfasst,
wobei die mol-%-Angaben sich auf die Gesamtstoffmenge der Einheiten (A), (B), (C), gegebenfalls (D) und gegebenenfalls von (A), (B), (C) und (D) verschiedenen Einheiten beziehen.

13. Thermoplastische Zusammensetzung nach einem der Ansprüche 1 bis 12, **dadurch gekennzeichnet, dass** das Copoly(ester)carbonat (I) weniger als 8 % Endgruppen der Formel (Y) enthält, 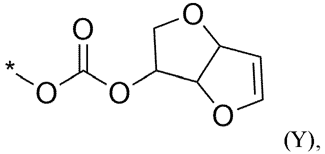 wobei die mit "*" gekennzeichnete Position der Formel (Y), die Position ist, mit der die Endgruppe der Formel (Y) in das Copoly(ester)carbonat einbindet und die % sich auf die Gesamtheit der Endgruppen bezieht.

14. Thermoplastische Formmasse erhalten aus der thermoplastischen Zusammensetzung nach einem der Ansprüche 1 bis 13.

15. Formkörper erhalten aus der thermoplastischen Formmasse nach an Anspruch 14.
